(19)

Europäisches Patentamt

European Patent Office

Office européen des brevets

(11) **EP 4 372 427 A1**

(12) **EUROPEAN PATENT APPLICATION**

(43) Date of publication:
**22.05.2024 Bulletin 2024/21**

(21) Application number: **23210152.7**

(22) Date of filing: **15.11.2023**

(51) International Patent Classification (IPC):
**G02B 1/113** (2015.01)　　**G02B 7/02** (2021.01)

(52) Cooperative Patent Classification (CPC):
**G02B 1/118; G02B 1/113; G02B 7/021;**
**G02B 7/025;** G02B 13/001

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022　TW 111144033**

(71) Applicant: **Largan Precision Co. Ltd.**
**Taichung City 408 (TW)**

(72) Inventors:
• **Liu, Ssu-Hsin**
　**408 Taichung City (TW)**

• **Su, Heng-Yi**
　**408 Taichung City (TW)**
• **Weng, Liang-Chieh**
　**408 Taichung City (TW)**
• **Tsai, Wen-Yu**
　**408 Taichung City (TW)**
• **Chou, Ming-Ta**
　**408 Taichung City (TW)**

(74) Representative: **Lippert Stachow Patentanwälte Rechtsanwälte**
**Partnerschaft mbB**
**Postfach 30 02 08**
**51412 Bergisch Gladbach (DE)**

(54) **IMAGING LENS ASSEMBLY, CAMERA MODULE AND ELECTRONIC DEVICE**

(57)　An imaging lens assembly includes a lens barrel, optical lens elements, an annular retaining element and a nano-microstructure. The optical lens elements include at least one optical lens element disposed in the lens barrel. The annular retaining element is physically contacted with the optical lens element, and the annular retaining element includes an object-side surface, an image-side surface, an outer diameter surface and a light-through hole. The outer diameter surface is connected to the object-side surface and the image-side surface. The light-through hole is formed by gradually tapering from the object-side surface and the image-side surface towards an optical axis. The nano-microstructure has a plurality of irregular ridged convexes. The nano-microstructure is located between a lens barrel area defined via the lens barrel and a lens element area defined via the optical lens element on a direction vertical to the optical axis.

Fig. 1A

EP 4 372 427 A1

**Description**

**BACKGROUND**

Technical Field

The present disclosure relates to an imaging lens assembly and a camera module. More particularly, the present disclosure relates to an imaging lens assembly and a camera module applicable to portable electronic devices.

Description of Related Art

In recent years, portable electronic devices have developed rapidly. For example, intelligent electronic devices and tablets have been filled in the lives of modern people, and camera modules and imaging lens assemblies mounted on portable electronic devices have also prospered. However, as technology advances, the quality requirements of the imaging lens assembly are becoming higher and higher. Therefore, an imaging lens assembly, which can reduce the reflecting light, needs to be developed.

**SUMMARY**

According to one aspect of the present disclosure, an imaging lens assembly has an optical axis, and includes a lens barrel, a plurality of optical lens elements, an annular retaining element, a nano-microstructure and an optical identification structure. The optical axis passes through the optical lens elements, and the optical lens elements include at least one optical lens element disposed in the lens barrel. The annular retaining element is physically contacted with the optical lens element, so that the optical lens element is fixed in the lens barrel, and the annular retaining element includes an object-side surface, an image-side surface, an outer diameter surface and a light-through hole. The object-side surface faces an object side of the imaging lens assembly. The image-side surface faces an image side of the imaging lens assembly, and the image-side surface is corresponding to the object-side surface. The outer diameter surface is connected to the object-side surface and the image-side surface. The light-through hole is formed by gradually tapering from the object-side surface and the image-side surface towards the optical axis, and the optical axis passes through a center of the light-through hole. The nano-microstructure is disposed on at least one of the object-side surface and the image-side surface, and the nano-microstructure has a plurality of irregular ridged convexes. The optical identification structure is disposed on at least one of the image-side surface and the outer diameter surface, the nano-microstructure is closer to the optical axis than the optical identification structure to the optical axis, and the optical identification structure includes at least one first optical identification surface. The lens barrel, the nano-microstructure, the first optical identification surface and the optical lens element are simultaneously observed from the image side towards the object side of the imaging lens assembly and along a direction parallel to the optical axis. The nano-microstructure is located between a lens barrel area defined via the lens barrel and a lens element area defined via the optical lens element on a direction vertical to the optical axis. A relative illuminance of the imaging lens assembly is RI, and the following condition is satisfied: 2% < RI < 35%.

According to the imaging lens assembly of the aforementioned aspect, wherein an average height of the nano-microstructure is between 90 nm and 350 nm.

According to the imaging lens assembly of the aforementioned aspect, wherein the average height of the nano-microstructure is between 125 nm and 300 nm.

According to the imaging lens assembly of the aforementioned aspect, wherein the average height of the nano-microstructure is between 195 nm and 255 nm.

According to the imaging lens assembly of the aforementioned aspect, wherein a projecting area of the first optical identification surface vertical to the optical axis is A, and the following condition is satisfied: $0.001 \text{ mm}^2 \leq A \leq 0.024 \text{ mm}^2$.

According to the imaging lens assembly of the aforementioned aspect, wherein a number of the first optical identification surface is at least two, an interval arc length between the first optical identification surfaces is D, and the following condition is satisfied: $0.05 \text{ mm} \leq D \leq 0.8 \text{ mm}$.

According to the imaging lens assembly of the aforementioned aspect, wherein the projecting area of each of the first optical identification surfaces vertical to the optical axis is A, the interval arc length between the first optical identification surfaces is D, and the following condition is satisfied: $0.1 \leq (\sqrt{A})/D \leq 0.9$.

According to the imaging lens assembly of the aforementioned aspect, wherein the imaging lens assembly further includes a glue material physically contacted with the annular retaining element, so that the annular retaining element is fixed in the lens barrel. The glue material and the first optical identification surface are simultaneously observed from the image side towards the object side of the imaging lens assembly and along the direction parallel to the optical axis.

According to the imaging lens assembly of the aforementioned aspect, wherein the annular retaining element further includes a connecting structure layer disposed between the nano-microstructure and a surface of the annular retaining element.

According to the imaging lens assembly of the aforementioned aspect, wherein the optical identification structure further includes at least one second optical identification surface, a number of the first optical identification surface is at least two, the second optical identification surface is disposed between the first optical identification surfaces, a difference in gloss between each of the first optical identification surfaces and the second optical identification surface on a measuring direction is $\Delta G$, an angle between the measuring direction and the optical identification structure is $\theta$, and the following conditions are satisfied: 50 degrees $\leq \theta \leq$ 90 degrees; and 15 GU $\leq \Delta G \leq$ 50 GU.

According to the imaging lens assembly of the aforementioned aspect, wherein a difference in roughness (Ra) between each of the first optical identification surfaces and the second optical identification surface is $\Delta R$, and the following condition is satisfied: 0.01 $\mu$m $\leq \Delta R \leq$ 3.5 $\mu$m.

According to the imaging lens assembly of the aforementioned aspect, wherein the nano-microstructure is further simultaneously disposed on the object-side surface and the image-side surface.

According to the imaging lens assembly of the aforementioned aspect, wherein the optical lens element has an optical effective portion, a maximum diameter of the optical effective portion is Do, and the following condition is satisfied: 7 mm < Do < 15 mm.

According to one aspect of the present disclosure, a camera module includes the imaging lens assembly of the aforementioned aspect.

According to one aspect of the present disclosure, an electronic device includes the camera module of the aforementioned aspect and an image sensor, wherein the image sensor is disposed on an imaging surface of the camera module.

According to one aspect of the present disclosure, an imaging lens assembly has an optical axis, and includes a lens barrel, a plurality of optical lens elements, an annular retaining element and a nano-microstructure. The optical axis passes through the optical lens elements, and the optical lens elements include at least one optical lens element. The optical lens element is disposed in the lens barrel. The annular retaining element is physically contacted with the optical lens element, so that the optical lens element is fixed in the lens barrel, and the annular retaining element includes an object-side surface, an image-side surface, an outer diameter surface and a light-through hole. The object-side surface faces an object side of the imaging lens assembly. The image-side surface faces an image side of the imaging lens assembly, and the image-side surface is corresponding to the object-side surface. The outer diameter surface is connected to the object-side surface and the image-side surface. The light-through hole is formed by gradually tapering from the object-side surface and the image-side surface towards the optical axis, and the optical axis passes through a center of the light-through hole. The nano-microstructure is disposed on one of the object-side surface and the image-side surface, and the nano-microstructure has a plurality of irregular ridged convexes. The lens barrel, the nano-microstructure and the optical lens element are simultaneously observed from the imaging lens assembly along a direction parallel to the optical axis. The nano-microstructure is located between a lens barrel area defined via the lens barrel and a lens element area defined via the optical lens element on a direction vertical to the optical axis.

According to the imaging lens assembly of the aforementioned aspect, wherein an average height of the nano-microstructure is between 90 nm and 350 nm.

According to the imaging lens assembly of the aforementioned aspect, wherein the average height of the nano-microstructure is between 125 nm and 300 nm.

According to the imaging lens assembly of the aforementioned aspect, wherein the average height of the nano-microstructure is between 195 nm and 255 nm.

According to the imaging lens assembly of the aforementioned aspect, wherein a relative illuminance of the imaging lens assembly is RI, and the following condition is satisfied: 2% < RI < 35%.

According to the imaging lens assembly of the aforementioned aspect, wherein the annular retaining element further includes a connecting structure layer disposed between the nano-microstructure and a surface of the annular retaining element.

According to one aspect of the present disclosure, an imaging lens assembly has an optical axis, and includes at least one lens barrel, a plurality of optical lens elements and a nano-microstructure. The optical axis passes through the optical lens elements, and the optical lens elements include at least one optical lens element. The optical lens element is disposed in the lens barrel. The nano-microstructure has a plurality of irregular ridged convexes. The lens barrel, the nano-microstructure and the optical lens element are simultaneously observed from the imaging lens assembly along a direction parallel to the optical axis. The nano-microstructure is located between a lens barrel area defined via the lens barrel and a lens element area defined via the optical lens element on a direction vertical to the optical axis.

According to the imaging lens assembly of the aforementioned aspect, wherein the imaging lens assembly further includes at least one annular retaining element, an optical identification structure and a glue material. The annular retaining element is physically contacted with the optical lens element, so that the optical lens element is fixed in the lens barrel, and includes an object-side surface, an image-side surface, an outer diameter surface and a light-through hole. The object-side surface faces an object side of the imaging lens assembly. The image-side surface faces an image side of the imaging lens assembly, and the image-side surface is corresponding to the object-side surface. The outer diameter surface is connected to the object-side surface and the image-side surface. The light-through hole is formed by gradually tapering from the object-side surface and the image-side surface towards the optical axis, and the optical axis passes through a center of the light-through hole. The optical identification structure is disposed on at least one of the image-side surface and the outer diameter surface, the nano-microstructure is closer to the optical axis than the optical identification structure to the optical axis. The glue material is physically contacted with the annular retaining element, so that the annular retaining element is fixed in the lens barrel.

According to the imaging lens assembly of the aforementioned aspect, wherein the nano-microstructure is disposed on at least one of the object-side surface and the image-side surface of the annular retaining element.

According to the imaging lens assembly of the aforementioned aspect, wherein the nano-microstructure is further simultaneously disposed on the image-side surface of the annular retaining element and the glue material.

According to the imaging lens assembly of the aforementioned aspect, wherein an average height of the nano-microstructure is between 90 nm and 350 nm.

According to the imaging lens assembly of the aforementioned aspect, wherein the average height of the nano-microstructure is between 125 nm and 300 nm.

According to the imaging lens assembly of the aforementioned aspect, wherein the average height of the nano-microstructure is between 195 nm and 255 nm.

According to the imaging lens assembly of the aforementioned aspect, wherein the optical identification structure includes at least one first optical identification surface.

According to the imaging lens assembly of the aforementioned aspect, wherein a projecting area of the first optical identification surface vertical to the optical axis is A, and the following condition is satisfied: $0.001 \text{ mm}^2 \leq A \leq 0.024 \text{ mm}^2$.

According to the imaging lens assembly of the aforementioned aspect, wherein a number of the first optical identification surface is at least two, an interval arc length between the first optical identification surfaces is D, and the following condition is satisfied: $0.05 \text{ mm} \leq D \leq 0.8 \text{ mm}$.

According to the imaging lens assembly of the aforementioned aspect, wherein the projecting area of each of the first optical identification surfaces vertical to the optical axis is A, the interval arc length between the first optical identification surfaces is D, and the following condition is satisfied: $0.1 \leq (\sqrt{A})/D \leq 0.9$.

According to the imaging lens assembly of the aforementioned aspect, wherein the optical identification structure further includes at least one second optical identification surface, a number of the first optical identification surface is at least two, the second optical identification surface is disposed between the first optical identification surfaces, a difference in gloss between each of the first optical identification surfaces and the second optical identification surface on a measuring direction is $\Delta G$, an angle between the measuring direction and the optical identification structure is $\theta$, and the following conditions are satisfied: 50 degrees $\leq \theta \leq$ 90 degrees; and $15 \text{ GU} \leq \Delta G \leq 50 \text{ GU}$.

According to the imaging lens assembly of the aforementioned aspect, wherein a difference in roughness (Ra) between each of the first optical identification surfaces and the second optical identification surface is $\Delta R$, and the following condition is satisfied: $0.01 \text{ }\mu\text{m} \leq \Delta R \leq 3.5 \text{ }\mu\text{m}$.

According to the imaging lens assembly of the aforementioned aspect, wherein a number of the lens barrel is two.

According to the imaging lens assembly of the aforementioned aspect, wherein the optical lens element is a glass lens element.

According to the imaging lens assembly of the aforementioned aspect, wherein a relative illuminance of the imaging lens assembly is RI, and the following condition is satisfied: 2% < RI < 35%.

According to the imaging lens assembly of the aforementioned aspect, wherein the annular retaining element further includes a connecting structure layer disposed between the nano-microstructure and a surface of the annular retaining element.

## BRIEF DESCRIPTION OF THE DRAWINGS

Fig. 1A is a three-dimensional view of an imaging lens assembly according to the 1st embodiment of the present disclosure.

Fig. 1B is a schematic view of a glue material assembled on the imaging lens assembly according to the 1st embodiment in Fig. 1A.

Fig. 1C is a schematic view of the imaging lens assembly according to the 1st embodiment in Fig. 1A.

Fig. 1D is a cross-sectional view of the imaging lens assembly along a 1D-1D line in Fig. 1C.

Fig. 1E is a schematic view of the annular retaining element, the nano-microstructure and the optical identification structure according to the 1st embodiment in Fig. 1A.

Fig. 1F is a cross-sectional view of the annular retaining element along a 1F-1F line in Fig. 1E.

Fig. 1G is a side view of the annular retaining element according to the 1st embodiment in Fig. 1E.

Fig. 1H is a partial enlarged view of the annular retaining element according to the 1st example of the 1st embodiment in Fig. 1F.

Fig. 1I is a partial enlarged view of the annular retaining element according to the 1st example of the 1st embodiment in Fig. 1H.

Fig. 1J is another partial enlarged view of the annular retaining element according to the 1st example of the 1st embodiment in Fig. 1H.

Fig. 1K is a measuring schematic view of the gloss according to the 1st example of the 1st embodiment in Fig. 1H.

Fig. 1L is a scanning electron microscope image of the nano-microstructure according to the 1st example of the 1st embodiment in Fig. 1H.

Fig. 1M is another scanning electron microscope image of the nano-microstructure according to the 1st example of the 1st embodiment in Fig. 1H.

Fig. 1N is a partial enlarged view of the annular retaining element according to the 2nd example of the 1st embodiment in Fig. 1F.

Fig. 1O is a partial enlarged view of the annular retaining element according to the 2nd example of the 1st embodiment in Fig. 1N.

Fig. 1P is another partial enlarged view of the annular retaining element according to the 2nd example of the 1st embodiment in Fig. 1N.

Fig. 1Q is another partial enlarged view of the annular retaining element according to the 2nd example of the 1st embodiment in Fig. 1N.

Fig. 1R is a scanning electron microscope image of a cross section of the annular retaining element according to the 2nd example of the 1st embodiment in Fig. 1N.

Fig. 1S is another scanning electron microscope image of the cross section of the annular retaining element according to the 2nd example of the 1st embodiment in Fig. 1N.

Fig. 1T is another scanning electron microscope image of the cross section of the annular retaining element according to the 2nd example of the 1st embodiment in Fig. 1N.

Fig. 2A is a three-dimensional view of an imaging lens assembly according to the 2nd embodiment of the present disclosure.

Fig. 2B is a schematic view of a glue material assembled on the imaging lens assembly according to the 2nd embodiment in Fig. 2A.

Fig. 2C is a schematic view of the imaging lens assembly according to the 2nd embodiment in Fig. 2A.

Fig. 2D is a cross-sectional view of the imaging lens assembly along a 2D-2D line in Fig. 2C.

Fig. 2E is a schematic view of the annular retaining element, the nano-microstructure and the optical identification structure according to the 2nd embodiment in Fig. 2A.

Fig. 2F is a cross-sectional view of the annular retaining element along a 2F-2F line in Fig. 2E.

Fig. 2G is a side view of the annular retaining element according to the 2nd embodiment in Fig. 2E.

Fig. 2H is a partial enlarged view of the annular retaining element according to the 1st example of the 2nd embodiment in Fig. 2F.

Fig. 2I is a partial enlarged view of the annular retaining element according to the 1st example of the 2nd embodiment in Fig. 2H.

Fig. 2J is another partial enlarged view of the annular retaining element according to the 1st example of the 2nd embodiment in Fig. 2H.

Fig. 2K is a partial enlarged view of the annular retaining element according to the 2nd example of the 2nd embodiment in Fig. 2F.

Fig. 2L is a partial enlarged view of the annular retaining element according to the 2nd example of the 2nd embodiment in Fig. 2K.

Fig. 2M is another partial enlarged view of the annular retaining element according to the 2nd example of the 2nd embodiment in Fig. 2K.

Fig. 2N is another partial enlarged view of the annular retaining element according to the 2nd example of the 2nd embodiment in Fig. 2K.

Fig. 2O is a partial enlarged view of the annular retaining element according to the 3rd example of the 2nd embodiment in Fig. 2F.

Fig. 2P is a partial enlarged view of the annular retaining element according to the 3rd example of the 2nd embodiment in Fig. 2O.

Fig. 2Q is another partial enlarged view of the annular retaining element according to the 3rd example of the 2nd embodiment in Fig. 2O.

Fig. 2R is another partial enlarged view of the annular retaining element according to the 3rd example of the 2nd embodiment in Fig. 2O.

Fig. 3A is a three-dimensional view of an imaging lens assembly according to the 3rd embodiment of the present disclosure.

Fig. 3B is a schematic view of a glue material assembled on the imaging lens assembly according to the 3rd embodiment in Fig. 3A.

Fig. 3C is a schematic view of the imaging lens assembly according to the 3rd embodiment in Fig. 3A.

Fig. 3D is a cross-sectional view of the imaging lens assembly along a 3D-3D line in Fig. 3C.

Fig. 3E is a schematic view of the annular retaining element, the nano-microstructure and the optical identification structure according to the 3rd embodiment in Fig. 3A.

Fig. 3F is a cross-sectional view of the annular retaining element along a 3F-3F line in Fig. 3E.

Fig. 3G is a side view of the annular retaining element according to the 3rd embodiment in Fig. 3E.

Fig. 3H is a partial enlarged view of the annular retaining element according to the 3rd embodiment in Fig. 3F.

Fig. 3I is a partial enlarged view of the annular retaining element according to the 3rd embodiment in Fig. 3H.

Fig. 3J is another partial enlarged view of the annular retaining element according to the 3rd embodiment in Fig. 3H.

Fig. 4A is a three-dimensional view of an imaging lens assembly according to the 4th embodiment of the present disclosure.

Fig. 4B is a schematic view of a glue material assembled on the imaging lens assembly according to the 4th embodiment in Fig. 4A.

Fig. 4C is a schematic view of the imaging lens assembly according to the 4th embodiment in Fig. 4A.

Fig. 4D is a cross-sectional view of the imaging lens assembly along a 4D-4D line in Fig. 4C.

Fig. 4E is a schematic view of the annular retaining element, the nano-microstructure and the optical identification structure according to the 4th embodiment in Fig. 4A.

Fig. 4F is a cross-sectional view of the annular retaining element along a 4F-4F line in Fig. 4E.

Fig. 4G is a side view of the annular retaining element according to the 4th embodiment in Fig. 4E.

Fig. 4H is a partial enlarged view of the annular retaining element according to the 4th embodiment in Fig. 4F.

Fig. 4I is a partial enlarged view of the annular retaining element according to the 4th embodiment in Fig. 4H.

Fig. 4J is another partial enlarged view of the annular retaining element according to the 4th embodiment in Fig. 4H.

Fig. 5A is a schematic view of an imaging lens assembly according to the 5th embodiment of the present disclosure.

Fig. 5B is a cross-sectional view of the imaging lens assembly along a 5B-5B line in Fig. 5A.

Fig. 5C is a schematic view of the annular retaining element and the nano-microstructure according to the 5th embodiment in Fig. 5A.

Fig. 5D is a cross-sectional view of the annular retaining element along a 5D-5D line in Fig. 5C.

Fig. 5E is a side view of the annular retaining element according to the 5th embodiment in Fig. 5C.

Fig. 5F is a partial enlarged view of the annular retaining element according to the 1st example of the 5th embodiment in Fig. 5D.

Fig. 5G is a partial enlarged view of the annular retaining element according to the 1st example of the 5th embodiment in Fig. 5F.

Fig. 5H is another partial enlarged view of the annular retaining element according to the 1st example of the 5th embodiment in Fig. 5F.

Fig. 5I is a partial enlarged view of the annular retaining element according to the 2nd example of the 5th embodiment in Fig. 5D.

Fig. 5J is a partial enlarged view of the annular retaining element according to the 2nd example of the 5th embodiment in Fig. 5I.

Fig. 5K is another partial enlarged view of the annular retaining element according to the 2nd example of the 5th embodiment in Fig. 5I.

Fig. 5L is another partial enlarged view of the annular retaining element according to the 2nd example of the 5th embodiment in Fig. 5I.

Fig. 6A is a schematic view of an imaging lens assembly according to the 6th embodiment of the present disclosure.

Fig. 6B is a cross-sectional view of the imaging lens assembly along a 6B-6B line in Fig. 6A.

Fig. 6C is a schematic view of the imaging lens assembly according to the 6th embodiment in Fig. 6A.

Fig. 6D is a side view of the imaging lens assembly according to the 6th embodiment in Fig. 6A.

Fig. 6E is a schematic view of the annular retaining element and the nano-microstructure according to the 6th embodiment in Fig. 6A.

Fig. 6F is a cross-sectional view of the annular retaining element along a 6F-6F line in Fig. 6E.

Fig. 6G is a side view of the annular retaining element according to the 6th embodiment in Fig. 6E.

Fig. 6H is a partial enlarged view of the annular retaining element according to the 1st example of the 6th embodiment in Fig. 6F.

Fig. 6I is a partial enlarged view of the annular retaining element according to the 1st example of the 6th embodiment in Fig. 6H.

Fig. 6J is another partial enlarged view of the annular retaining element according to the 1st example of the 6th embodiment in Fig. 6H.

Fig. 6K is a partial enlarged view of the annular retaining element according to the 2nd example of the 6th embodiment in Fig. 6F.

Fig. 6L is a partial enlarged view of the annular retaining element according to the 2nd example of the 6th embodiment in Fig. 6K.

Fig. 6M is another partial enlarged view of the annular retaining element according to the 2nd example of the 6th embodiment in Fig. 6K.

Fig. 6N is another partial enlarged view of the annular retaining element according to the 2nd example of the 6th embodiment in Fig. 6K.

Fig. 7A is a three-dimensional view of an imaging lens assembly according to the 7th embodiment of the present disclosure.

Fig. 7B is a schematic view of a glue material assembled on the imaging lens assembly according to the 7th embodiment in Fig. 7A.

Fig. 7C is an object-side schematic view of the imaging lens assembly according to the 7th embodiment in Fig. 7A.

Fig. 7D is another three-dimensional view of the imaging lens assembly according to the 7th embodiment in Fig. 7A.

Fig. 7E is a schematic view of a glue material assembled on the imaging lens assembly according to the 7th embodiment in Fig. 7D.

Fig. 7F is a schematic view of the imaging lens assembly according to the 7th embodiment in Fig. 7A.

Fig. 7G is a cross-sectional view of the imaging lens assembly along a 7G-7G line in Fig. 7F.

Fig. 7H is a side view of the imaging lens assembly according to the 7th embodiment in Fig. 7A.

Fig. 7I is a schematic view of the annular retaining element, the nano-microstructure and the glue material according to the 7th embodiment in Fig. 7A.

Fig. 7J is a cross-sectional view of the annular retaining element along a 7J-7J line in Fig. 7I.

Fig. 7K is a side view of the annular retaining element according to the 7th embodiment in Fig. 7I.

Fig. 7L is a partial enlarged view of the annular retaining element according to the 1st example of the 7th embodiment in Fig. 7J.

Fig. 7M is a partial enlarged view of the annular retaining element according to the 1st example of the 7th embodiment in Fig. 7L.

Fig. 7N is another partial enlarged view of the annular retaining element according to the 1st example of the 7th embodiment in Fig. 7L.

Fig. 7O is another partial enlarged view of the annular retaining element according to the 1st example of the 7th embodiment in Fig. 7L.

Fig. 7P is a schematic view of the annular retaining element, the nano-microstructure and the optical identification structure according to the 7th embodiment in Fig. 7A.

Fig. 7Q is a cross-sectional view of the annular retaining element along a 7Q-7Q line in Fig. 7P.

Fig. 7R is a side view of the annular retaining element according to the 7th embodiment in Fig. 7P.

Fig. 7S is a partial enlarged view of the annular retaining element according to the 2nd example of the 7th embodiment in Fig. 7Q.

Fig. 7T is a partial enlarged view of the annular retaining element according to the 2nd example of the 7th embodiment in Fig. 7S.

Fig. 7U is another partial enlarged view of the annular retaining element according to the 2nd example of the 7th embodiment in Fig. 7S.

Fig. 7V is a partial enlarged view of the annular retaining element according to the 3rd example of the 7th embodiment in Fig. 7Q.

Fig. 7W is a partial enlarged view of the annular retaining element according to the 3rd example of the 7th embodiment in Fig. 7V.

Fig. 7X is another partial enlarged view of the annular retaining element according to the 3rd example of the 7th embodiment in Fig. 7V.

Fig. 7Y is another partial enlarged view of the annular retaining element according to the 3rd example of the 7th embodiment in Fig. 7V.

Fig. 8A is a schematic view of an electronic device according to the 8th embodiment of the present disclosure.

Fig. 8B is another schematic view of the electronic device according to the 8th embodiment in Fig. 8A.

Fig. 8C is a schematic view of an image captured via the electronic device according to the 8th embodiment in Fig. 8A.

Fig. 8D is another schematic view of an image captured via the electronic device according to the 8th embodiment in Fig. 8A.

Fig. 8E is another schematic view of an image captured via the electronic device according to the 8th embodiment in Fig. 8A.

Fig. 9 is a schematic view of an electronic device according to the 9th embodiment of the present disclosure.

## DETAILED DESCRIPTION

The present disclosure provides an imaging lens assembly, which has an optical axis, and includes at least one lens barrel, a plurality of optical lens elements and a nano-microstructure, wherein the optical axis passes through the optical lens elements, and the nano-microstructure has a plurality of irregular ridged convexes. The optical lens elements include at least one optical lens element, wherein the optical lens element is disposed in the lens barrel. The lens barrel, the nano-microstructure and the optical lens element are simultaneously observed from the imaging lens assembly along a direction parallel to the optical axis. The nano-microstructure is located between a lens barrel area defined via the lens barrel and a lens element area defined via the optical lens element on a direction vertical to the optical axis, wherein the lens barrel area is a projecting area of the lens barrel on a plane vertical to the optical axis, and the lens element area is a projecting area of the optical lens element on a plane vertical to the optical axis. In particular, when the irregular ridged convexes of the nano-microstructure is observed from the cross section, the irregular ridged convexes with the shape of wide bottom and narrow top like a mountain ridge so as to gradually decrease the equivalent refractive index from the bottom to the top of the nano-microstructure for damaging and reducing the reflecting light.

The imaging lens assembly can further include at least one annular retaining element, wherein the annular retaining element is physically contacted with the optical lens element, so that the optical lens element is fixed in the lens barrel, and the annular retaining element includes an object-side surface, an image-side surface, an outer diameter surface and a light-through hole. The object-side surface faces an object side of the imaging lens assembly. The image-side surface faces an image side of the imaging lens assembly, and the image-side surface is corresponding to the object-side surface. The outer diameter surface is connected to the object-side surface and the image-side surface. The light-through hole is formed by gradually tapering from the object-side surface and the image-side surface towards the optical axis, and the optical axis passes through a center of the light-through hole. The nano-microstructure is disposed on at least one of the object-side surface and the image-side surface. Therefore, the non-imaging light reflected via the annular retaining element can be effectively weakened, especially on the location nearby the light-through hole of the annular retaining element, so that the flare under the specific angle can be eliminated and the image quality can be enhanced. Moreover, the annular retaining element can be a retainer formed by the plastic injection molding process, or the annular retaining element can be a black ink spraying layer formed via the quick drying ink based on the epoxy resin, but the present disclosure is not limited thereto.

The imaging lens assembly can further include an optical identification structure disposed on at least one of the image-side surface and the outer diameter surface, wherein the nano-microstructure is closer to the optical axis than the optical identification structure to the optical axis, the optical identification structure can include at least one first optical identification surface and at least one second optical identification surface, a number of the first optical identification surface can be at least two, and the second optical identification surface is disposed between the first optical identification surfaces. Further, the lens barrel, the nano-microstructure, the first optical identification surfaces and the optical lens element are simultaneously observed from the image side towards the object side of the imaging lens assembly and along the direction parallel to the optical axis.

When a relative illuminance of the imaging lens assembly is RI, the following condition can satisfied: 2% < RI < 35%.

The nano-microstructure can be further simultaneously disposed on the object-side surface and the image-side surface. By extending the disposing range of the nano-microstructure, the non-imaging light reflected via the aforementioned disposing range can be weakened so as to make the image clear.

The imaging lens assembly can further include a glue material, wherein the glue material is physically contacted with the annular retaining element, so that the annular retaining element is fixed in the lens barrel. Moreover, the glue material and the first optical identification surfaces are simultaneously observed from the image side towards the object side of the imaging lens assembly and along the direction parallel to the optical axis. The distributing condition of the glue material can be further obtained by observing the range of the first optical identification surfaces covered via the glue material. In particular, the first optical identification surfaces can be observed along the direction parallel to the optical axis during the process of assembling the glue material. Once a dispensing space is filled via the glue material, and the glue material entirely covers the first optical identification surfaces, so that the first optical identification surfaces cannot be directly observed, but the present disclosure is not limited thereto.

The nano-microstructure can be further simultaneously disposed on the image-side surface of the annular retaining element and the glue material. The non-imaging light reflected by the aforementioned disposing range can be weakened by extending the disposing range of the nano-microstructure so as to make the image clear.

The annular retaining element can further include a connecting structure layer, wherein the connecting structure layer is disposed between the nano-microstructure and a surface of the annular retaining element, the nano-microstructure can be disposed on a topmost of the connecting structure layer, the connecting structure layer can be composed of a plurality of films, which are alternately stacked, with different refractive indexes, and the connecting structure layer can include at least one silicon dioxide ($SiO_2$). Hence, the annular retaining element can be tightly connected to the nano-microstructure via the connecting structure layer so as to obtain the higher structural stability. Moreover, a surface of the nano-microstructure has a plurality of pore structures, and a portion of the connecting structure layer is exposed via the pore structures of the nano-microstructure, wherein the portion of the connecting structure layer, which is exposed, is contacted with the air.

A number of the lens barrel can be two, wherein the lens barrels can be embedded and assembled to each other, but the present disclosure is not limited thereto. The different assembling directions of the optical lens elements can be obtained by the design of the two lens barrels embedded to each other so as to promote the margin of the mechanical design.

The optical lens element can be a glass lens element, so that the more stable optical property in respect of the temperature effect can be obtained, wherein the glass lens element can be made by the grinding process or the molding process, but the present disclosure is not limited thereto.

An average height of the nano-microstructure can be between 90 nm and 350 nm. By the aforementioned range of the value, the better anti-reflecting effect can be taken into consideration without affecting the image quality. Further, the average height of the nano-microstructure can be between 125 nm and 300 nm. Further, the average height of the nano-microstructure can be 195 nm and 255 nm. When the average height of the nano-microstructure is close to 200 nm, the better anti-reflecting effect of the incident light in respect of the specific condition can be obtained, but the present disclosure is not limited thereto. In detail, the nano-microstructure can include an aluminum oxide ($Al_2O_3$).

When a projecting area of each of the first optical identification surfaces vertical to the optical axis is A, the following condition can be satisfied: $0.001 \text{ mm}^2 \le A \le 0.024 \text{ mm}^2$. By the aforementioned range of the value, the identification efficiency of the optical identification structure can be enhanced.

When an interval arc length between the first optical identification surfaces is D, the following condition can be satisfied: $0.05 \text{ mm} \le D \le 0.8 \text{ mm}$. By the aforementioned range of the value, the identification efficiency of the optical identification structure can be enhanced.

When the projecting area of each of the first optical identification surfaces vertical to the optical axis is A, and the interval arc length between the first optical identification surfaces is D, the following condition can be satisfied: $0.1 \le (\sqrt{A})/D \le 0.9$. By the aforementioned range of the value, the distributing status and the flow direction of the glue material can be observed while collecting the information of the filling amount of the glue material. In particular, $(\sqrt{A})/D$ can be defined as an identification factor.

When a difference in gloss between each of the first optical identification surfaces and the second optical identification surface on a measuring direction is $\Delta G$, and an angle between the measuring direction and the optical identification structure is $\theta$, the following conditions can be satisfied: 50 degrees $\le \theta \le$ 90 degrees; and 15 GU $\le \Delta G \le$ 50 GU. In particular, the angle between the measuring direction and the optical identification structure can be 60 degrees, and the gloss corresponding to the measuring range is between 0 GU and 1000 GU; or, the angle between the measuring direction and the optical identification structure can be 85 degrees, and the gloss corresponding to the measuring range is between 0 GU and 160 GU. For example, the reflectance of each of the first optical identification surfaces and the reflectance of the second optical identification surface measured on the measuring direction of 60 degrees are 0.5% and 3%, respectively. That is, the gloss of each of the first optical identification surfaces and the gloss of the second optical identification surface are 5 GU and 30 GU, respectively, and a difference between the gloss of each of the first optical identification surfaces and the gloss of the second optical identification surface is 25 GU. In other words, the difference in gloss between each of the first optical identification surfaces and the second optical identification surface can be recognized via the optical identification system.

When a difference in roughness (Ra) between each of the first optical identification surfaces and the second optical identification surface is $\Delta R$, the following condition can be satisfied: $0.01 \text{ } \mu m \le \Delta R \le 3.5 \text{ } \mu m$. The different roughnesses can be obtained via each of the first optical identification surfaces and the second optical identification surface, so that the different glosses of each of the first optical identification surfaces and the second optical identification surface can be obtained.

When the optical lens element has an optical effective portion, and a maximum diameter of the optical effective portion is Do, the following condition can be satisfied: 7 mm < Do < 15 mm.

Each of the aforementioned features of the imaging lens assembly can be utilized in various combinations for achieving the corresponding effects.

The present disclosure provides a camera module, which includes the aforementioned imaging lens assembly.

The present disclosure provides an electronic device, which includes the aforementioned camera module and an image sensor, wherein the image sensor is disposed on an imaging surface of the camera module.

According to the aforementioned embodiment, specific embodiments and examples are provided, and illustrated via figures.

<1st embodiment>

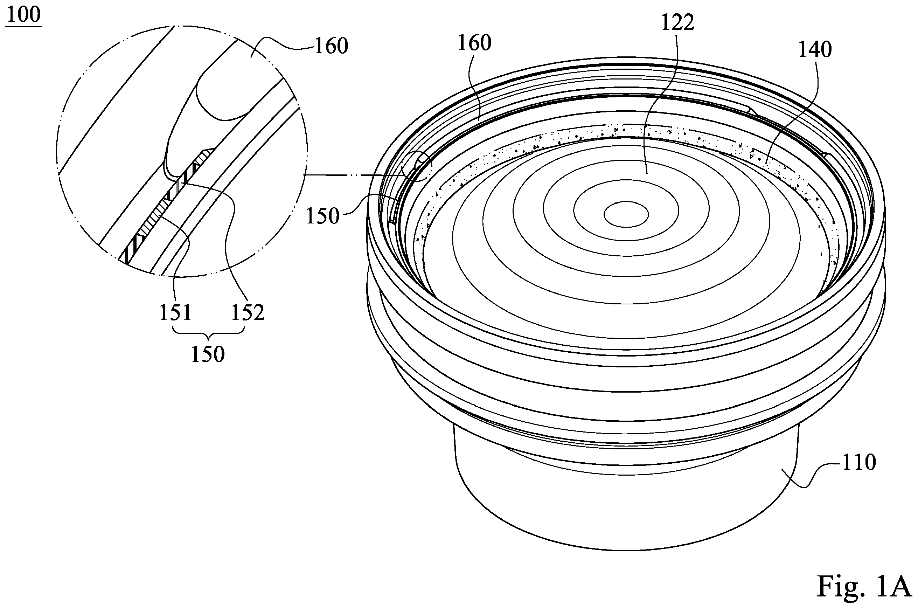

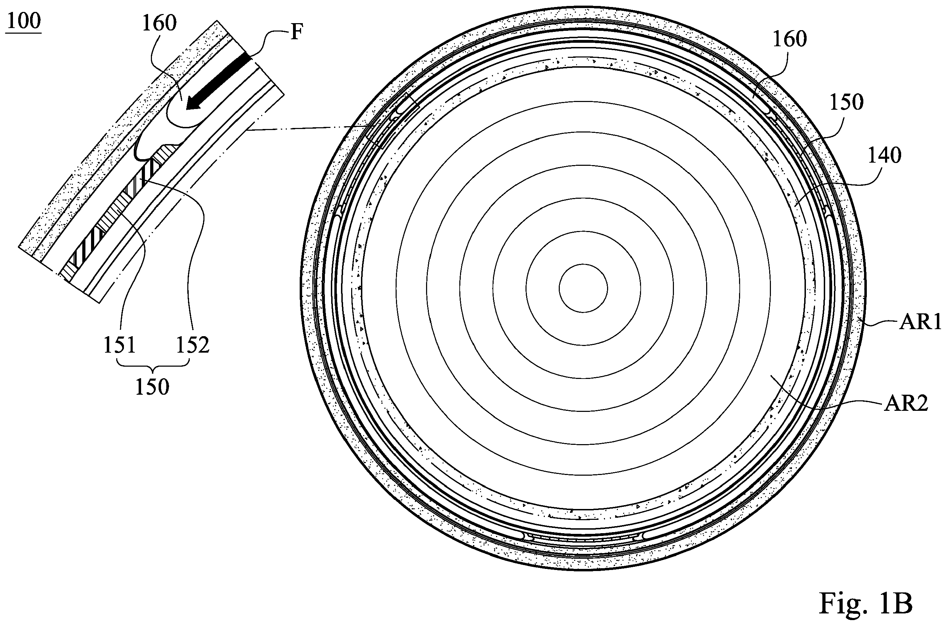

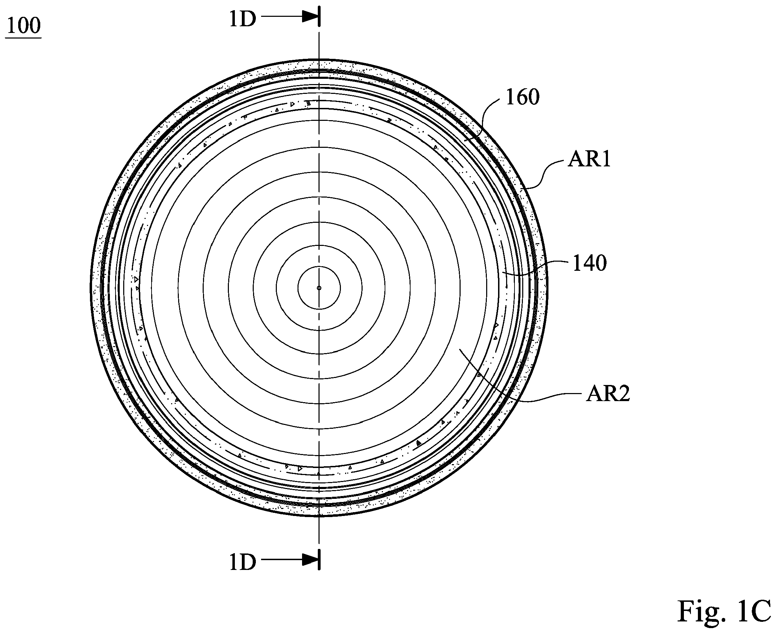

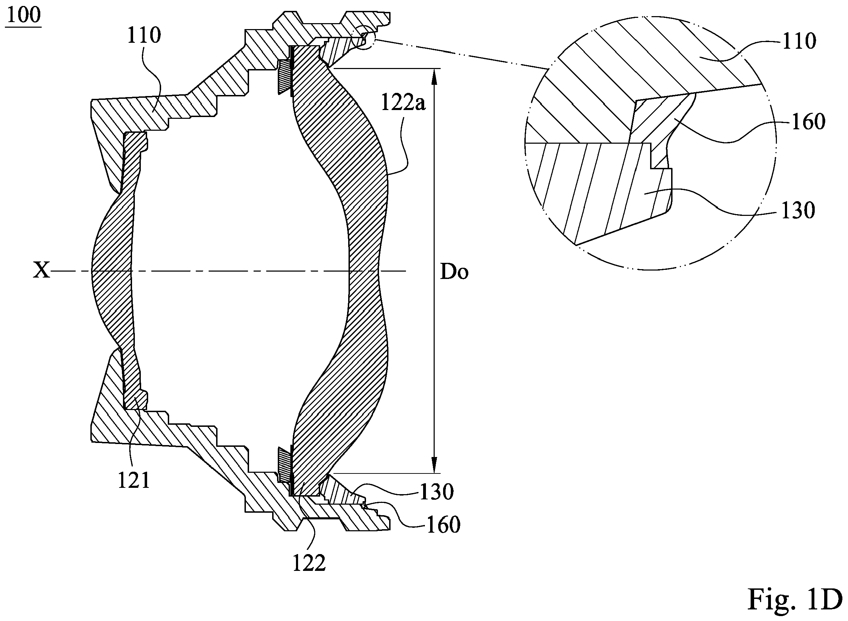

Fig. 1A is a three-dimensional view of an imaging lens assembly 100 according to the 1st embodiment of the present disclosure. Fig. 1B is a schematic view of a glue material 160 assembled on the imaging lens assembly 100 according to the 1st embodiment in Fig. 1A. Fig. 1C is a schematic view of the imaging lens assembly 100 according to the 1st embodiment in Fig. 1A. Fig. 1D is a cross-sectional view of the imaging lens assembly 100 along a 1D-1D line in Fig. 1C. In Figs. 1A to 1D, the imaging lens assembly 100 has an optical axis X, and includes a lens barrel 110, a plurality of optical lens elements 121, 122, an annular retaining element 130, a nano-microstructure 140, an optical identification structure 150 and the glue material 160, wherein the lens barrel 110, the nano-microstructure 140 and the optical lens element 122 are simultaneously observed from the image side towards the object side of the imaging lens assembly 100 and along a direction parallel to the optical axis X. The nano-microstructure 140 is located between a lens barrel area AR1 defined via the lens barrel 110 and a lens element area AR2 defined via the optical lens element 122 on a direction vertical to the optical axis X. In particular, the lens barrel area AR1 is a projecting area of the lens barrel 110 on a plane vertical to the optical axis X, and the lens element area AR2 is a projecting area of the optical lens element 122 on a plane vertical to the optical axis X, wherein the dot pattern in Figs. 1B and 1C is configured to indicate the lens barrel area AR1.

In Figs. 1B and 1D, the optical axis X passes through the optical lens elements 121, 122, and the optical lens elements 121, 122 are disposed in the lens barrel 110. The annular retaining element 130 is physically contacted with the optical lens element 122, so that the optical lens element 122 is fixed in the lens barrel 110. The nano-microstructure 140 is closer to the optical axis X than the optical identification structure 150 to the optical axis X. The glue material 160 is physically contacted with the annular retaining element 130, so that the annular retaining element 130 is fixed in the lens barrel 110.

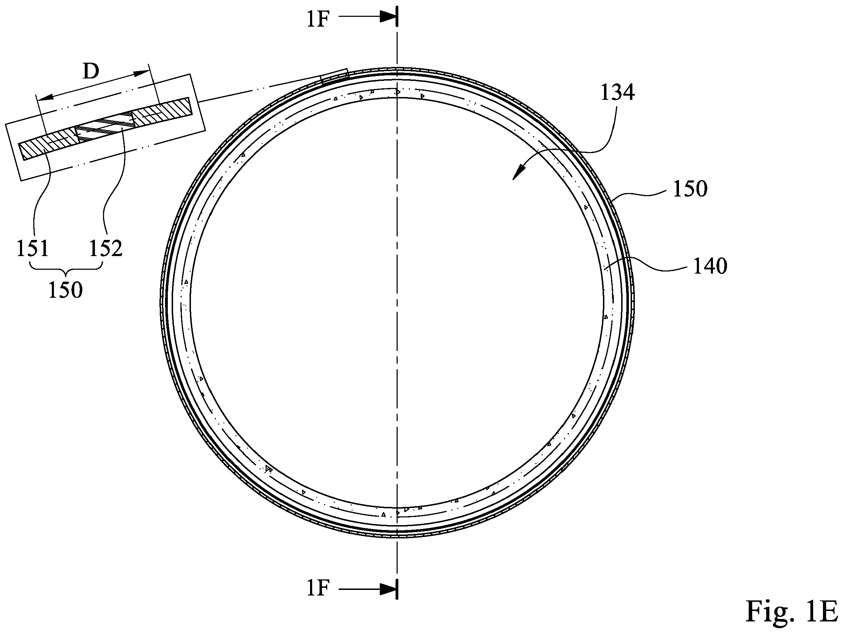

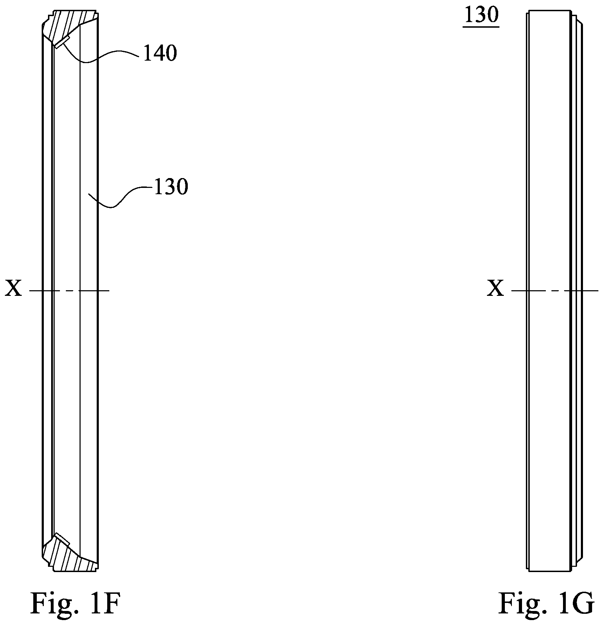

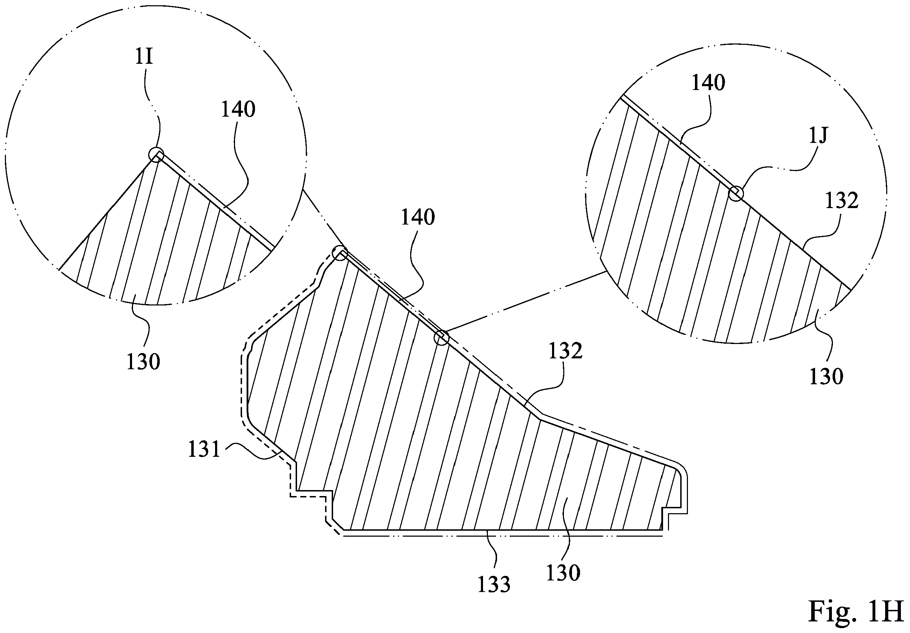

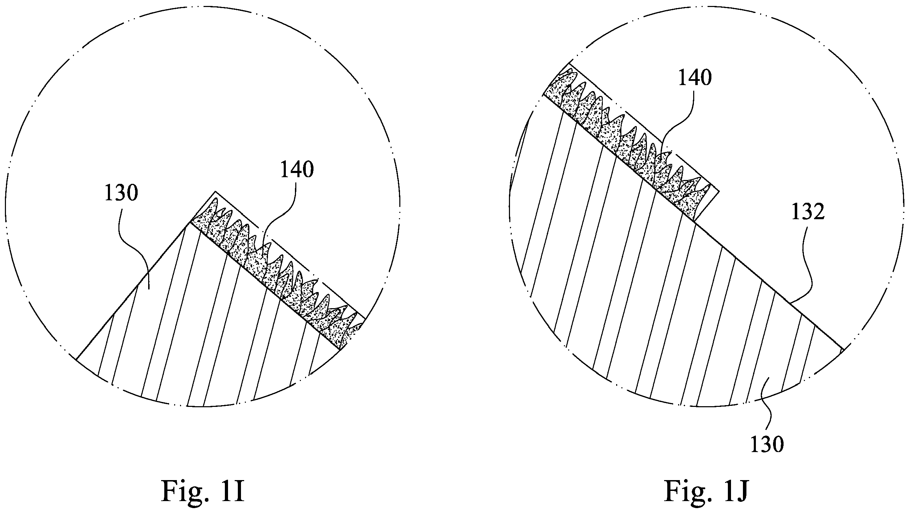

Fig. 1E is a schematic view of the annular retaining element 130, the nano-microstructure 140 and the optical identification structure 150 according to the 1st embodiment in Fig. 1A. Fig. 1F is a cross-sectional view of the annular retaining element 130 along a 1F-1F line in Fig. 1E. Fig. 1G is a side view of the annular retaining element 130 according to the 1st embodiment in Fig. 1E. Fig. 1H is a partial enlarged view of the annular retaining element 130 according to the 1st example of the 1st embodiment in Fig. 1F. Fig. 1I is a partial enlarged view of the annular retaining element 130 according to the 1st example of the 1st embodiment in Fig. 1H. Fig. 1J is another partial enlarged view of the annular retaining element 130 according to the 1st example of the 1st embodiment in Fig. 1H. In Figs. 1E to 1J, the annular retaining element 130 includes an object-side surface 131, an image-side surface 132, an outer diameter surface 133 and a light-through hole 134, wherein the object-side surface 131 faces an object side of the imaging lens assembly 100, the image-side surface 132 faces an image side of the imaging lens assembly 100, the image-side surface 132 is corresponding to the object-side surface 131, the outer diameter surface 133 is connected to the object-side surface 131 and the image-side surface 132, the light-through hole 134 is formed by gradually tapering from the object-side surface 131 and the image-side surface 132 towards the optical axis X, and the optical axis X passes through a center of the light-through hole 134. It should be mentioned that the dotted line, the one-dot chain line and the two-dot chain line in Fig. 1H are configured to indicate the range of the object-side surface 131, the range of the image-side surface 132 and the range of the outer diameter surface 133, respectively.

Moreover, the annular retaining element 130 can be a retainer formed by the plastic injection molding process, but the present disclosure is not limited thereto.

In Figs. 1A, 1B and 1E, the optical identification structure 150 is disposed on the image-side surface 132, and includes at least two first optical identification surfaces 151 and at least one second optical identification surface 152, wherein the second optical identification surface 152 is disposed between the first optical identification surfaces 151, and the glue material 160 and the first optical identification surfaces 151 are simultaneously observed from the image side towards the object side of the imaging lens assembly 100 and along the direction parallel to the optical axis X. In detail, the distributing condition of the glue material 160 can be further obtained by observing the range of the first optical identification surfaces 151 covered via the glue material 160. In Fig. 1B, the first optical identification surfaces 151 can be observed along the direction parallel to the optical axis X during the process of assembling the glue material 160, such as a flowing direction F of the glue material 160. Once a dispensing space is filled via the glue material 160, and the glue material 160 entirely covers the first optical identification surfaces 151, so that the first optical identification surfaces 151 cannot be directly observed, but the present disclosure is not limited thereto.

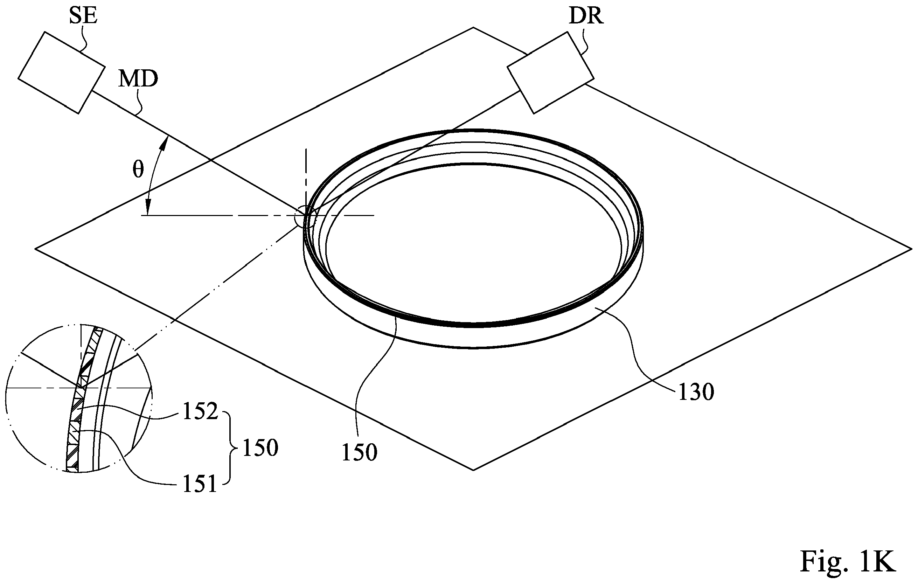

Fig. 1K is a measuring schematic view of the gloss according to the 1st example of the 1st embodiment in Fig. 1H. In Fig. 1K, a light emits along a measuring direction MD via a source SE towards the optical identification structure 150, and then the light reflected via the optical identification structure 150 is received via a detector DR, wherein when a difference in gloss between each of the first optical identification surfaces 151 and the second optical identification surface 152 on the measuring direction MD is ΔG, and an angle between the measuring direction MD and the optical identification structure 150 is θ, the following conditions are satisfied: 50 degrees ≤ θ ≤ 90 degrees; and 15 GU ≤ ΔG ≤ 50 GU. In particular, the angle between the measuring direction MD and the optical identification structure 150 can be 60 degrees, and the gloss corresponding to the measuring range is between 0 GU and 1000 GU; or, the angle between the measuring direction MD and the optical identification structure 150 can be 85 degrees, and the gloss corresponding to the measuring range is between 0 GU and 160 GU. For example, the reflectance of each of the first optical identification surfaces 151 and the reflectance of the second optical identification surface 152 measured on the measuring direction MD of 60 degrees are 0.5% and 3%, respectively. That is, the gloss of each of the first optical identification surfaces 151 and the gloss of the second optical identification surface 152 are 5 GU and 30 GU, respectively, and a difference between the gloss of each of the first optical identification surfaces 151 and the gloss of the second optical identification surface 152 is 25 GU. In other words, the difference in gloss between each of the first optical identification surfaces 151 and the second optical identification surface 152 can be recognized via the optical identification system.

When a difference in roughness (Ra) between each of the first optical identification surfaces 151 and the second optical identification surface 152 is ΔR, the following condition is satisfied: 0.01 μm ≤ ΔR ≤ 3.5 μm. The different roughnesses can be obtained via each of the first optical identification surfaces 151 and the second optical identification surface 152, so that the different glosses of each of the first optical identification surfaces 151 and the second optical identification surface 152 can be obtained. According to the 1st embodiment, a number of the first optical identification surfaces 151 is ninety, and a number of the second optical identification surface 152 is ninety, but the present disclosure is not limited thereto.

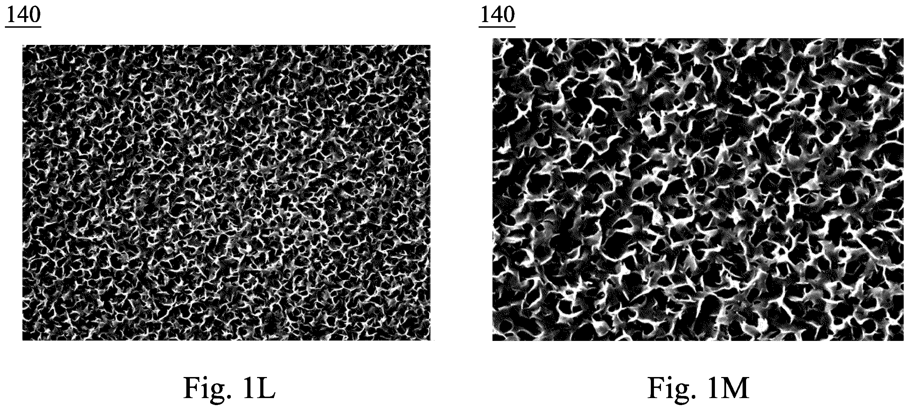

Fig. 1L is a scanning electron microscope image of the nano-microstructure 140 according to the 1st example of the 1st embodiment in Fig. 1H. Fig. 1M is another scanning electron microscope image of the nano-microstructure 140 according to the 1st example of the 1st embodiment in Fig. 1H. In Figs. 1B, 1C, 1E, 1H to 1J, 1L and 1M, the nano-microstructure 140 is disposed on the image-side surface 132, and the nano-microstructure 140 has a plurality of irregular ridged convexes, wherein the nano-microstructure 140 can include an aluminum oxide. Therefore, the non-imaging light reflected via the annular retaining element 130 can be effectively weakened, especially on the location nearby the light-through hole 134 of the annular retaining element 130, so that the flare under the specific angle can be eliminated and the image quality can be enhanced.

In Figs. 1L and 1M, the distributing condition of the nano-microstructure 140 on the annular retaining element 130 is vertically observed via the electron microscope, and a surface of the nano-microstructure 140 has a plurality of pore structures.

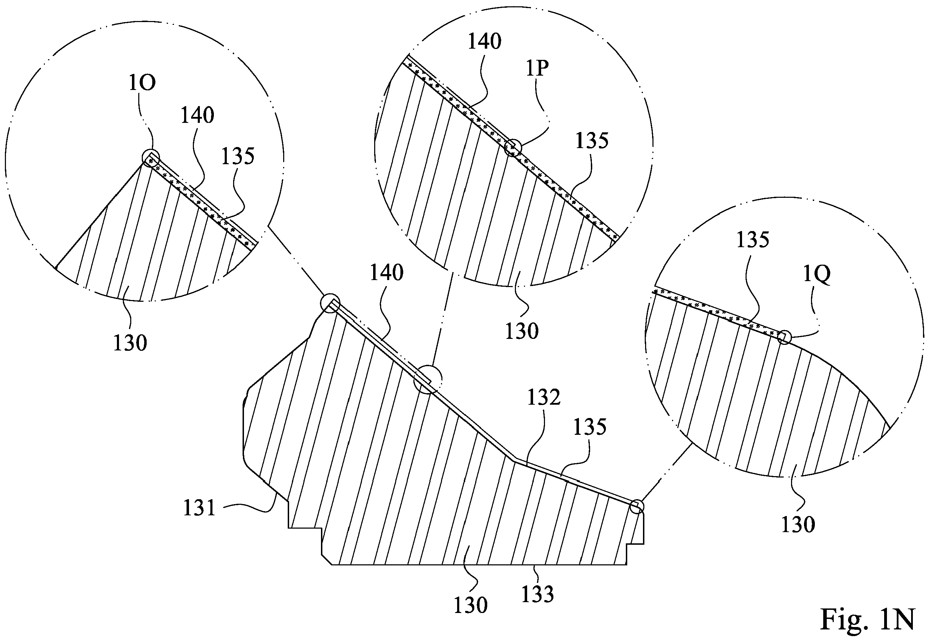

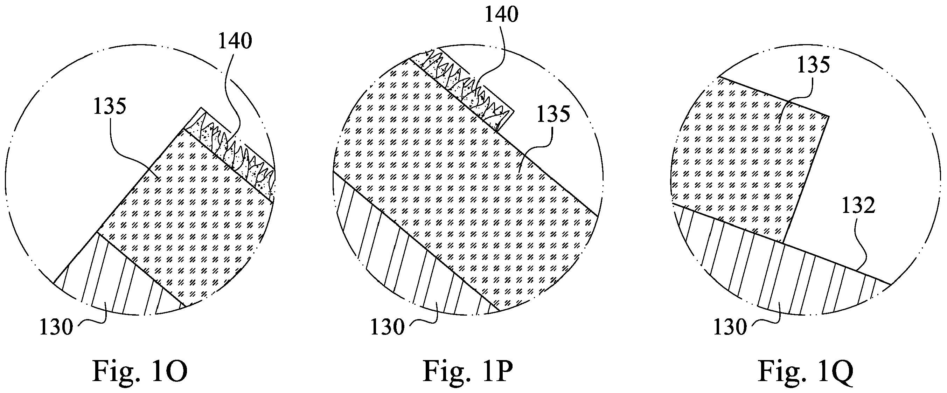

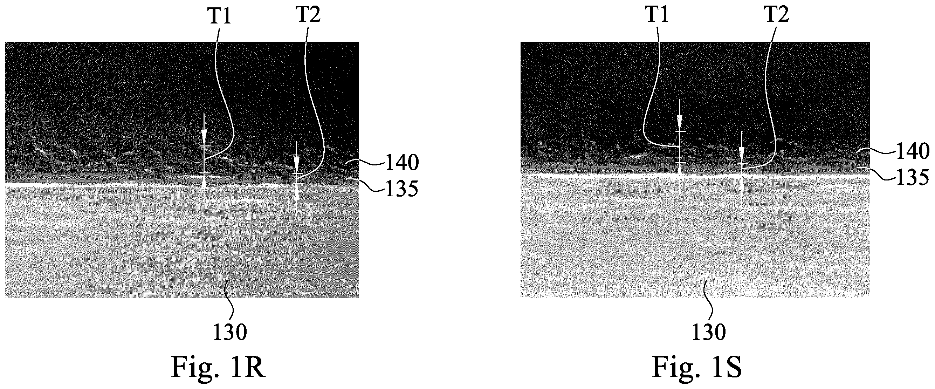

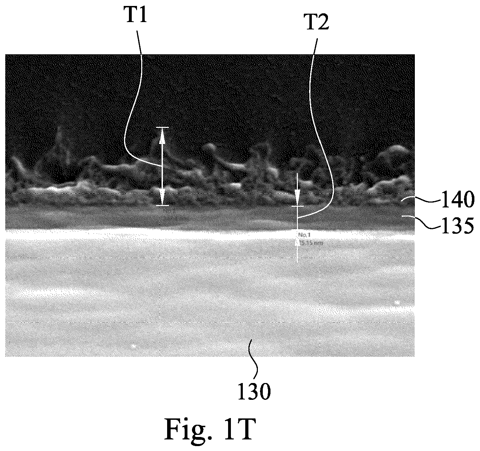

Fig. 1N is a partial enlarged view of the annular retaining element 130 according to the 2nd example of the 1st embodiment in Fig. 1F. Fig. 1O is a partial enlarged view of the annular retaining element 130 according to the 2nd example of the 1st embodiment in Fig. 1N. Fig. 1P is another partial enlarged view of the annular retaining element 130 according to the 2nd example of the 1st embodiment in Fig. 1N. Fig. 1Q is another partial enlarged view of the annular retaining element 130 according to the 2nd example of the 1st embodiment in Fig. 1N. Fig. 1R is a scanning electron microscope image of a cross section of the annular retaining element 130 according to the 2nd example of the 1st embodiment in Fig. 1N. Fig. 1S is another scanning electron microscope image of the cross section of the annular retaining element 130 according to the 2nd example of the 1st embodiment in Fig. 1N. Fig. 1T is another scanning electron microscope image of the cross section of the annular retaining element 130 according to the 2nd example of the 1st embodiment in Fig. 1N. In Figs. 1N to 1T, the annular retaining element 130 can further include a connecting structure layer 135, wherein the connecting structure layer 135 is disposed between the nano-microstructure 140 and a surface of the annular retaining element 130, and the nano-microstructure 140 and the connecting structure layer 135 are disposed on the image-side surface 132 of the annular retaining element 130. Hence, the annular retaining element 130 can be tightly connected to the nano-microstructure 140 via the connecting structure layer 135 so as to obtain the higher structural stability. In detail, the connecting structure layer 135 can be composed of a plurality of films, which are alternately stacked, with different refractive indexes, and the connecting structure layer 135 can include at least one silicon dioxide.

In particular, the nano-microstructure 140 is disposed on a topmost of the connecting structure layer 135, wherein a portion of the connecting structure layer 135 is exposed via the pore structures of the nano-microstructure 140, wherein the portion of the connecting structure layer 135, which is exposed, is contacted with the air.

In Figs. 1R to 1T, observing the cross section of the annular retaining element 130 via the electron microscope image, the cross section from top to bottom is the nano-microstructure 140, the connecting structure layer 135 and the surface of the annular retaining element 130 in sequence. When the cross-section of the nano-microstructure 140 is observed, the nanostructure layer 140 has the irregular ridged convexes with the shape of wide bottom and narrow top like a mountain ridge so as to gradually decrease the equivalent refractive index from the bottom to the top of the nano-microstructure 140 for damaging and reducing the reflecting light. Moreover, a height T1 of the nano-microstructure 140 in Fig. 1R is 200.3 nm, and a thickness T2 of the connecting structure layer 135 in Fig. 1R is 73.68 nm; a height T1 of the nano-microstructure 140 in Fig. 1S is 232.7 nm, and a thickness T2 of the connecting structure layer 135 in Fig. 1S is 76.62 nm; a height T1 of the nano-microstructure 140 in Fig. 1T is 247.4 nm, and a thickness T2 of the connecting structure layer 135 in Fig. 1T is 75.15 nm, wherein an average height of the nano-microstructure 140 is 226.8 nm.

In Figs. 1D and 1E, a relative illuminance of the imaging lens assembly 100 is RI; a projecting area of each of the first optical identification surfaces 151 vertical to the optical axis X is A; an interval arc length between the first optical identification surfaces 151 is D; the optical lens element 122 has an optical effective portion 122a, and a maximum diameter of the optical effective portion 122a is Do, the following conditions of Table 1 are satisfied.

| Table 1, the 1st embodiment | | | |
|---|---|---|---|
| RI (%) | 23.5 | $(\sqrt{A})/D$ | 0.27 |
| A (mm$^2$) | 0.012 | Do (mm) | 10.06 |
| D (mm) | 0.4 | | |

It should be mentioned that the pattern of the first optical identification surfaces 151 and the pattern of the second optical identification surfaces 152 are omitted in Figs. 1A, 1B, 1E and 1K, the pattern of the first optical identification surfaces 151 and the pattern of the second optical identification surfaces 152 are only indicated in the partial enlarged view, and the thickness of the nano-microstructure 140 and the thickness of the connecting structure layer 135 in Figs. 1F, 1H and 1N are only configured to be the schematic views rather than the actual thicknesses.

<2nd embodiment>

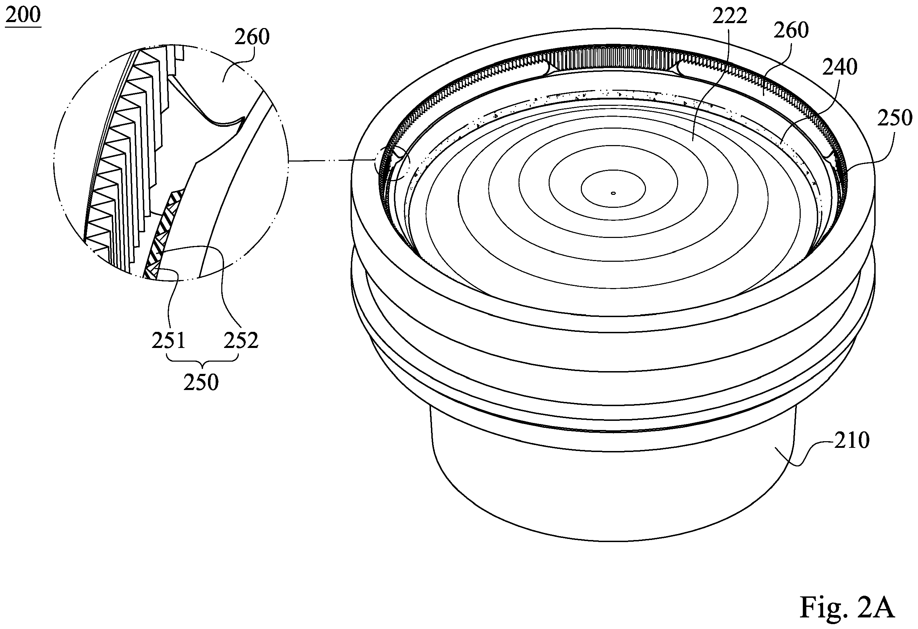

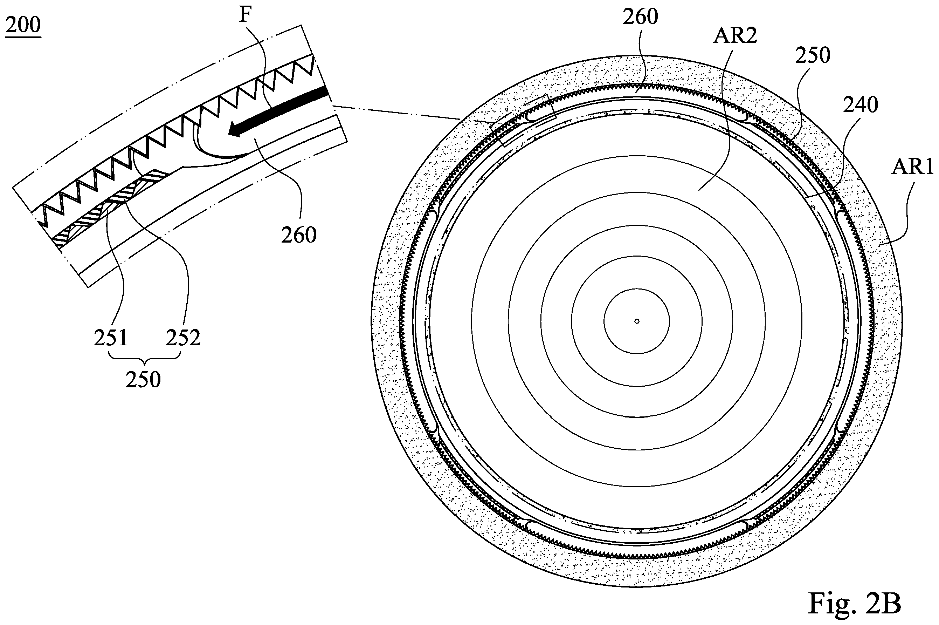

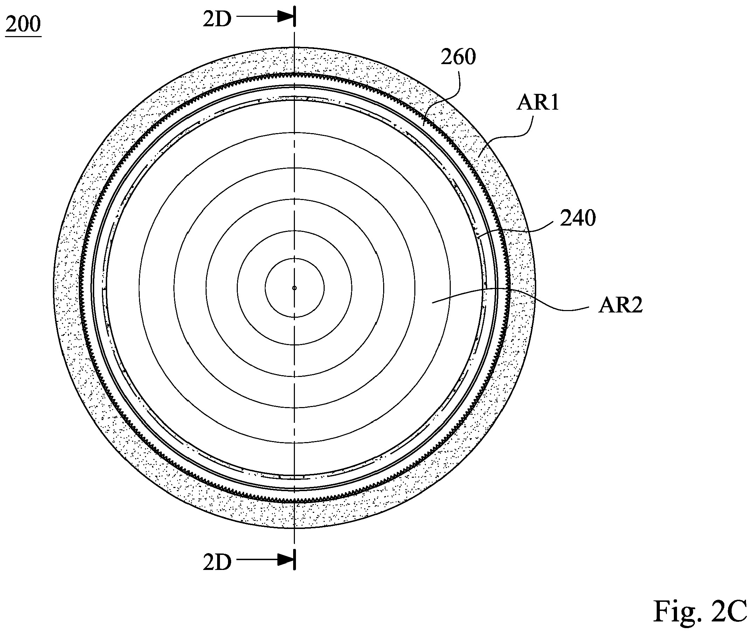

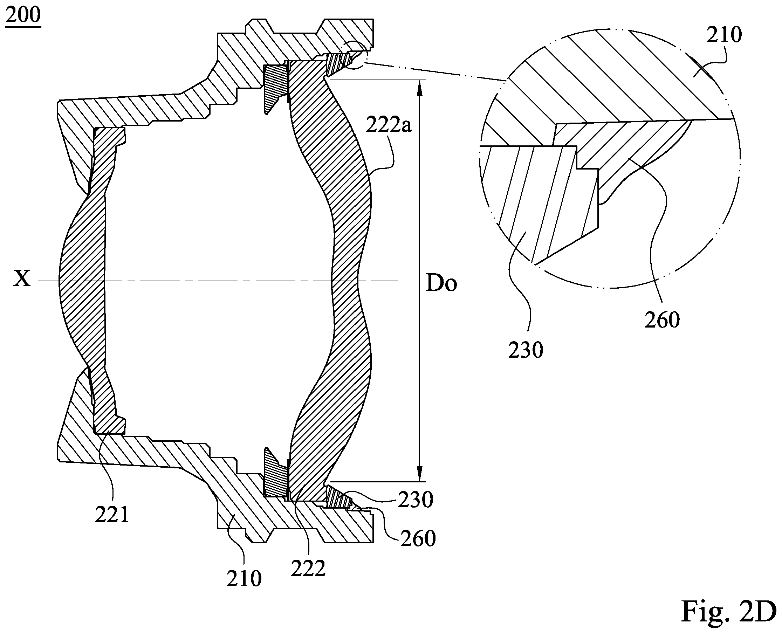

Fig. 2A is a three-dimensional view of an imaging lens assembly 200 according to the 2nd embodiment of the present disclosure. Fig. 2B is a schematic view of a glue material 260 assembled on the imaging lens assembly 200 according to the 2nd embodiment in Fig. 2A. Fig. 2C is a schematic view of the imaging lens assembly 200 according to the 2nd embodiment in Fig. 2A. Fig. 2D is a cross-sectional view of the imaging lens assembly 200 along a 2D-2D line in Fig. 2C. In Figs. 2A to 2D, the imaging lens assembly 200 has an optical axis X, and includes a lens barrel 210, a plurality of optical lens elements 221, 222, an annular retaining element 230, a nano-microstructure 240, an optical identification structure 250 and the glue material 260, wherein the lens barrel 210, the nano-microstructure 240 and the optical lens element 222 are simultaneously observed from the image side towards the object side of the imaging lens assembly 200 and along a direction parallel to the optical axis X. The nano-microstructure 240 is located between a lens barrel area AR1 defined via the lens barrel 210 and a lens element area AR2 defined via the optical lens element 222 on a direction vertical to the optical axis X. In particular, the lens barrel area AR1 is a projecting area of the lens barrel 210 on a plane vertical to the optical axis X, and the lens element area AR2 is a projecting area of the optical lens element 222 on a plane vertical to the optical axis X, wherein the dot pattern in Figs. 2B and 2C is configured to indicate the lens barrel area AR1.

In Fig. 2D, the optical axis X passes through the optical lens elements 221, 222, and the optical lens elements 221, 222 are disposed in the lens barrel 210. The annular retaining element 230 is physically contacted with the optical lens element 222, so that the optical lens element 222 is fixed in the lens barrel 210. The nano-microstructure 240 is closer to the optical axis X than the optical identification structure 250 to the optical axis X. The glue material 260 is physically contacted with the annular retaining element 230, so that the annular retaining element 230 is fixed in the lens barrel 210.

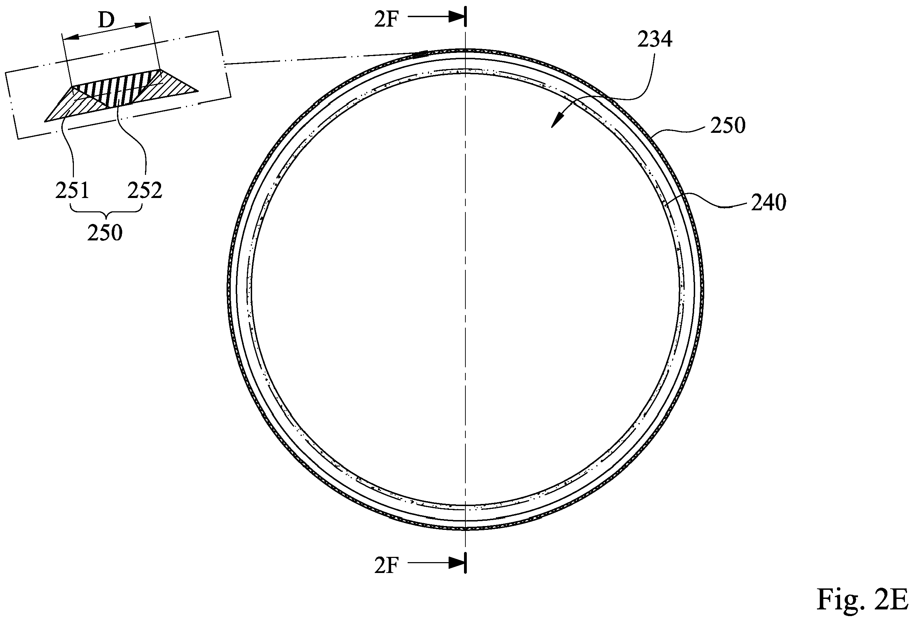

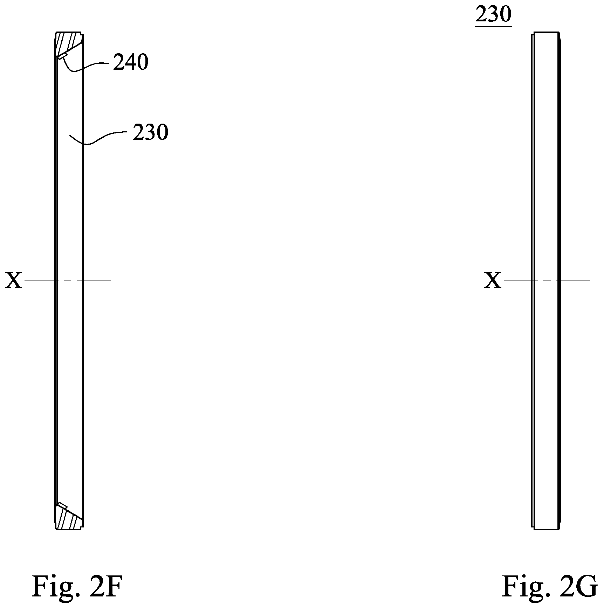

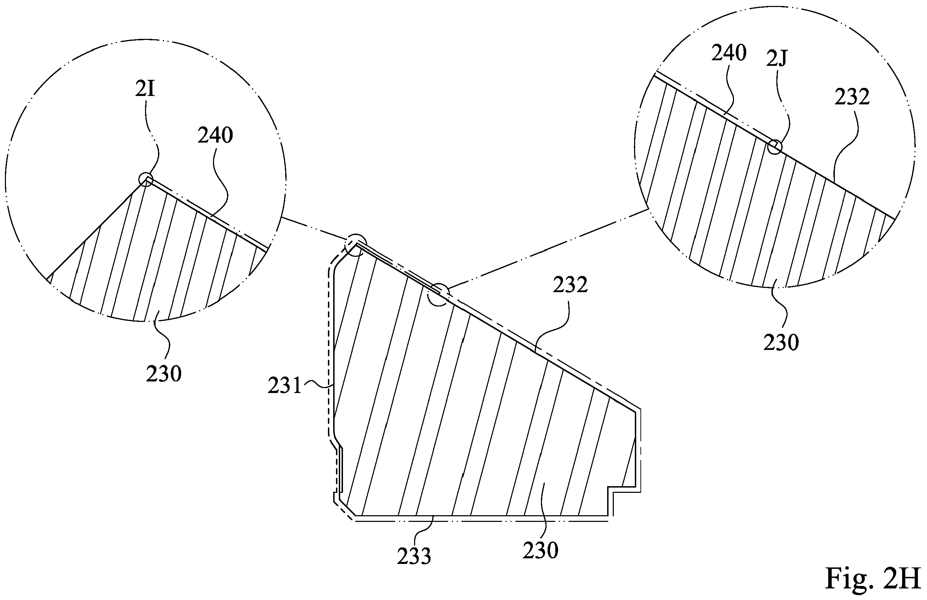

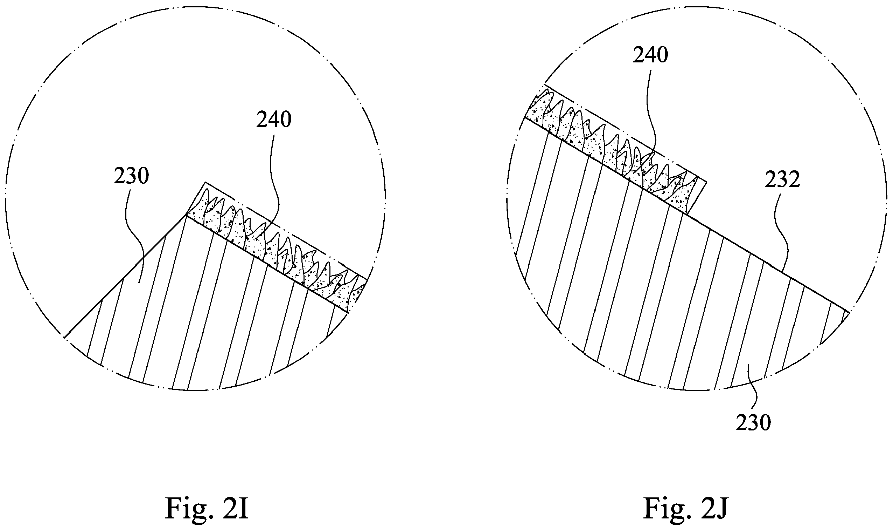

Fig. 2E is a schematic view of the annular retaining element 230, the nano-microstructure 240 and the optical identification structure 250 according to the 2nd embodiment in Fig. 2A. Fig. 2F is a cross-sectional view of the annular retaining element 230 along a 2F-2F line in Fig. 2E. Fig. 2G is a side view of the annular retaining element 230 according to the 2nd embodiment in Fig. 2E. Fig. 2H is a partial enlarged view of the annular retaining element 230 according to the 1st example of the 2nd embodiment in Fig. 2F. Fig. 2I is a partial enlarged view of the annular retaining element 230 according to the 1st example of the 2nd embodiment in Fig. 2H. Fig. 2J is another partial enlarged view of the annular retaining element 230 according to the 1st example of the 2nd embodiment in Fig. 2H. In Figs. 2E to 2J, the annular retaining element 230 includes an object-side surface 231, an image-side surface 232, an outer diameter surface 233 and a light-through hole 234, wherein the object-side surface 231 faces an object side of the imaging lens assembly 200, the image-side surface 232 faces an image side of the imaging lens assembly 200, the image-side surface 232 is corresponding to the object-side surface 231, the outer diameter surface 233 is connected to the object-side surface 231 and the image-side surface 232, the light-through hole 234 is formed by gradually tapering from the object-side surface 231 and the image-side surface 232 towards the optical axis X, and the optical axis X passes through a center of the light-through hole 234. Further, the nano-microstructure 240 is disposed on the image-side surface 232, and the nano-microstructure 240 has a plurality of irregular ridged convexes. It should be mentioned that the dotted line, the one-dot chain line and the two-dot chain line in Fig. 2H are configured to indicate the range of the object-side surface 231, the range of the image-side surface 232 and the range of the outer diameter surface 233, respectively.

Moreover, the annular retaining element 230 can be a retainer formed by the plastic injection molding process, but the present disclosure is not limited thereto.

In Figs. 2A, 2B and 2E, the optical identification structure 250 is disposed on the image-side surface 232, and includes at least two first optical identification surfaces 251 and at least one second optical identification surface 252, wherein the second optical identification surface 252 is disposed between the first optical identification surfaces 251, and the glue material 260 and the first optical identification surfaces 251 are simultaneously observed from the image side towards the object side of the imaging lens assembly 200 and along the direction parallel to the optical axis X. In detail, the distributing condition of the glue material 260 can be further obtained by observing the range of the first optical identification surfaces 251 covered via the glue material 260. In Fig. 2B, the first optical identification surfaces 251 can be observed along the direction parallel to the optical axis X during the process of assembling the glue material 260, such as a flowing direction F of the glue material 260. Once a dispensing space is filled via the glue material 260, and the glue material 260 entirely covers the first optical identification surfaces 251, so that the first optical identification surfaces 251 cannot be directly observed, but the present disclosure is not limited thereto.

According to the 2nd embodiment, a number of the first optical identification surfaces 251 is one hundred and eighty, and a number of the second optical identification surface 252 is one hundred and eighty, but the present disclosure is not limited thereto.

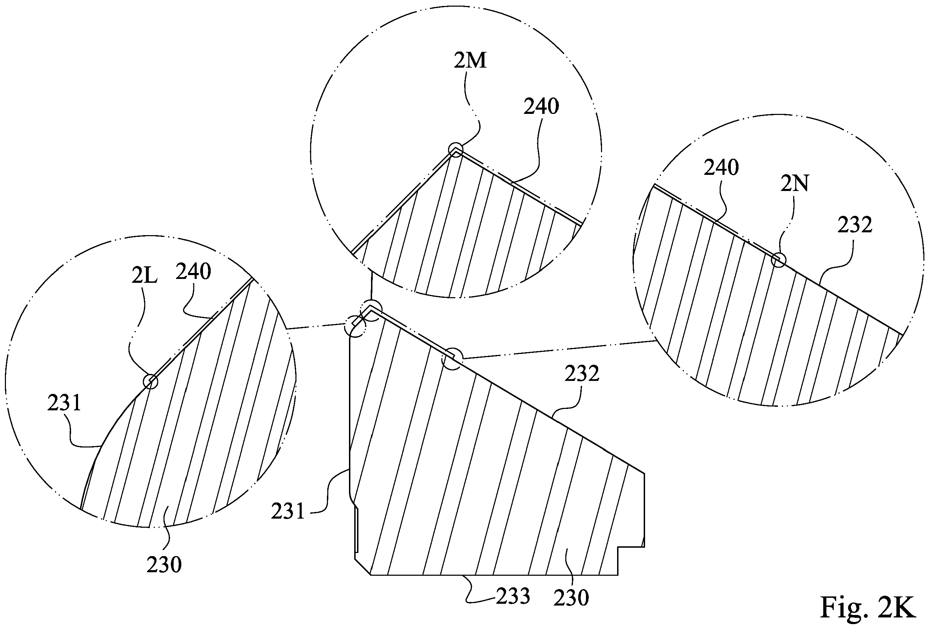

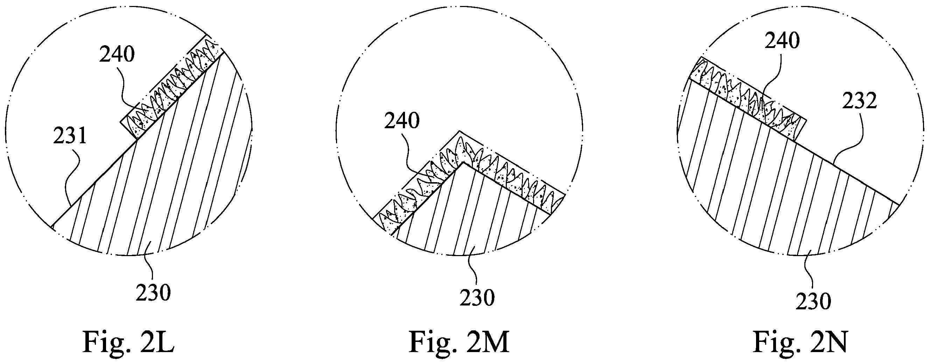

Fig. 2K is a partial enlarged view of the annular retaining element 230 according to the 2nd example of the 2nd embodiment in Fig. 2F. Fig. 2L is a partial enlarged view of the annular retaining element 230 according to the 2nd example of the 2nd embodiment in Fig. 2K. Fig. 2M is another partial enlarged view of the annular retaining element 230 according to the 2nd example of the 2nd embodiment in Fig. 2K. Fig. 2N is another partial enlarged view of the annular retaining element 230 according to the 2nd example of the 2nd embodiment in Fig. 2K. In Figs. 2K to 2N, the nano-microstructure 240 is disposed on the object-side surface 231 and the image-side surface 232 of the annular retaining element 230. By extending the disposing range of the nano-microstructure 240, the non-imaging light reflected via the aforementioned disposing range can be weakened so as to make the image clear.

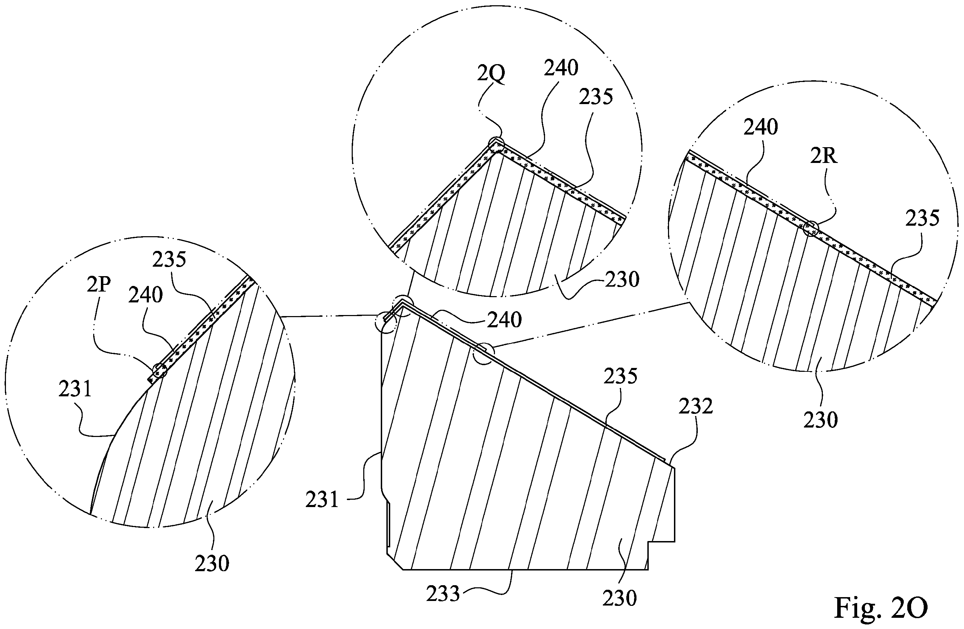

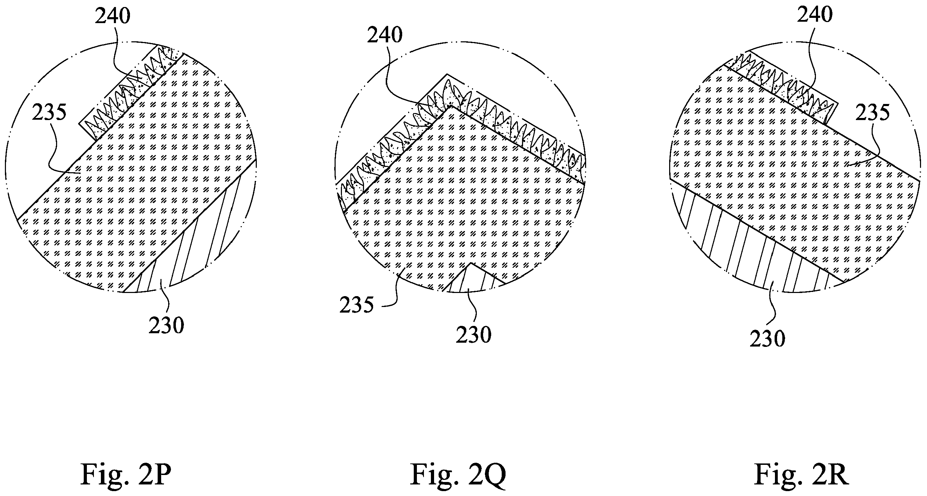

Fig. 2O is a partial enlarged view of the annular retaining element 230 according to the 3rd example of the 2nd embodiment in Fig. 2F. Fig. 2P is a partial enlarged view of the annular retaining element 230 according to the 3rd example of the 2nd embodiment in Fig. 2O. Fig. 2Q is another partial enlarged view of the annular retaining element 230 according to the 3rd example of the 2nd embodiment in Fig. 2O. Fig. 2R is another partial enlarged view of the annular retaining element 230 according to the 3rd example of the 2nd embodiment in Fig. 2O. In Figs. 2O to 2R, the annular retaining element 230 can further include a connecting structure layer 235, wherein the connecting structure layer 235 is disposed between the nano-microstructure 240 and a surface of the annular retaining element 230, and the nano-microstructure 240 and the connecting structure layer 235 are disposed on the object-side surface 231 and the image-side surface 232 of the annular retaining element 230. Hence, the annular retaining element 230 can be tightly connected to the nano-microstructure 240 via the connecting structure layer 235 so as to obtain the higher structural stability.

In Figs. 2D and 2E, a relative illuminance of the imaging lens assembly 200 is RI; a projecting area of each of the first optical identification surfaces 251 vertical to the optical axis X is A; an interval arc length between the first optical identification surfaces 251 is D; the optical lens element 222 has an optical effective portion 222a, and a maximum diameter of the optical effective portion 222a is Do, the following conditions of Table 2 are satisfied.

| Table 2, the 2nd embodiment | | | |
|---|---|---|---|
| RI (%) | 25.5 | $(\sqrt{A})/D$ | 0.32 |
| A (mm$^2$) | 0.003 | Do (mm) | 8.66 |
| D (mm) | 0.17 | | |

It should be mentioned that the pattern of the first optical identification surfaces 251 and the pattern of the second optical identification surfaces 252 are omitted in Figs. 2A, 2B and 2E, the pattern of the first optical identification surfaces 251 and the pattern of the second optical identification surfaces 252 are only indicated in the partial enlarged view, and the thickness of the nano-microstructure 240 and the thickness of the connecting structure layer 235 in Figs. 2F, 2H, 2K and 2O are only configured to be the schematic views rather than the actual thicknesses.

<3rd embodiment>

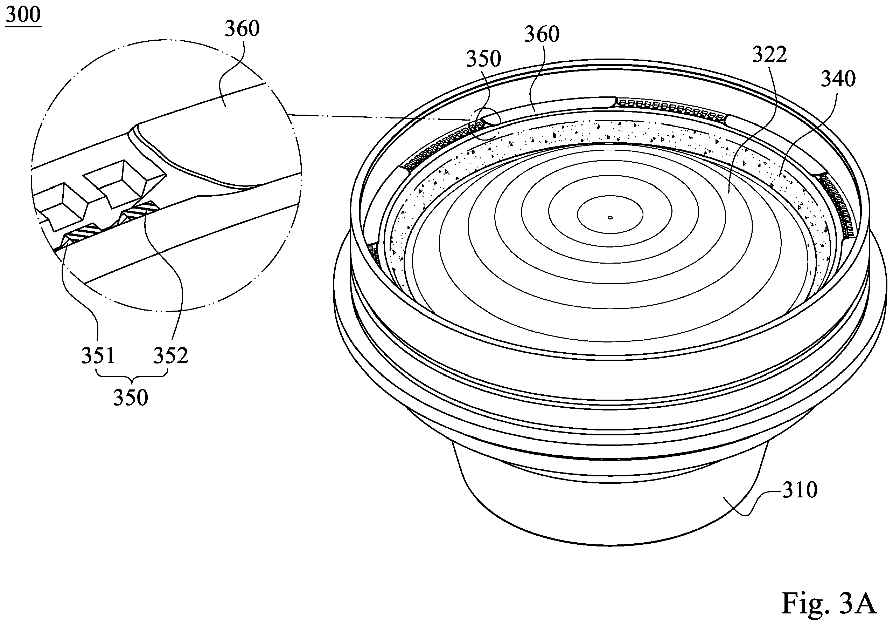

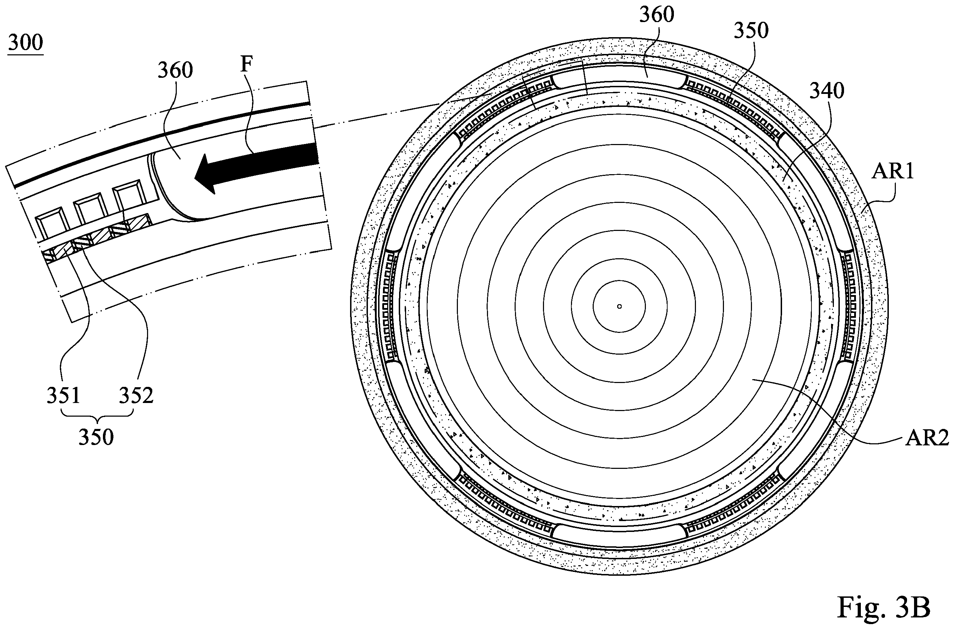

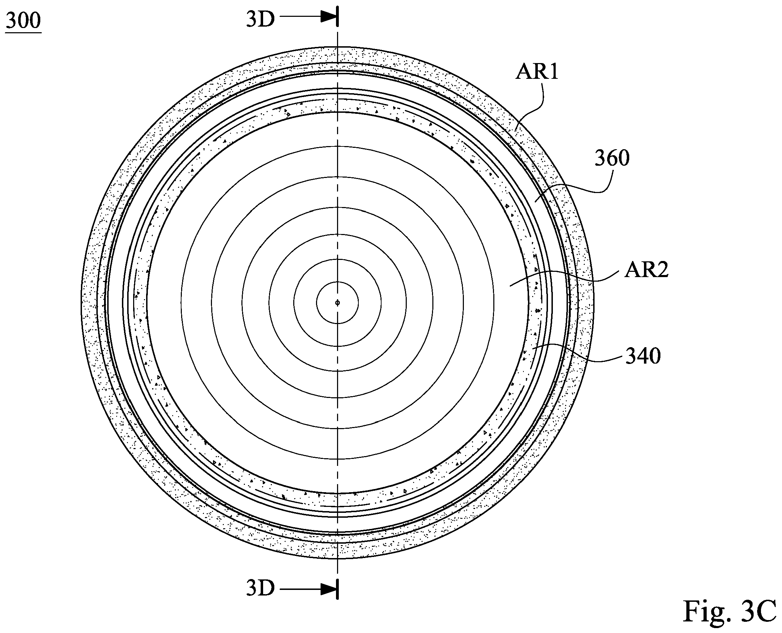

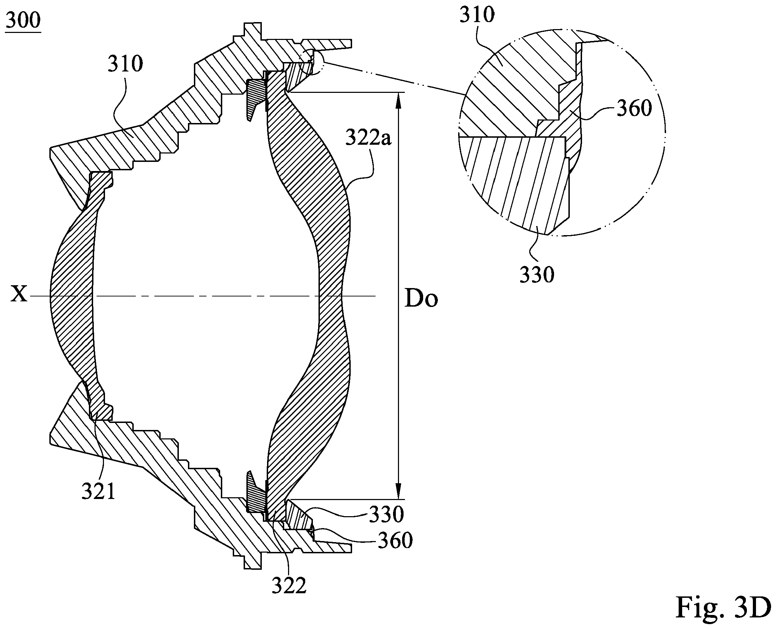

Fig. 3A is a three-dimensional view of an imaging lens assembly 300 according to the 3rd embodiment of the present disclosure. Fig. 3B is a schematic view of a glue material 360 assembled on the imaging lens assembly 300 according to the 3rd embodiment in Fig. 3A. Fig. 3C is a schematic view of the imaging lens assembly 300 according to the 3rd embodiment in Fig. 3A. Fig. 3D is a cross-sectional view of the imaging lens assembly 300 along a 3D-3D line in Fig. 3C. In Figs. 3A to 3D, the imaging lens assembly 300 has an optical axis X, and includes a lens barrel 310, a plurality of optical lens elements 321, 322, an annular retaining element 330, a nano-microstructure 340, an optical identification structure 350 and the glue material 360, wherein the lens barrel 310, the nano-microstructure 340 and the optical lens element 322 are simultaneously observed from the image side towards the object side of the imaging lens assembly 300 and along a direction parallel to the optical axis X. The nano-microstructure 340 is located between a lens barrel area AR1 defined via the lens barrel 310 and a lens element area AR2 defined via the optical lens element 322 on a direction vertical to the optical axis X. In particular, the lens barrel area AR1 is a projecting area of the lens barrel 310 on a plane vertical to the optical axis X, and the lens element area AR2 is a projecting area of the optical lens element 322 on a plane vertical to the optical axis X, wherein the dot pattern in Figs. 3B and 3C is configured to indicate the lens barrel area AR1.

In Fig. 3D, the optical axis X passes through the optical lens elements 321, 322, and the optical lens elements 321, 322 are disposed in the lens barrel 310. The annular retaining element 330 is physically contacted with the optical lens element 322, so that the optical lens element 322 is fixed in the lens barrel 310. The nano-microstructure 340 is closer to the optical axis X than the optical identification structure 350 to the optical axis X. The glue material 360 is physically contacted with the annular retaining element 330, so that the annular retaining element 330 is fixed in the lens barrel 310.

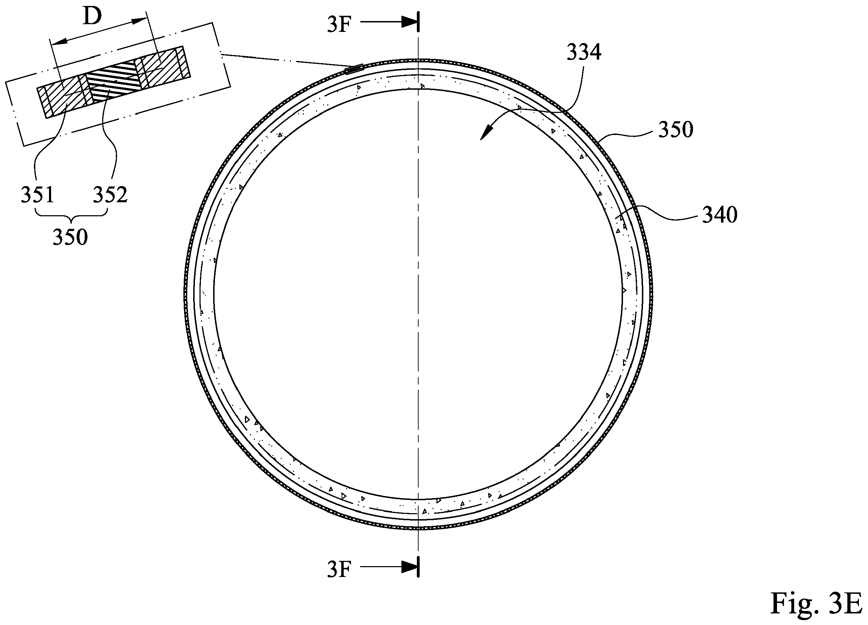

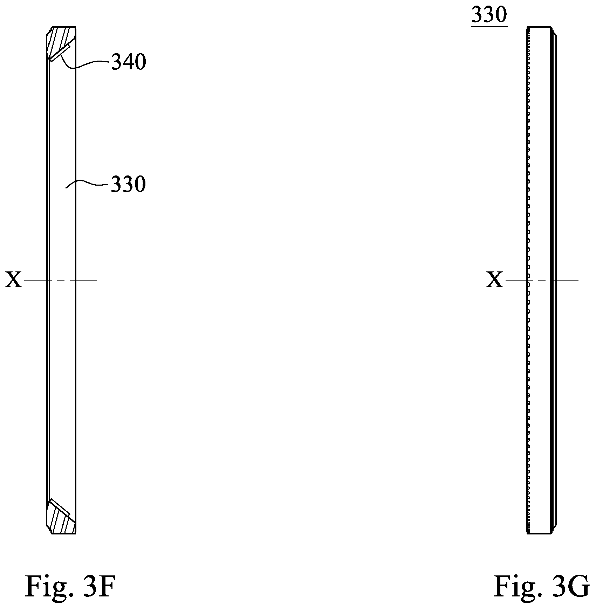

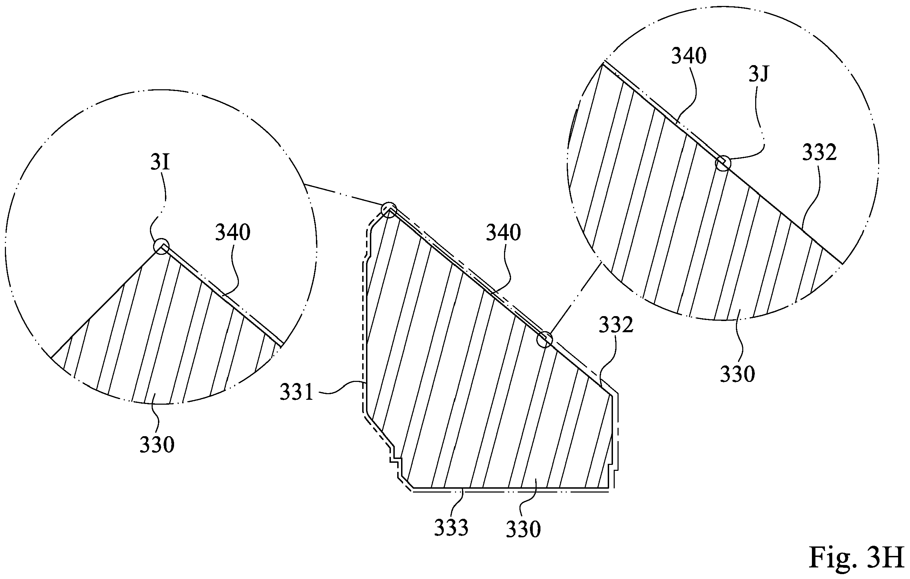

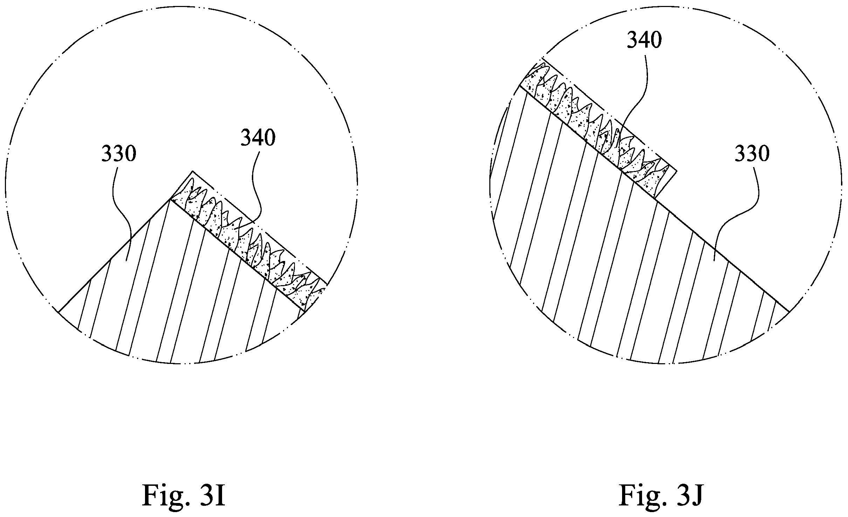

Fig. 3E is a schematic view of the annular retaining element 330, the nano-microstructure 340 and the optical identification structure 350 according to the 3rd embodiment in Fig. 3A. Fig. 3F is a cross-sectional view of the annular retaining element 330 along a 3F-3F line in Fig. 3E. Fig. 3G is a side view of the annular retaining element 330 according to the 3rd embodiment in Fig. 3E. Fig. 3H is a partial enlarged view of the annular retaining element 330 according to the 3rd embodiment in Fig. 3F. Fig. 3I is a partial enlarged view of the annular retaining element 330 according to the 3rd embodiment in Fig. 3H. Fig. 3J is another partial enlarged view of the annular retaining element 330 according to the 3rd embodiment in Fig. 3H. In Figs. 3E to 3J, the annular retaining element 330 includes an object-side surface 331, an image-side surface 332, an outer diameter surface 333 and a light-through hole 334, wherein the object-side surface 331 faces an object side of the imaging lens assembly 300, the image-side surface 332 faces an image side of the imaging lens assembly 300, the image-side surface 332 is corresponding to the object-side surface 331, the outer diameter surface 333 is connected to the object-side surface 331 and the image-side surface 332, the light-through hole 334 is formed by gradually tapering from the object-side surface 331 and the image-side surface 332 towards the optical axis X, and the optical axis X passes through a center of the light-through hole 334. Further, the nano-microstructure 340 is disposed on the image-side surface 332, and the nano-microstructure 340 has a plurality of irregular ridged convexes. It should be mentioned that the dotted line, the one-dot chain line and the two-dot chain line in Fig. 3H are configured to indicate the range of the object-side surface 331, the range of the image-side surface 332 and the range of the outer diameter surface 333, respectively.

Moreover, the annular retaining element 330 can be a retainer formed by the plastic injection molding process, but the present disclosure is not limited thereto.

In Figs. 3A, 3B and 3E, the optical identification structure 350 is disposed on the image-side surface 332 and the outer diameter surface 333, and includes at least two first optical identification surfaces 351 and at least one second optical identification surface 352, wherein the second optical identification surface 352 is disposed between the first optical identification surfaces 351, and the glue material 360 and the first optical identification surfaces 351 are simultaneously observed from the image side towards the object side of the imaging lens assembly 300 and along the direction parallel to the optical axis X. In detail, the distributing condition of the glue material 360 can be further obtained by observing the range of the first optical identification surfaces 351 covered via the glue material 360. In Fig. 3B, the first optical identification surfaces 351 can be observed along the direction parallel to the optical axis X during the process of assembling the glue material 360, such as a flowing direction F of the glue material 360. Once a dispensing space is filled via the glue material 360, and the glue material 360 entirely covers the first optical identification surfaces 351, so that the first optical identification surfaces 351 cannot be directly observed, but the present disclosure is not limited thereto.

According to the 3rd embodiment, a number of the first optical identification surfaces 351 is one hundred and eighty, and a number of the second optical identification surface 352 is one hundred and eighty, but the present disclosure is not limited thereto.

In Figs. 3D and 3E, a relative illuminance of the imaging lens assembly 300 is RI; a projecting area of each of the first optical identification surfaces 351 vertical to the optical axis X is A; an interval arc length between the first optical identification surfaces 351 is D; the optical lens element 322 has an optical effective portion 322a, and a maximum diameter of the optical effective portion 322a is Do, the following conditions of Table 3 are satisfied.

| Table 3, the 3rd embodiment | | | |
|---|---|---|---|
| RI (%) | 26.2 | ($\sqrt{A}$)/D | 0.41 |
| A (mm$^2$) | 0.006 | Do (mm) | 9.68 |
| D (mm) | 0.19 | | |

It should be mentioned that the pattern of the first optical identification surfaces 351 and the pattern of the second optical identification surfaces 352 are omitted in Figs. 3A, 3B and 3E, the pattern of the first optical identification surfaces 351 and the pattern of the second optical identification surfaces 352 are only indicated in the partial enlarged view, and the thickness of the nano-microstructure 340 in Figs. 3F and 3H is only configured to be the schematic view rather than the actual thickness.

<4th embodiment>

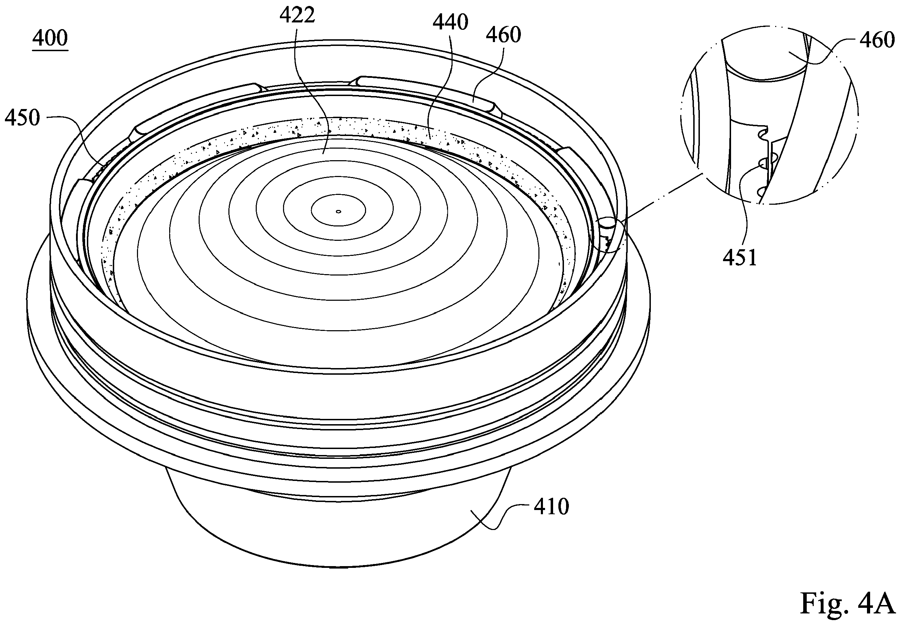

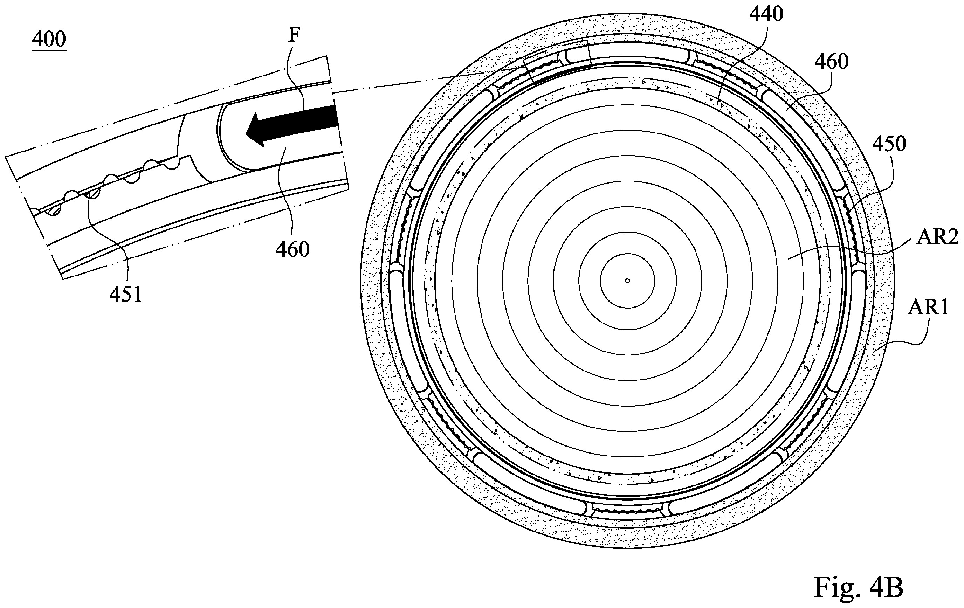

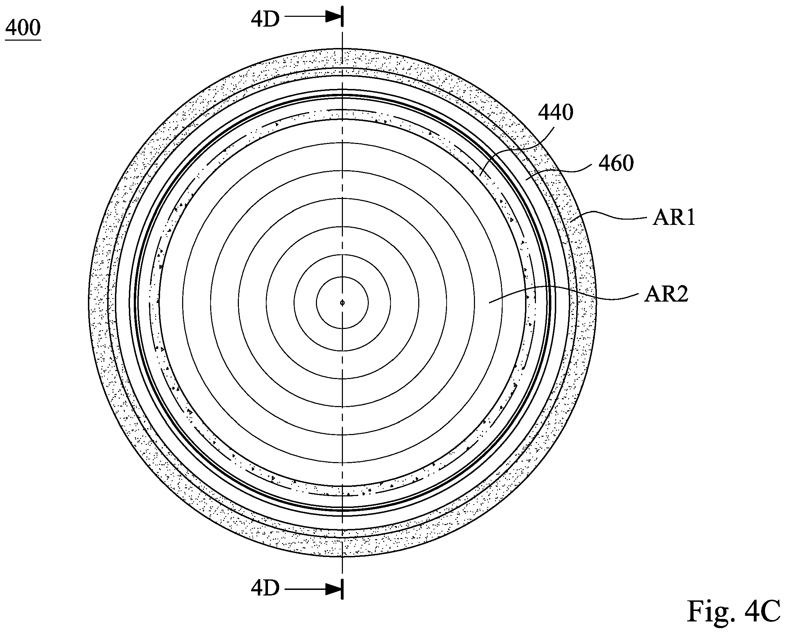

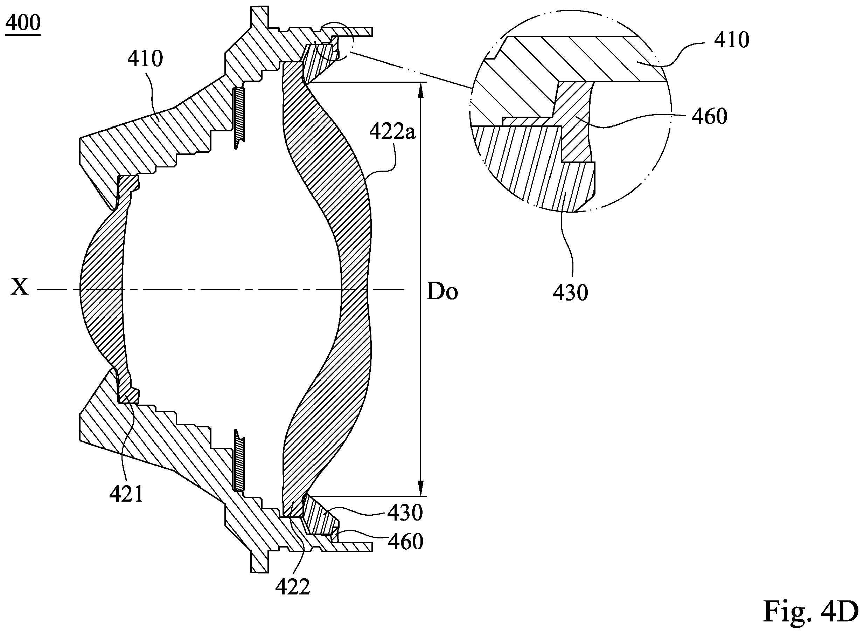

Fig. 4A is a three-dimensional view of an imaging lens assembly 400 according to the 4th embodiment of the present disclosure. Fig. 4B is a schematic view of a glue material 460 assembled on the imaging lens assembly 400 according to the 4th embodiment in Fig. 4A. Fig. 4C is a schematic view of the imaging lens assembly 400 according to the 4th embodiment in Fig. 4A. Fig. 4D is a cross-sectional view of the imaging lens assembly 400 along a 4D-4D line in Fig. 4C. In Figs. 4A to 4D, the imaging lens assembly 400 has an optical axis X, and includes a lens barrel 410, a plurality of optical lens elements 421, 422, an annular retaining element 430, a nano-microstructure 440, an optical identification structure 450 and the glue material 460, wherein the lens barrel 410, the nano-microstructure 440 and the optical lens element 422 are simultaneously observed from the image side towards the object side of the imaging lens assembly 400 and along a direction parallel to the optical axis X. The nano-microstructure 440 is located between a lens barrel area AR1 defined via the lens barrel 410 and a lens element area AR2 defined via the optical lens element 422 on a direction vertical to the optical axis X. In particular, the lens barrel area AR1 is a projecting area of the lens barrel 410 on a plane vertical to the optical axis X, and the lens element area AR2 is a projecting area of the optical lens element 422 on a plane vertical to the optical axis X, wherein the dot pattern in Figs. 4B and 4C is configured to indicate the lens barrel area AR1.
In Fig. 4D, the optical axis X passes through the optical lens elements 421, 422, and the optical lens elements 421, 422 are disposed in the lens barrel 410. The annular retaining element 430 is physically contacted with the optical lens element 422, so that the optical lens element 422 is fixed in the lens barrel 410. The nano-microstructure 440 is closer to the optical axis X than the optical identification structure 450 to the optical axis X. The glue material 460 is physically contacted with the annular retaining element 430, so that the annular retaining element 430 is fixed in the lens barrel 410.

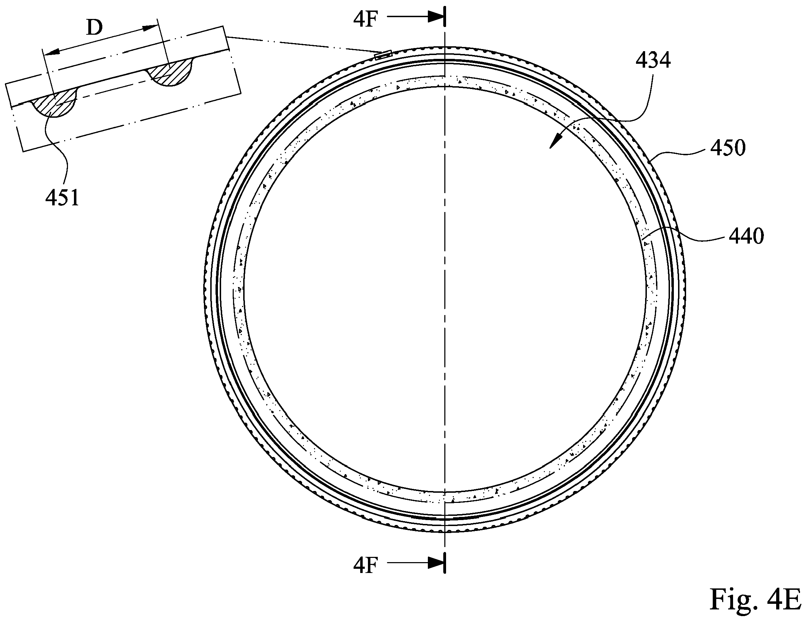

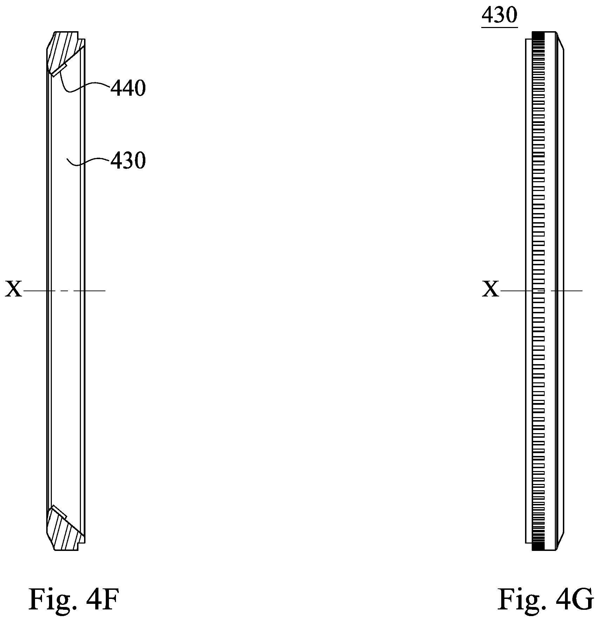

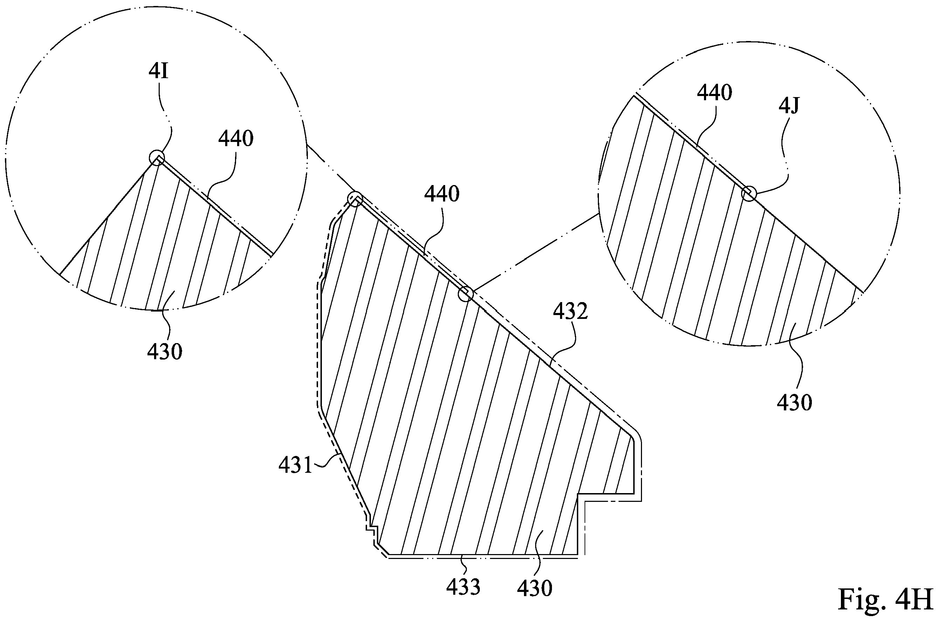

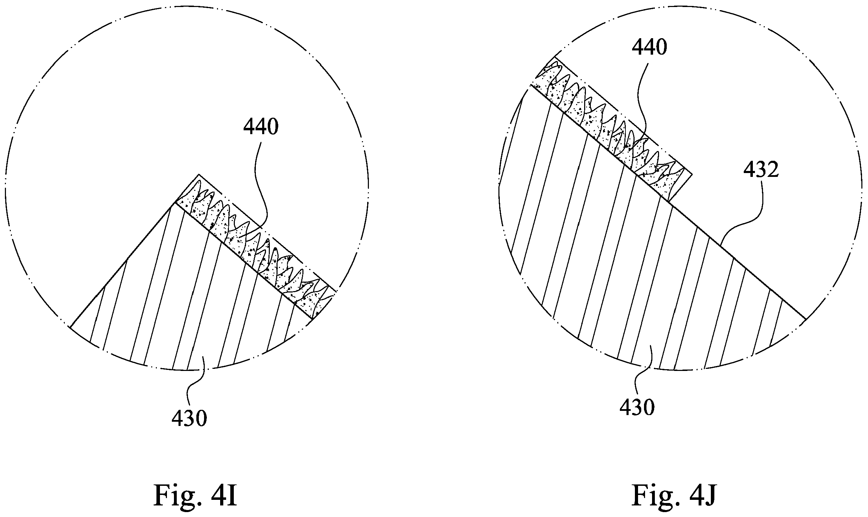

Fig. 4E is a schematic view of the annular retaining element 430, the nano-microstructure 440 and the optical identification structure 450 according to the 4th embodiment in Fig. 4A. Fig. 4F is a cross-sectional view of the annular retaining element 430 along a 4F-4F line in Fig. 4E. Fig. 4G is a side view of the annular retaining element 430 according to the 4th embodiment in Fig. 4E. Fig. 4H is a partial enlarged view of the annular retaining element 430 according to the 4th embodiment in Fig. 4F. Fig. 4I is a partial enlarged view of the annular retaining element 430 according to the 4th embodiment in Fig. 4H. Fig. 4J is another partial enlarged view of the annular retaining element 430 according to the 4th embodiment in Fig. 4H. In Figs. 4E to 4J, the annular retaining element 430 includes an object-side surface 431, an image-side surface 432, an outer diameter surface 433 and a light-through hole 434, wherein the object-side surface 431 faces an object side of the imaging lens assembly 400, the image-side surface 432 faces an image side of the imaging lens assembly 400, the image-side surface 432 is corresponding to the object-side surface 431, the outer diameter surface 433 is connected to the object-side surface 431 and the image-side surface 432, the light-through hole 434 is formed by gradually tapering from the object-side surface 431 and the image-side surface 432 towards the optical axis X, and the optical axis X passes through a center of the light-through hole 434. Further, the nano-microstructure 440 is disposed on the image-side surface 432, and the nano-microstructure 440 has a plurality of irregular ridged convexes. It should be mentioned that the dotted line, the one-dot chain line and the two-dot chain line in Fig. 4H are configured to indicate the range of the object-side surface 431, the range of the image-side surface 432 and the range of the outer diameter surface 433, respectively.
Moreover, the annular retaining element 430 can be a retainer formed by the plastic injection molding process, but the present disclosure is not limited thereto.
In Figs. 4A, 4B and 4E, the optical identification structure 450 is disposed on the image-side surface 432 and the outer diameter surface 433, and includes at least two first optical identification surfaces 451, wherein the glue material 460 and the first optical identification surfaces 451 are simultaneously observed from the image side towards the object side of the imaging lens assembly 400 and along the direction parallel to the optical axis X. In detail, the distributing condition of the glue material 460 can be further obtained by observing the range of the first optical identification surfaces 451 covered via the glue material 460. In Fig. 4B, the first optical identification surfaces 451 can be observed along the direction parallel to the optical axis X during the process of assembling the glue material 460, such as a flowing direction F of the glue material 460. Once a dispensing space is filled via the glue material 460, and the glue material 460 entirely covers the first optical identification surfaces 451, so that the first optical identification surfaces 451 cannot be directly observed, but the present disclosure is not limited thereto.

According to the 4th embodiment, a number of the first optical identification surfaces 451 is one hundred and seventy, but the present disclosure is not limited thereto.

In Figs. 4D and 4E, a relative illuminance of the imaging lens assembly 400 is RI; a projecting area of each of the first optical identification surfaces 451 vertical to the optical axis X is A; an interval arc length between the first optical identification surfaces 451 is D; the optical lens element 422 has an optical effective portion 422a, and a maximum diameter of the optical effective portion 422a is Do, the following conditions of Table 4 are satisfied.

| Table 4, the 4th embodiment | | | |
|---|---|---|---|
| RI (%) | 25 | $(\sqrt{A})/D$ | 0.26 |
| A (mm$^2$) | 0.003 | Do (mm) | 9.66 |
| D (mm) | 0.21 | | |

It should be mentioned that the pattern of the first optical identification surfaces 451 is omitted in Figs. 4B and 4E, the pattern of the first optical identification surfaces 451 is only indicated in the partial enlarged view, and the thickness of the nano-microstructure 440 in Figs. 4F and 4H is only configured to be the schematic view rather than the actual thickness.

<5th embodiment>

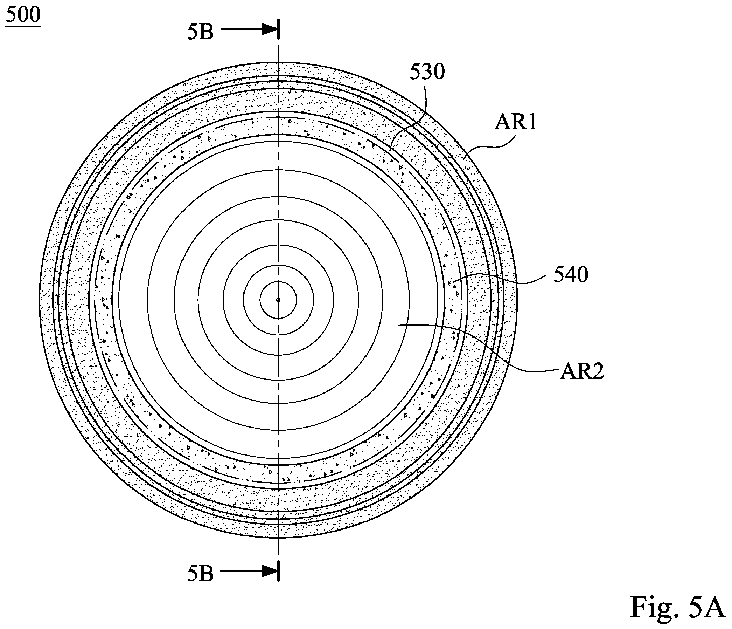

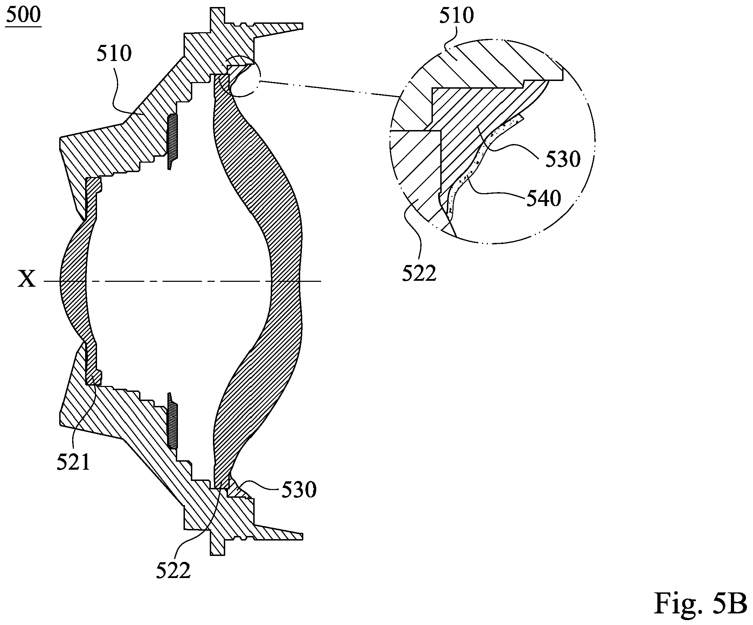

Fig. 5A is a schematic view of an imaging lens assembly 500 according to the 5th embodiment of the present disclosure. Fig. 5B is a cross-sectional view of the imaging lens assembly 500 along a 5B-5B line in Fig. 5A. In Figs. 5A and 5B, the imaging lens assembly 500 has an optical axis X, and includes a lens barrel 510, a plurality of optical lens elements 521, 522, an annular retaining element 530 and a nano-microstructure 540, wherein the lens barrel 510, the nano-microstructure 540 and the optical lens element 522 are simultaneously observed from the image side towards the object side of the imaging lens assembly 500 and along a direction parallel to the optical axis X. The nano-microstructure 540 is located between a lens barrel area AR1 defined via the lens barrel 510 and a lens element area AR2 defined via the optical lens element 522 on a direction vertical to the optical axis X. In particular, the lens barrel area AR1 is a projecting area of the lens barrel 510 on a plane vertical to the optical axis X, and the lens element area AR2 is a projecting area of the optical lens element 522 on a plane vertical to the optical axis X, wherein the dot pattern in Fig. 5A is configured to indicate the lens barrel area AR1.

In Fig. 5B, the optical axis X passes through the optical lens elements 521, 522, and the optical lens elements 521, 522 are disposed in the lens barrel 510. The annular retaining element 530 is physically contacted with the optical lens element 522, so that the optical lens element 522 is fixed in the lens barrel 510. In particular, the annular retaining element 530 can be a black ink spraying layer formed via the quick drying ink based on the epoxy resin, but the present disclosure is not limited thereto.

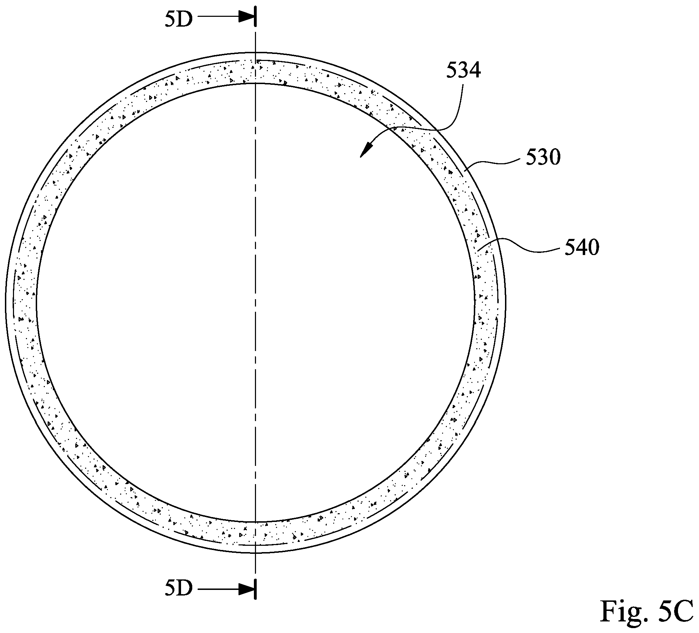

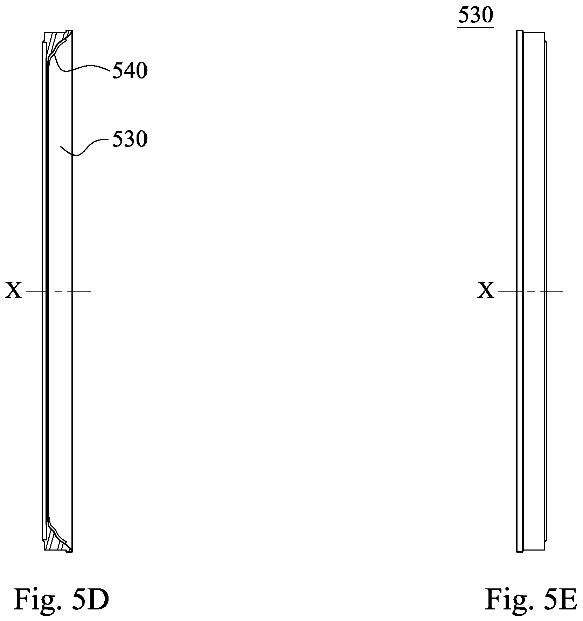

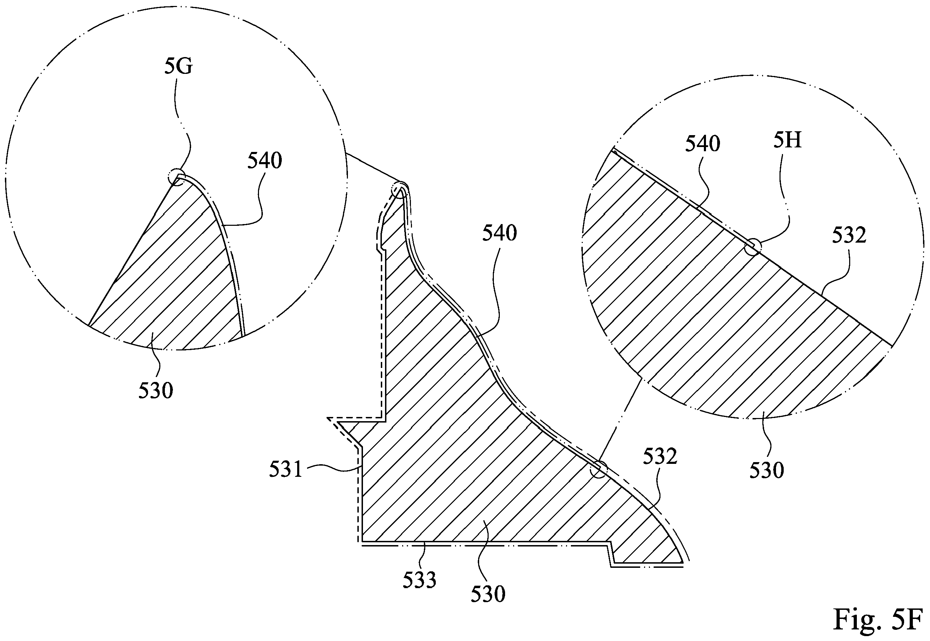

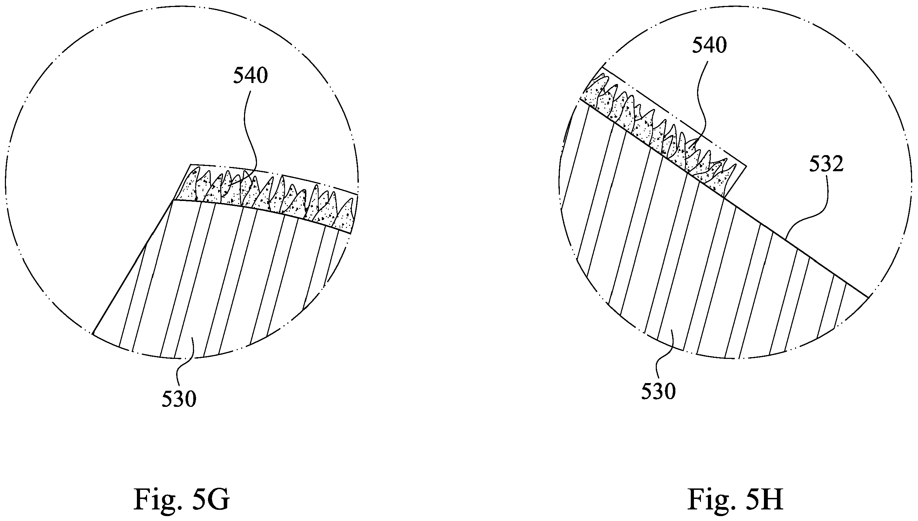

Fig. 5C is a schematic view of the annular retaining element 530 and the nano-microstructure 540 according to the 5th embodiment in Fig. 5A. Fig. 5D is a cross-sectional view of the annular retaining element 530 along a 5D-5D line in Fig. 5C. Fig. 5E is a side view of the annular retaining element 530 according to the 5th embodiment in Fig. 5C. Fig. 5F is a partial enlarged view of the annular retaining element 530 according to the 1st example of the 5th embodiment in Fig. 5D. Fig. 5G is a partial enlarged view of the annular retaining element 530 according to the 1st example of the 5th embodiment in Fig. 5F. Fig. 5H is another partial enlarged view of the annular retaining element 530 according to the 1st example of the 5th embodiment in Fig. 5F. In Figs. 5C to 5H, the annular retaining element 530 includes an object-side surface 531, an image-side surface 532, an outer diameter surface 533 and a light-through hole 534, wherein the object-side surface 531 faces an object side of the imaging lens assembly 500, the image-side surface 532 faces an image side of the imaging lens assembly 500, the image-side surface 532 is corresponding to the object-side surface 531, the outer diameter surface 533 is connected to the object-side surface 531 and the image-side surface 532, the light-through hole 534 is formed by gradually tapering from the object-side surface 531 and the image-side surface 532 towards the optical axis X, and the optical axis X passes through a center of the light-through hole 534. Further, the nano-microstructure 540 is disposed on the image-side surface 532, and the nano-microstructure 540 has a plurality of irregular ridged convexes. It should be mentioned that the dotted line, the one-dot chain line and the two-dot chain line in Fig. 5F are configured to indicate the range of the object-side surface 531, the range of the image-side surface 532 and the range of the outer diameter surface 533, respectively.

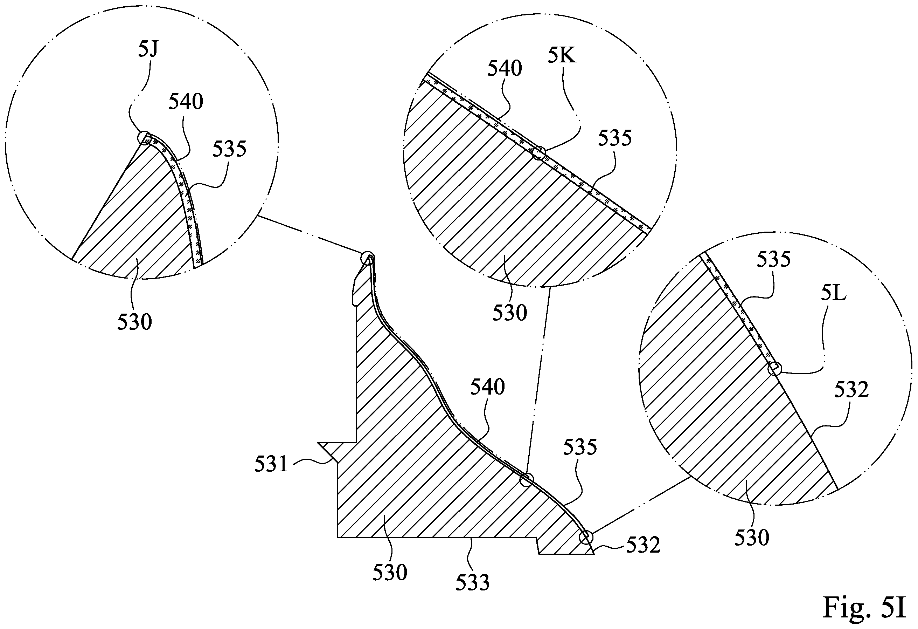

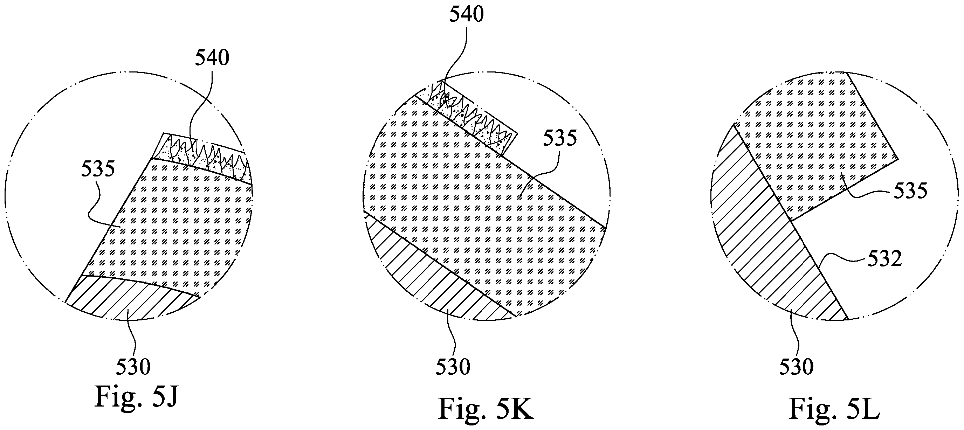

Fig. 5I is a partial enlarged view of the annular retaining element 530 according to the 2nd example of the 5th embodiment in Fig. 5D. Fig. 5J is a partial enlarged view of the annular retaining element 530 according to the 2nd example of the 5th embodiment in Fig. 5I. Fig. 5K is another partial enlarged view of the annular retaining element 530 according to the 2nd example of the 5th embodiment in Fig. 5I. Fig. 5L is another partial enlarged view of the annular retaining element 530 according to the 2nd example of the 5th embodiment in Fig. 5I. In Figs. 5I to 5L, the annular retaining element 530 can further include a connecting structure layer 535, wherein the connecting structure layer 535 is disposed between the nano-microstructure 540 and a surface of the annular retaining element 530, and the nano-microstructure 540 and the connecting structure layer 535 are disposed on the image-side surface 532 of the annular retaining element 530. Hence, the annular retaining element 530 can be tightly connected to the nano-microstructure 540 via the connecting structure layer 535 so as to obtain the higher structural stability.

According to the 5th embodiment, a relative illuminance of the imaging lens assembly 500 is RI, the following condition of Table 5 is satisfied.

| Table 5, the 5th embodiment | | | |
|---|---|---|---|
| RI (%) | 16.9 | | |

It should be mentioned that the thickness of the nano-microstructure 540 and the thickness of the connecting structure layer 535 in Figs. 5B, 5D, 5F and 5I are only configured to be the schematic views rather than the actual thicknesses.

<6th embodiment>

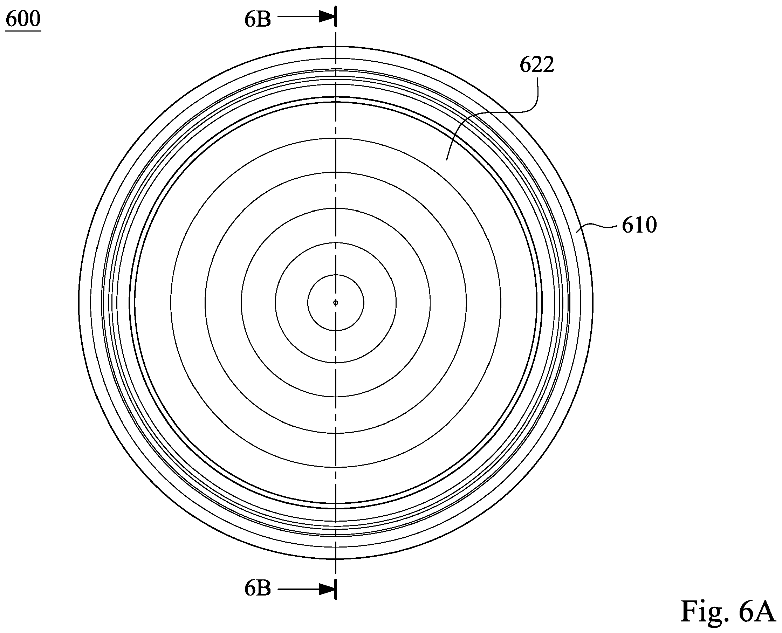

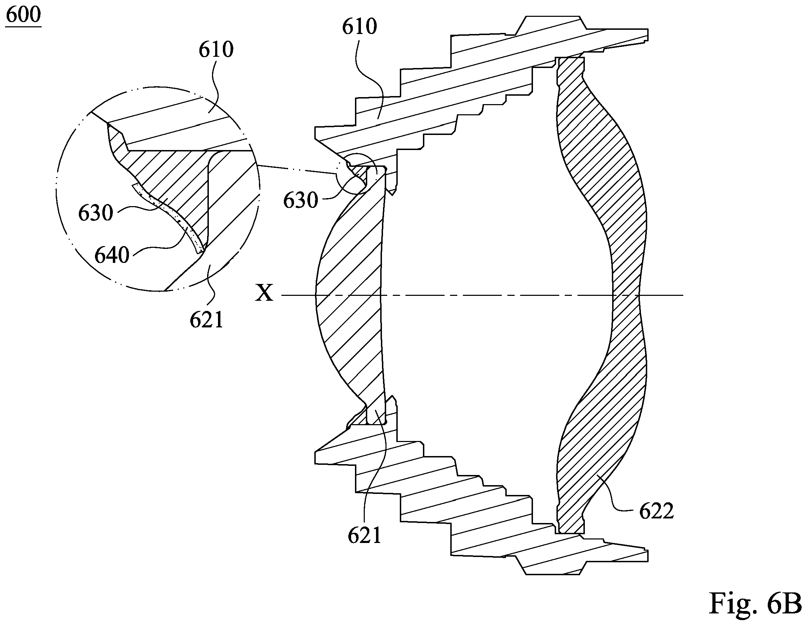

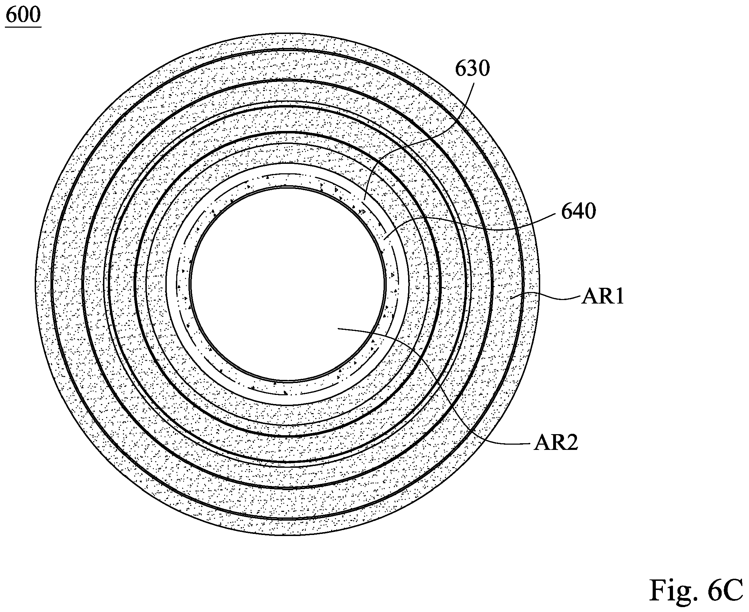

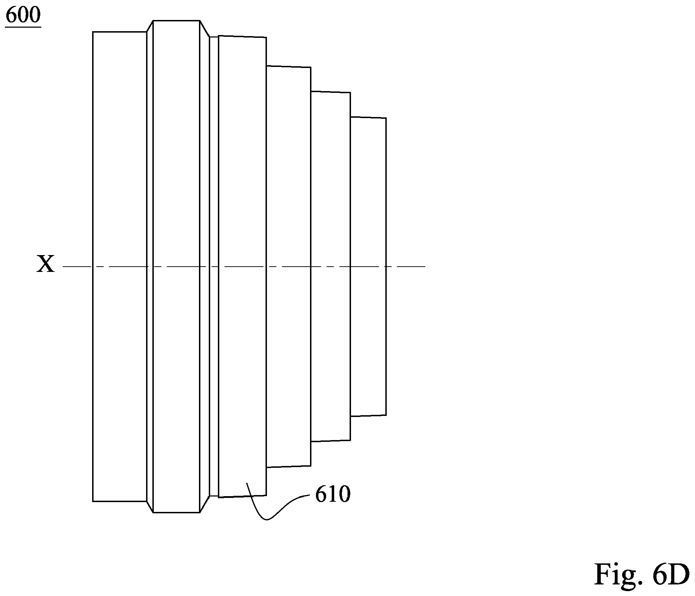

Fig. 6A is a schematic view of an imaging lens assembly 600 according to the 6th embodiment of the present disclosure. Fig. 6B is a cross-sectional view of the imaging lens assembly 600 along a 6B-6B line in Fig. 6A. Fig. 6C is a schematic view of the imaging lens assembly 600 according to the 6th embodiment in Fig. 6A. Fig. 6D is a side view of the imaging lens assembly 600 according to the 6th embodiment in Fig. 6A. In Figs. 6A to 6D, the imaging lens assembly 600 has an optical axis X, and includes a lens barrel 610, a plurality of optical lens elements 621, 622, an annular retaining element 630 and a nano-microstructure 640, wherein the lens barrel 610, the nano-microstructure 640 and the optical lens element 621 are simultaneously observed along a direction parallel to the optical axis X. The nano-microstructure 640 is located between a lens barrel area AR1 defined via the lens barrel 610 and a lens element area AR2 defined via the optical lens element 621 on a direction vertical to the optical axis X. In particular, the lens barrel area AR1 is a projecting area of the lens barrel 610 on a plane vertical to the optical axis X, and the lens element area AR2 is a projecting area of the optical lens element 621 on a plane vertical to the optical axis X, wherein the dot pattern in Fig. 6C is configured to indicate the lens barrel area AR1.

In Fig. 6B, the optical axis X passes through the optical lens elements 621, 622, and the optical lens elements 621, 622 are disposed in the lens barrel 610. The annular retaining element 630 is physically contacted with the optical lens element 621, so that the optical lens element 621 is fixed in the lens barrel 610. In particular, the annular retaining element 630 can be a black ink spraying layer formed via the quick drying ink based on the epoxy resin, but the present disclosure is not limited thereto.

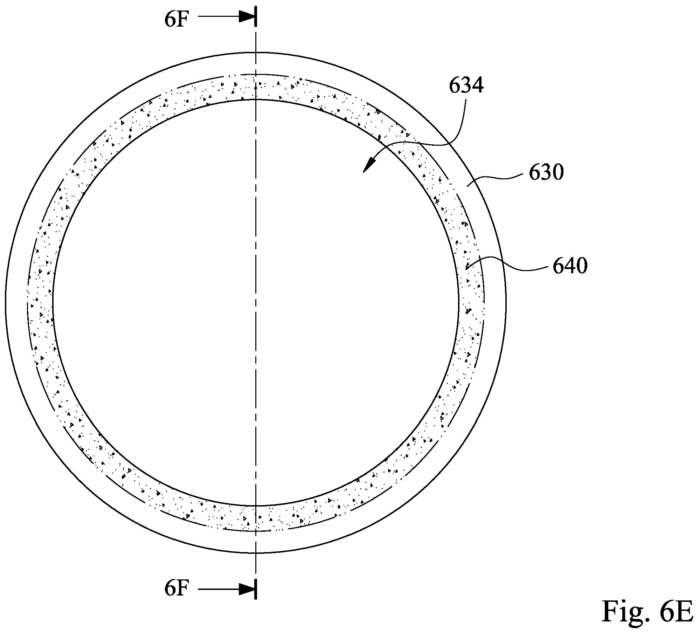

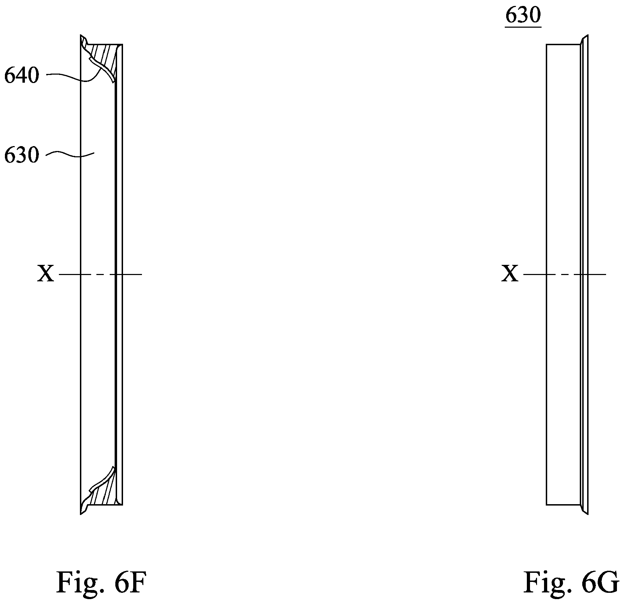

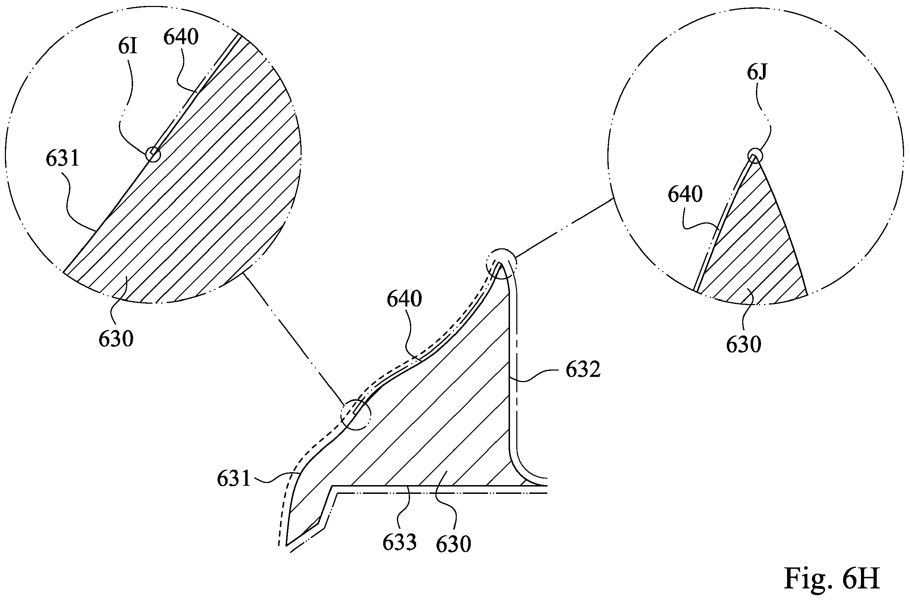

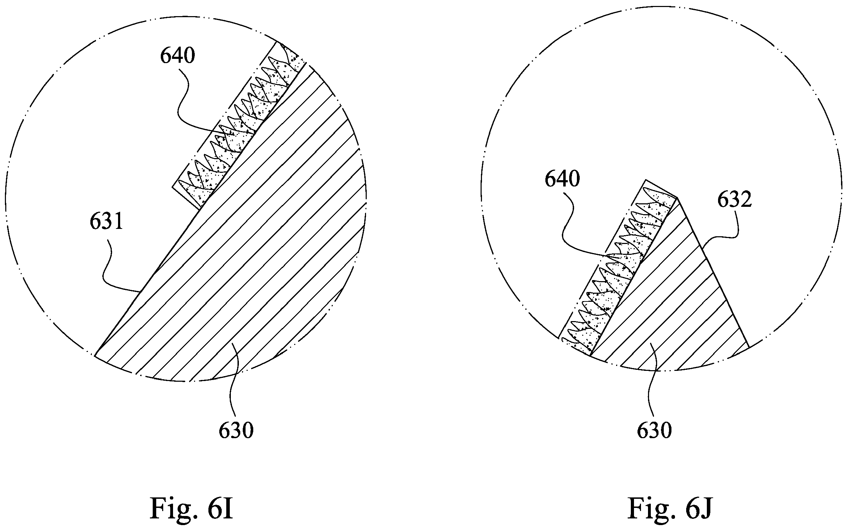

Fig. 6E is a schematic view of the annular retaining element 630 and the nano-microstructure 640 according to the 6th embodiment in Fig. 6A. Fig. 6F is a cross-sectional view of the annular retaining element 630 along a 6F-6F line in Fig. 6E. Fig. 6G is a side view of the annular retaining element 630 according to the 6th embodiment in Fig. 6E. Fig. 6H is a partial enlarged view of the annular retaining element 630 according to the 1st example of the 6th embodiment in Fig. 6F. Fig. 6I is a partial enlarged view of the annular retaining element 630 according to the 1st example of the 6th embodiment in Fig. 6H. Fig. 6J is another partial enlarged view of the annular retaining element 630 according to the 1st example of the 6th embodiment in Fig. 6H. In Figs. 6E to 6J, the annular retaining element 630 includes an object-side surface 631, an image-side surface 632, an outer diameter surface 633 and a light-through hole 634, wherein the object-side surface 631 faces an object side of the imaging lens assembly 600, the image-side surface 632 faces an image side of the imaging lens assembly 600, the image-side surface 632 is corresponding to the object-side surface 631, the outer diameter surface 633 is connected to the object-side surface 631 and the image-side surface 632, the light-through hole 634 is formed by gradually tapering from the object-side surface 631 and the image-side surface 632 towards the optical axis X, and the optical axis X passes through a center of the light-through hole 634. Further, the nano-microstructure 640 is disposed on the object-side surface 631, and the nano-microstructure 640 has a plurality of irregular ridged convexes. It should be mentioned that the dotted line, the one-dot chain line and the two-dot chain line in Fig. 6H are configured to indicate the range of the object-side surface 631, the range of the image-side surface 632 and the range of the outer diameter surface 633, respectively.

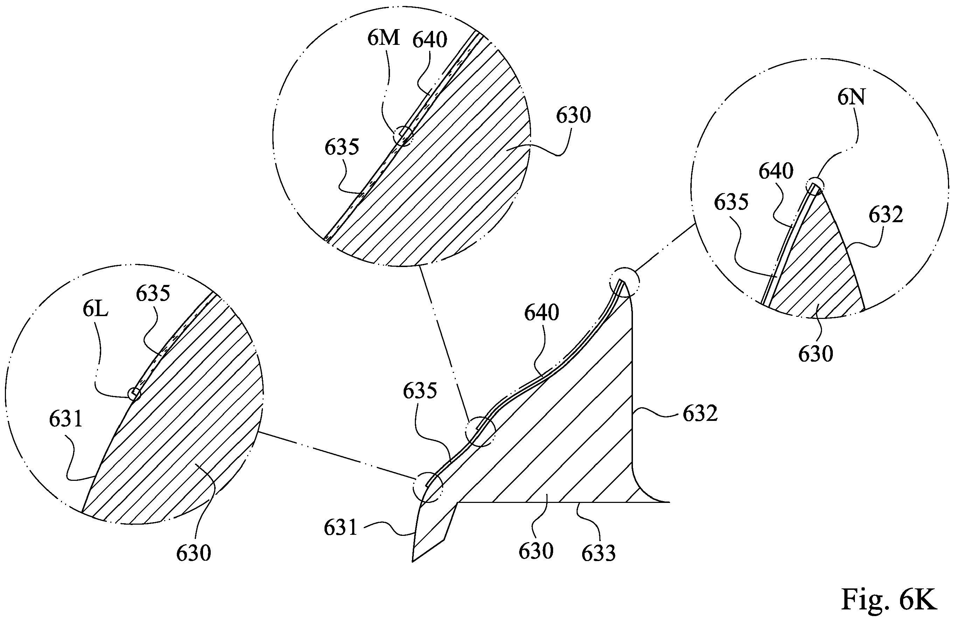

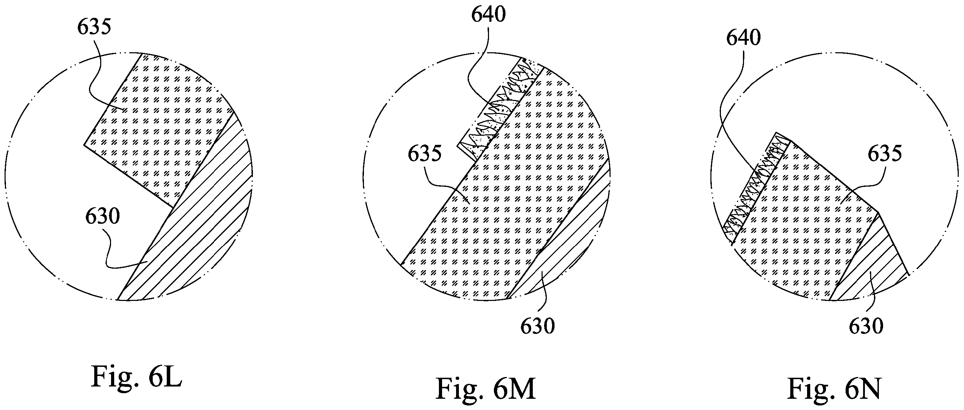

Fig. 6K is a partial enlarged view of the annular retaining element 630 according to the 2nd example of the 6th embodiment in Fig. 6F. Fig. 6L is a partial enlarged view of the annular retaining element 630 according to the 2nd example of the 6th embodiment in Fig. 6K. Fig. 6M is another partial enlarged view of the annular retaining element 630 according to the 2nd example of the 6th embodiment in Fig. 6K. Fig. 6N is another partial enlarged view of the annular retaining element 630 according to the 2nd example of the 6th embodiment in Fig. 6K. In Figs. 6K to 6N, the annular retaining element 630 can further include a connecting structure layer 635, wherein the connecting structure layer 635 is disposed between the nano-microstructure 640 and a surface of the annular retaining element 630, and the nano-microstructure 640 and the connecting structure layer 635 are disposed on the object-side surface 631 of the annular retaining element 630. Hence, the annular retaining element 630 can be tightly connected to the nano-microstructure 640 via the connecting structure layer 635 so as to obtain the higher structural stability.

According to the 6th embodiment, a relative illuminance of the imaging lens assembly 600 is RI, the following condition of Table 6 is satisfied.

| Table 6, the 6th embodiment | | | |
|---|---|---|---|
| RI (%) | 23 | | |

It should be mentioned that the thickness of the nano-microstructure 640 and the thickness of the connecting structure layer 635 in Figs. 6B, 6F, 6H and 6K are only configured to be the schematic views rather than the actual thicknesses.

<7th embodiment>

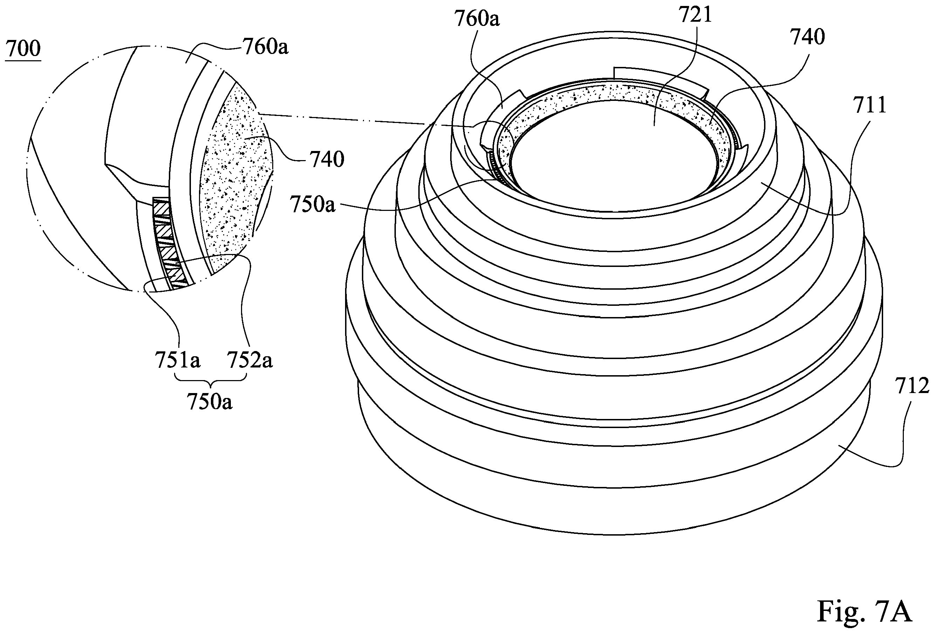

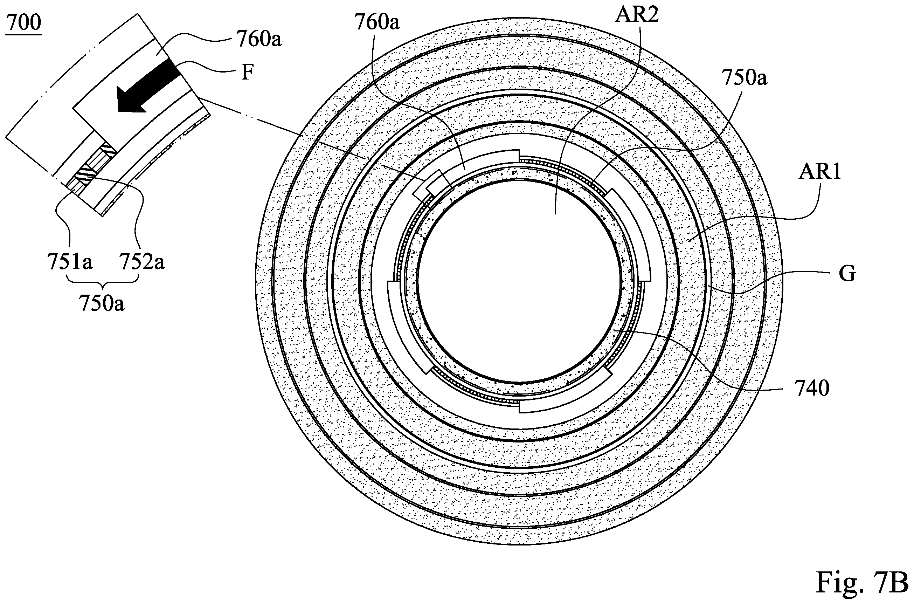

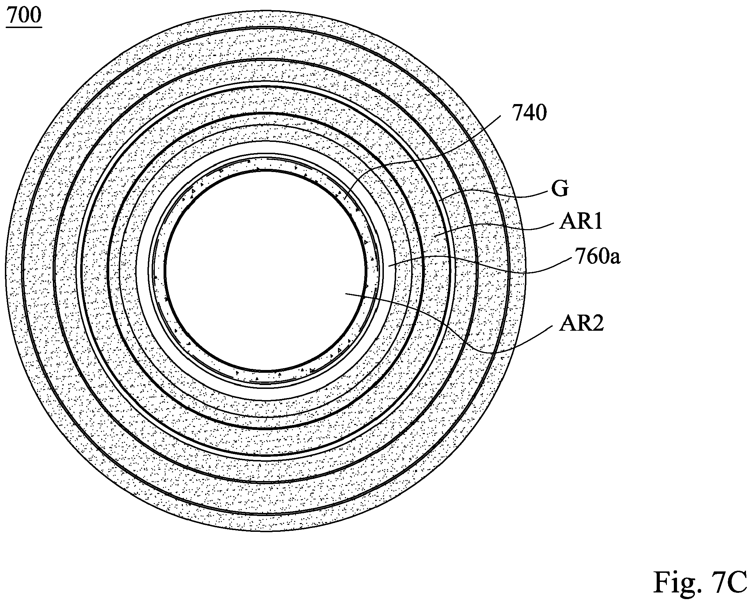

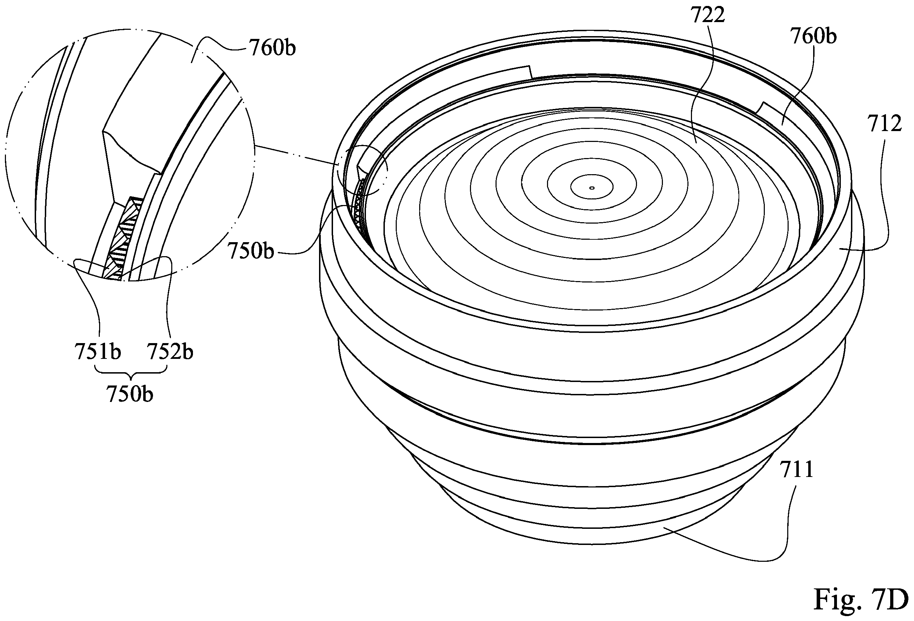

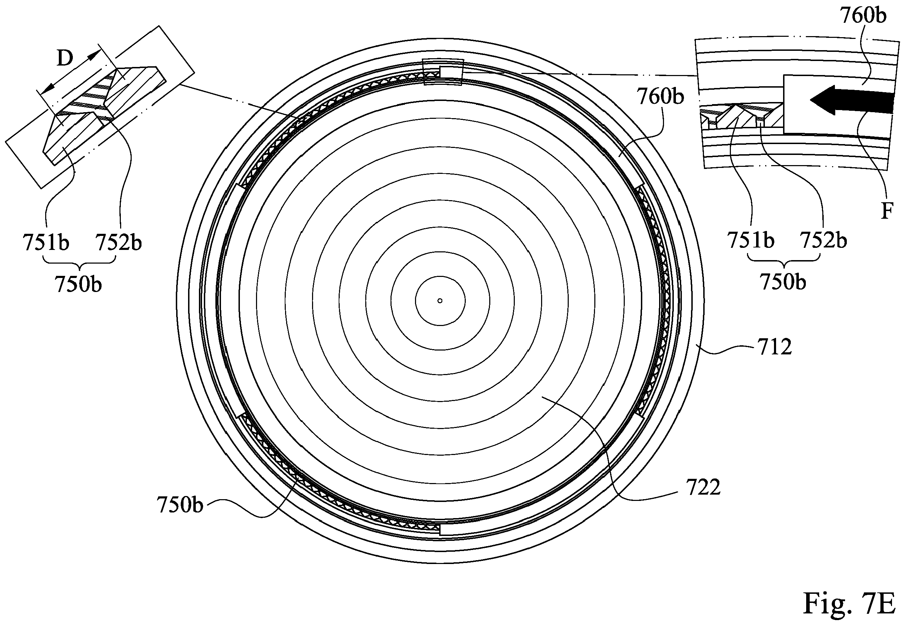

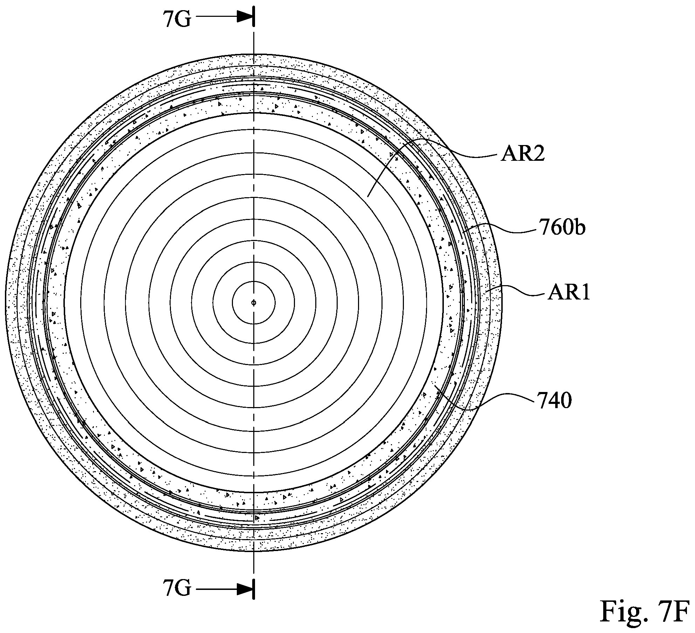

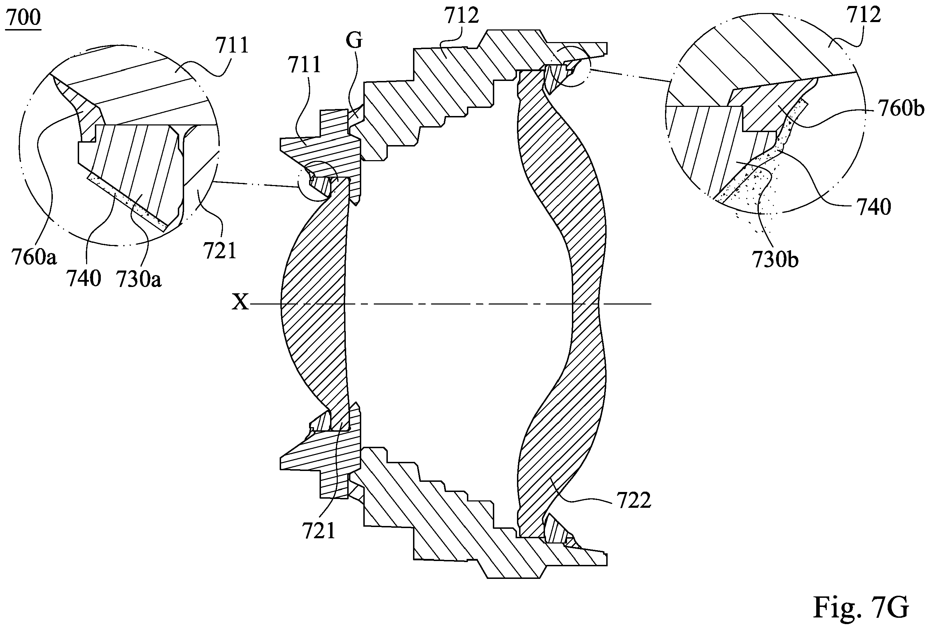

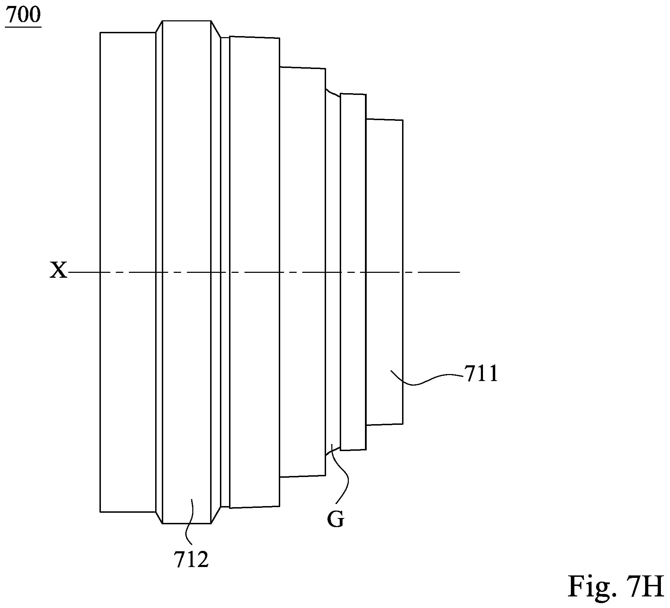

Fig. 7A is a three-dimensional view of an imaging lens assembly 700 according to the 7th embodiment of the present disclosure. Fig. 7B is a schematic view of a glue material 760a assembled on the imaging lens assembly 700 according to the 7th embodiment in Fig. 7A. Fig. 7C is an object-side schematic view of the imaging lens assembly 700 according to the 7th embodiment in Fig. 7A. Fig. 7D is another three-dimensional view of the imaging lens assembly 700 according to the 7th embodiment in Fig. 7A. Fig. 7E is a schematic view of a glue material 760b assembled on the imaging lens assembly 700 according to the 7th embodiment in Fig. 7D. Fig. 7F is a schematic view of the imaging lens assembly 700 according to the 7th embodiment in Fig. 7A. Fig. 7G is a cross-sectional view of the imaging lens assembly 700 along a 7G-7G line in Fig. 7F. Fig. 7H is a side view of the imaging lens assembly 700 according to the 7th embodiment in Fig. 7A. In Figs. 7A to 7H, the imaging lens assembly 700 has an optical axis X, and includes two lens barrels 711, 712, a plurality of optical lens elements 721, 722, annular retaining elements 730a, 730b, a nano-microstructure 740, optical identification structures 750a, 750b and the glue materials 760a, 760b, wherein the optical axis X passes through the optical lens elements 721, 722, the optical lens element 721 is disposed in the lens barrel 711, and the optical lens element 722 is disposed in the lens barrel 712. In Figs. 7A to 7C, the lens barrels 711, 712, the nano-microstructure 740 and the optical lens element 721 are simultaneously observed from the imaging lens assembly 700 along a direction parallel to the optical axis X, and the nano-microstructure 740 is located between a lens barrel area AR1 defined via the lens barrel 711 and a lens element area AR2 defined via the optical lens element 721 on a direction vertical to the optical axis X. In Figs. 7D to 7F, the lens barrel 712, the nano-microstructure 740 and the optical lens element 722 are simultaneously observed from the image side towards the object side of the imaging lens assembly 700 and along the direction parallel to the optical axis X, and the nano-microstructure 740 is located between a lens barrel area AR1 defined via the lens barrel 712 and a lens element area AR2 defined via the optical lens element 722 on the direction vertical to the optical axis X, wherein the dot pattern in Figs. 7B, 7C and 7F is configured to indicate the lens barrel area AR1. Further, each of the optical lens elements 721, 722 can be a glass lens element, so that the more stable optical property in respect of the temperature effect can be obtained, wherein the glass lens element can be made by the grinding process or the molding process, but the present disclosure is not limited thereto.

In Figs. 7A, 7B, 7C and 7G, the annular retaining element 730a is physically contacted with the optical lens element 721, so that the optical lens element 721 is fixed in the lens barrel 711. The nano-microstructure 740 is closer to the optical axis X than the optical identification structure 750a to the optical axis X. The glue material 760a is physically contacted with the annular retaining element 730a, so that the annular retaining element 730a is fixed in the lens barrel 711.

In Figs. 7D to 7G, the annular retaining element 730b is physically contacted with the optical lens element 722, so that the optical lens element 722 is fixed in the lens barrel 712. A portion of the nano-microstructure 740 is closer to the optical axis X than the optical identification structure 750b to the optical axis X. The glue material 760b is physically contacted with the annular retaining element 730b, so that the annular retaining element 730b is fixed in the lens barrel 712.

In Figs. 7G and 7H, the imaging lens assembly 700 can further include a glue G, wherein the glue G is disposed between the lens barrels 711, 712. Moreover, the lens barrels 711, 712 can be embedded and assembled to each other, so that the different assembling directions of the optical lens elements 721, 722 can be obtained by the design of the lens barrels 711, 712 embedded to each other for promoting the margin of the mechanical design, but the present disclosure is not limited thereto.

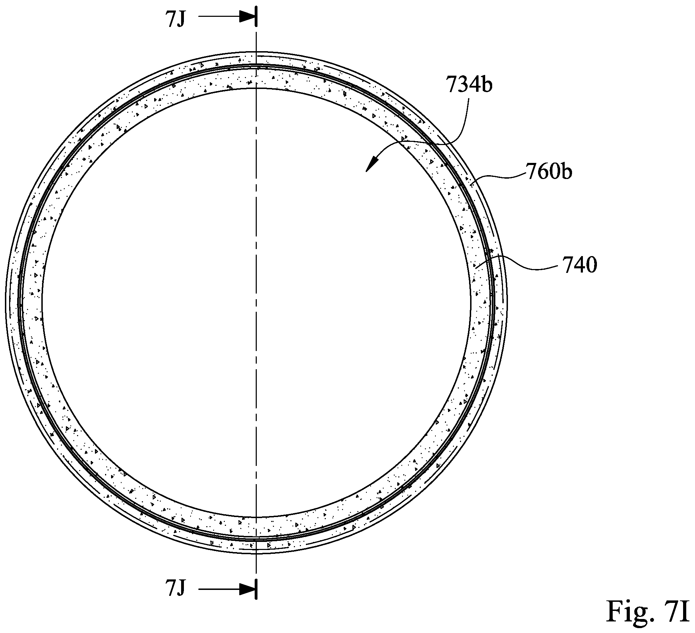

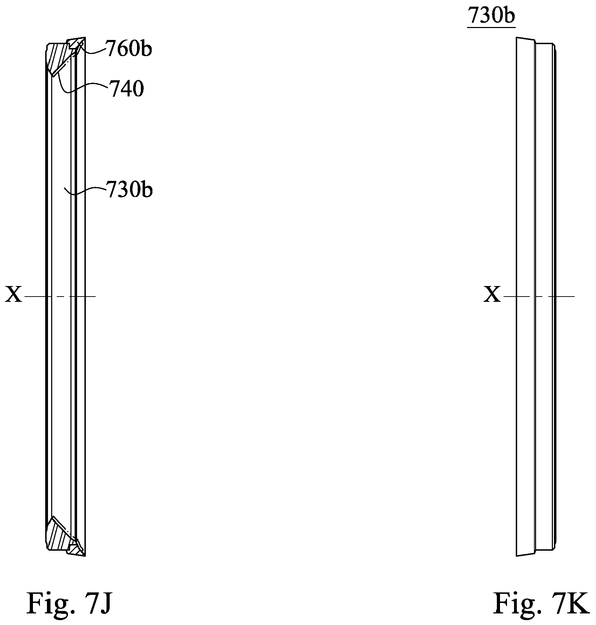

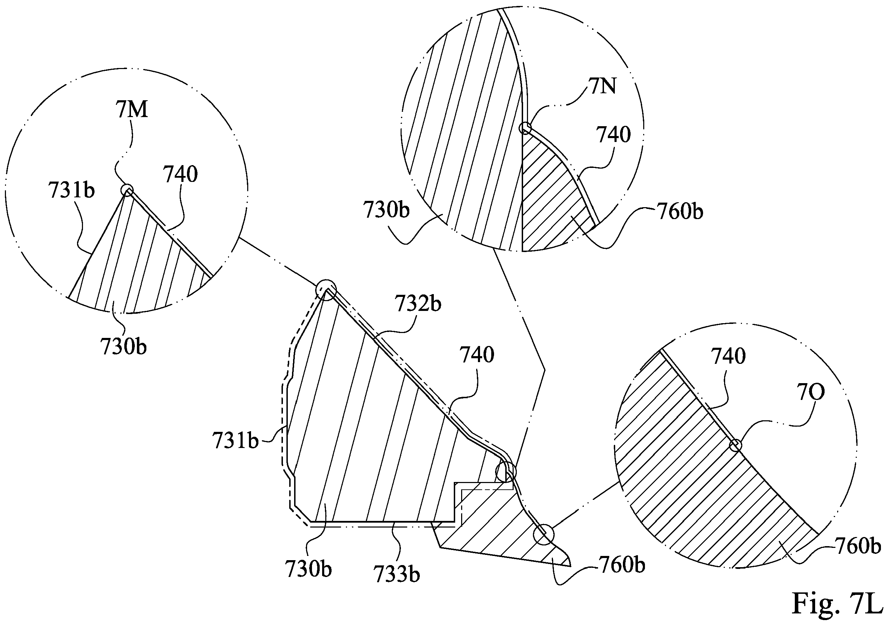

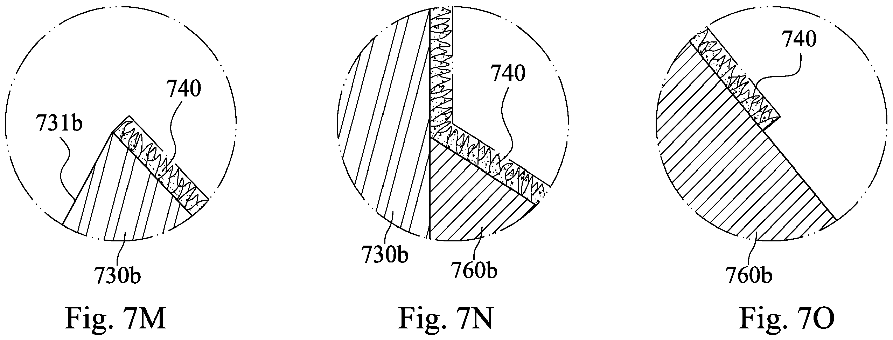

Fig. 7I is a schematic view of the annular retaining element 730b, the nano-microstructure 740 and the glue material 760b according to the 7th embodiment in Fig. 7A. Fig. 7J is a cross-sectional view of the annular retaining element 730b along a 7J-7J line in Fig. 7I. Fig. 7K is a side view of the annular retaining element 730b according to the 7th embodiment in Fig. 7I. Fig. 7L is a partial enlarged view of the annular retaining element 730b according to the 1st example of the 7th embodiment in Fig. 7J. Fig. 7M is a partial enlarged view of the annular retaining element 730b according to the 1st example of the 7th embodiment in Fig. 7L. Fig. 7N is another partial enlarged view of the annular retaining element 730b according to the 1st example of the 7th embodiment in Fig. 7L. Fig. 7O is another partial enlarged view of the annular retaining element 730b according to the 1st example of the 7th embodiment in Fig. 7L. In Figs. 7I to 7O, the annular retaining element 730b includes an object-side surface 731b, an image-side surface 732b, an outer diameter surface 733b and a light-through hole 734b, wherein the object-side surface 731b faces an object side of the imaging lens assembly 700, the image-side surface 732b faces an image side of the imaging lens assembly 700, the image-side surface 732b is corresponding to the object-side surface 731b, the outer diameter surface 733b is connected to the object-side surface 731b and the image-side surface 732b, the light-through hole 734b is formed by gradually tapering from the object-side surface 731b and the image-side surface 732b towards the optical axis X, and the optical axis X passes through a center of the light-through hole 734b. It should be mentioned that the dotted line, the one-dot chain line and the two-dot chain line in Fig. 7L are configured to indicate the range of the object-side surface 731b, the range of the image-side surface 732b and the range of the outer diameter surface 733b, respectively.

In Figs. 7D, 7E and 7I, the optical identification structure 750b is disposed on the image-side surface 732b, and includes at least two first optical identification surfaces 751b and at least one second optical identification surface 752b, wherein the second optical identification surface 752b is disposed between the first optical identification surfaces 751b, and the glue material 760b and the first optical identification surfaces 751b are simultaneously observed from the image side towards the object side of the imaging lens assembly 700 and along the direction parallel to the optical axis X. In detail, the distributing condition of the glue material 760b can be further obtained by observing the range of the first optical identification surfaces 751b covered via the glue material 760b. In Fig. 7E, the first optical identification surfaces 751b can be observed along the direction parallel to the optical axis X during the process of assembling the glue material 760b, such as a flowing direction F of the glue material 760b. Once a dispensing space is filled via the glue material 760b, and the glue material 760b entirely covers the first optical identification surfaces 751b, so that the first optical identification surfaces 751b cannot be directly observed, but the present disclosure is not limited thereto.

In Figs. 7L to 7O, the nano-microstructure 740 is disposed on the image-side surface 732b of the annular retaining element 730b and the glue material 760b, and the nano-microstructure 740 has a plurality of irregular ridged convexes. By extending the disposing range of the nano-microstructure 740, the non-imaging light reflected via the aforementioned disposing range can be weakened so as to make the image clear.

According to the 7th embodiment, a number of the first optical identification surfaces 751b is one hundred and fifty, and a number of the second optical identification surface 752b is one hundred and fifty, but the present disclosure is not limited thereto.

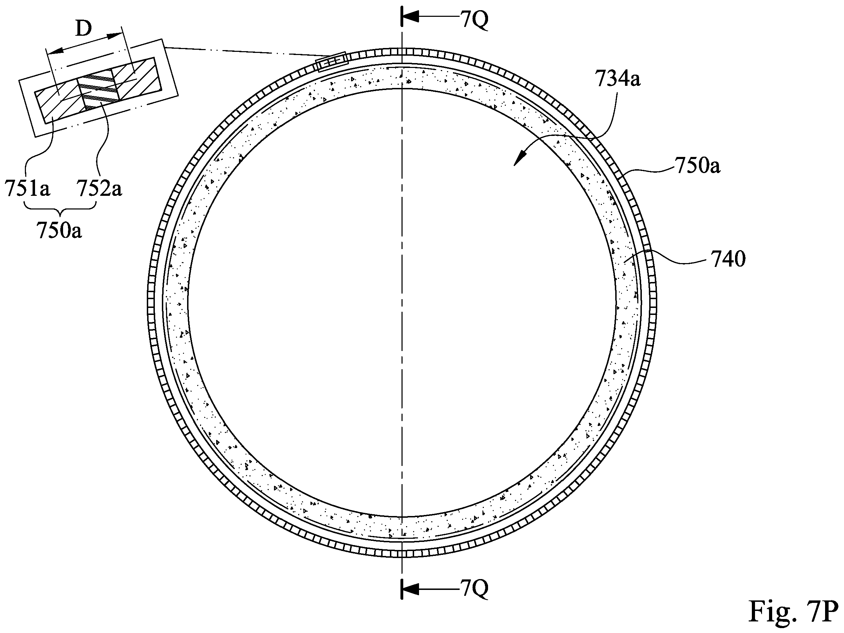

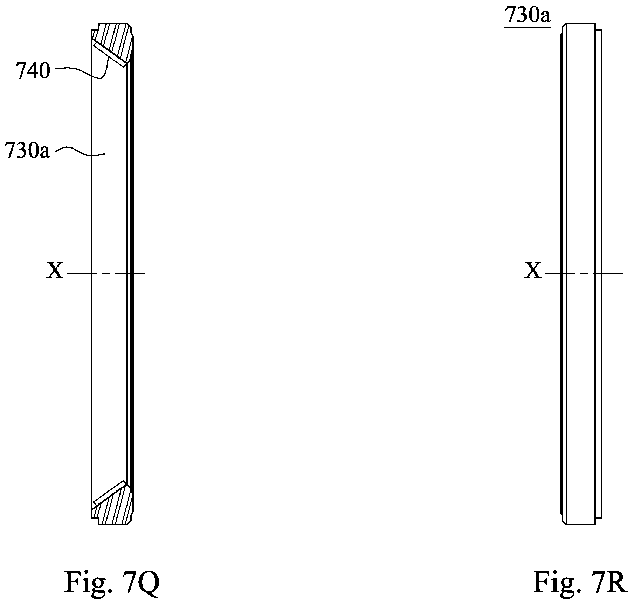

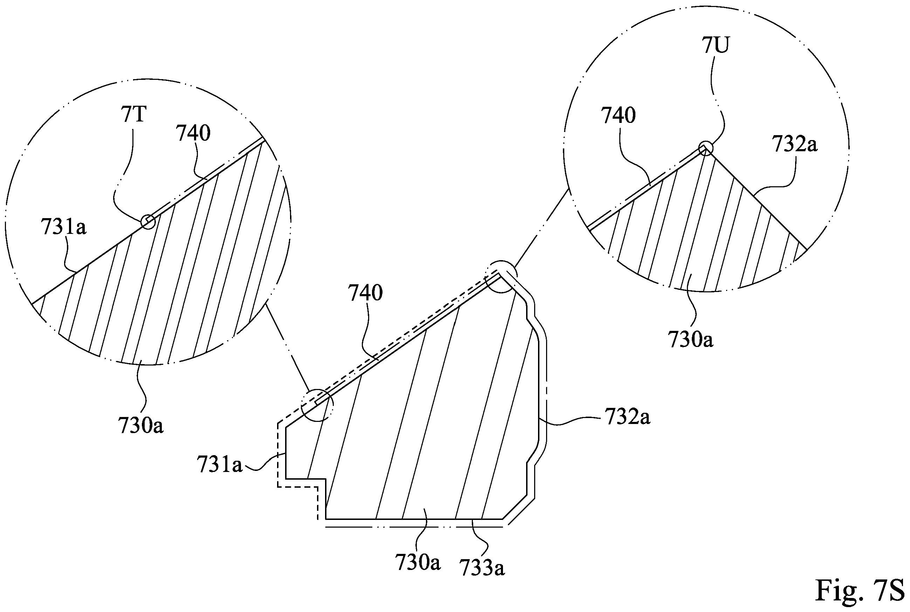

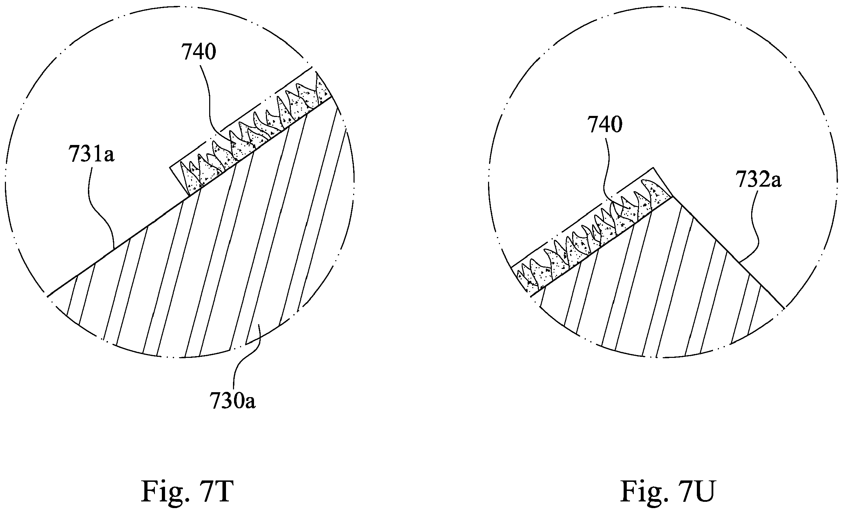

Fig. 7P is a schematic view of the annular retaining element 730a, the nano-microstructure 740 and the optical identification structure 750a according to the 7th embodiment in Fig. 7A. Fig. 7Q is a cross-sectional view of the annular retaining element 730a along a 7Q-7Q line in Fig. 7P. Fig. 7R is a side view of the annular retaining element 730a according to the 7th embodiment in Fig. 7P. Fig. 7S is a partial enlarged view of the annular retaining element 730a according to the 2nd example of the 7th embodiment in Fig. 7Q. Fig. 7T is a partial enlarged view of the annular retaining element 730a according to the 2nd example of the 7th embodiment in Fig. 7S. Fig. 7U is another partial enlarged view of the annular retaining element 730a according to the 2nd example of the 7th embodiment in Fig. 7S. In Figs. 7P to 7U, the annular retaining element 730a includes an object-side surface 731a, an image-side surface 732a, an outer diameter surface 733a and a light-through hole 734a, wherein the object-side surface 731a faces an object side of the imaging lens assembly 700, the image-side surface 732a faces an image side of the imaging lens assembly 700, the image-side surface 732a is corresponding to the object-side surface 731a, the outer diameter surface 733a is connected to the object-side surface 731a and the image-side surface 732a, the light-through hole 734a is formed by gradually tapering from the object-side surface 731a and the image-side surface 732a towards the optical axis X, and the optical axis X passes through a center of the light-through hole 734a. It should be mentioned that the dotted line, the one-dot chain line and the two-dot chain line in Fig. 7S are configured to indicate the range of the object-side surface 731a, the range of the image-side surface 732a and the range of the outer diameter surface 733a, respectively.

In Figs. 7A, 7B and 7P, the optical identification structure 750a is disposed on the object-side surface 731a, and includes at least two first optical identification surfaces 751a and at least one second optical identification surface 752a, wherein the second optical identification surface 752a is disposed between the first optical identification surfaces 751a, and the glue material 760a and the first optical identification surfaces 751a are simultaneously observed along the direction parallel to the optical axis X. In detail, the distributing condition of the glue material 760a can be further obtained by observing the range of the first optical identification surfaces 751a covered via the glue material 760a. In Fig. 7B, the first optical identification surfaces 751a can be observed along the direction parallel to the optical axis X during the process of assembling the glue material 760a, such as a flowing direction F of the glue material 760a. Once a dispensing space is filled via the glue material 760a, and the glue material 760a entirely covers the first optical identification surfaces 751a, so that the first optical identification surfaces 751a cannot be directly observed, but the present disclosure is not limited thereto.

In Figs. 7S to 7U, the nano-microstructure 740 is disposed on the object-side surface 731a.

According to the 7th embodiment, a number of the first optical identification surfaces 751a is one hundred, and a number of the second optical identification surface 752a is one hundred, but the present disclosure is not limited thereto.

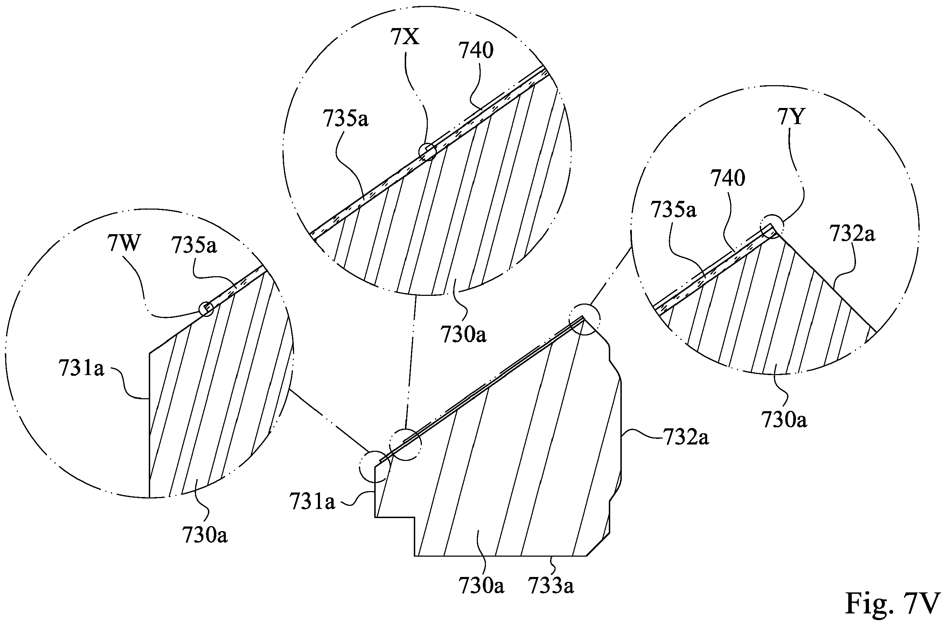

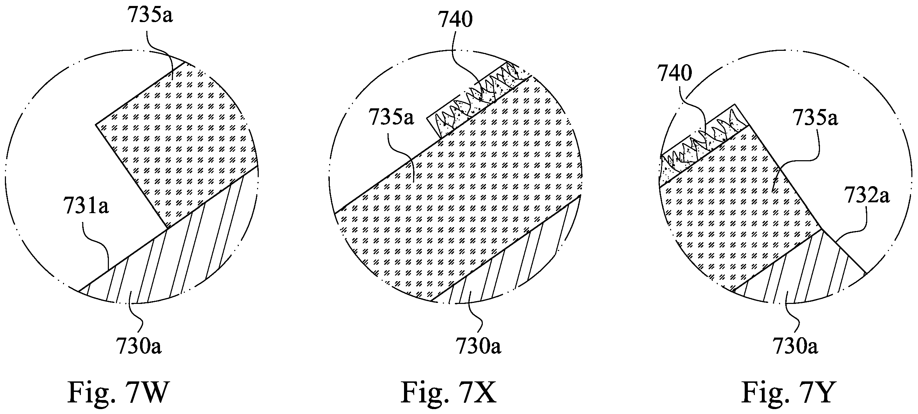

Fig. 7V is a partial enlarged view of the annular retaining element 730a according to the 3rd example of the 7th embodiment in Fig. 7Q. Fig. 7W is a partial enlarged view of the annular retaining element 730a according to the 3rd example of the 7th embodiment in Fig. 7V. Fig. 7X is another partial enlarged view of the annular retaining element 730a according to the 3rd example of the 7th embodiment in Fig. 7V. Fig. 7Y is another partial enlarged view of the annular retaining element 730a according to the 3rd example of the 7th embodiment in Fig. 7V. In Figs. 7V to 7Y, the annular retaining element 730a can further include a connecting structure layer 735a, wherein the connecting structure layer 735a is disposed between the nano-microstructure 740 and a surface of the annular retaining element 730a, and the nano-microstructure 740 and the connecting structure layer 735a are disposed on the object-side surface 731a of the annular retaining element 730a. Hence, the annular retaining element 730a can be tightly connected to the nano-microstructure 740 via the connecting structure layer 735a so as to obtain the higher structural stability.

In Figs. 7E and 7P, a relative illuminance of the imaging lens assembly 700 is RI; a projecting area of each of the first optical identification surfaces 751a vertical to the optical axis X and a projecting area of each of the first optical identification surfaces 751b vertical to the optical axis X are A, respectively; an interval arc length between the first optical identification surfaces 751a and an interval arc length between the first optical identification surfaces 751b are D, respectively, the following conditions of Table 7 are satisfied.

| Table 7, the 7th embodiment | | | | |
|---|---|---|---|---|
| RI (%) | 23 | A (mm$^2$) (corresponding to each of the first optical identification surfaces 751b) | | 0.007 |
| A (mm$^2$) (corresponding to each of the first optical identification surfaces 751a) | 0.003 | D (mm) (corresponding to each of the first optical identification surfaces 751b) | | 0.15 |
| D (mm) (corresponding to each of the first optical identification surfaces 751a) | 0.12 | $(\sqrt{A})/D$ (corresponding to each of the first optical identification surfaces 751b) | | 0.56 |
| $(\sqrt{A})/D$ (corresponding to each of the first optical identification surfaces 751a) | 0.46 | | | |

It should be mentioned that the pattern of the first optical identification surfaces 751a, the pattern of the first optical identification surfaces 751b, the pattern of the second optical identification surfaces 752a and the pattern of the second optical identification surfaces 752b are omitted in Figs. 7A, 7B, 7D, 7E and 7P, the pattern of the first optical identification surfaces 751a, the pattern of the first optical identification surfaces 751b, the pattern of the second optical identification surfaces 752a and the pattern of the second optical identification surfaces 752b are only indicated in the partial enlarged view. Because the nano-microstructure 740 is formed after the glue material 760b is assembled, the schematic view of the nano-microstructure 740 is omitted in Figs. 7D and 7E. Moreover, the thickness of the nano-microstructure 740 and the thickness of the connecting structure layer 735a in Figs. 7G, 7J, 7L, 7Q, 7S and 7V are only configured to be the schematic views rather than the actual thicknesses.

<8th embodiment>

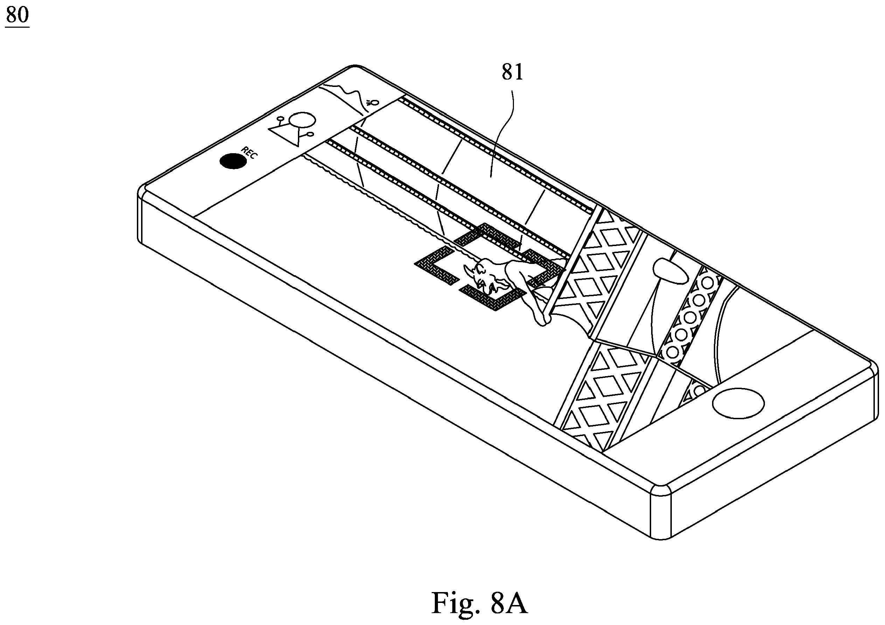

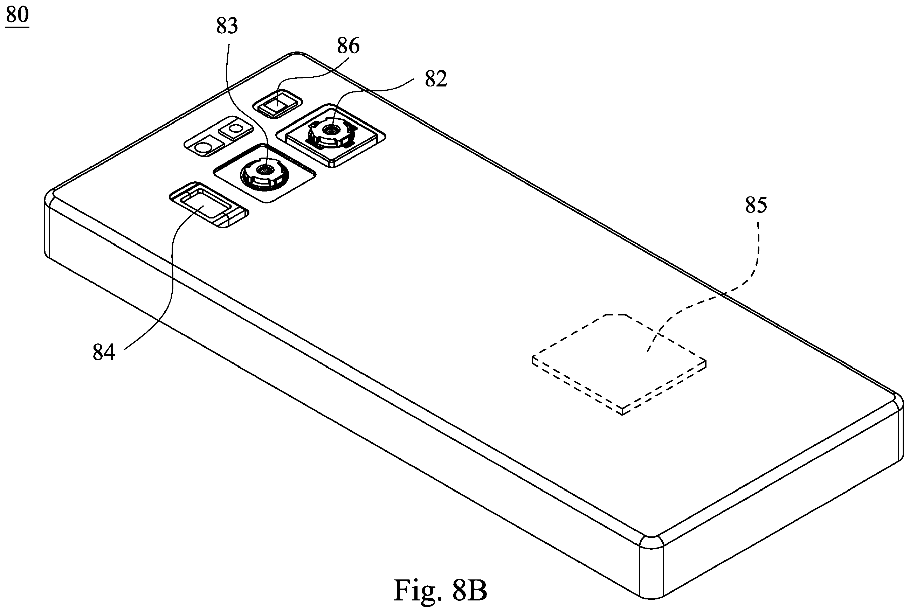

Fig. 8A is a schematic view of an electronic device 80 according to the 8th embodiment of the present disclosure. Fig. 8B is another schematic view of the electronic device 80 according to the 8th embodiment in Fig. 8A. In Figs. 8A and 8B, the electronic device 80 is a smart phone, which includes a camera module, an image sensor (not shown) and a user interface 81, wherein the camera module includes an imaging lens assembly (not shown), and the image sensor is disposed on an imaging surface (not shown) of the camera module. Moreover, the camera module can be an ultra-wide angle camera module 82, a high resolution camera module 83 and a telephoto camera module 84, and the user interface 81 is a touch screen, but the present disclosure is not limited thereto. In particular, the imaging lens assembly can be the imaging lens assembly according to the aforementioned 1st embodiment to the 7th embodiment, but the present disclosure is not limited thereto.

Users enter a shooting mode via the user interface 81, wherein the user interface 81 is configured to display the scene, and the shooting angle can be manually adjusted to switch the ultra-wide angle camera module 82, the high resolution camera module 83 and the telephoto camera module 84. At this moment, the imaging light is gathered on an image sensor (not shown) via the camera module, and an electronic signal about an image is output to an image signal processor (ISP) 85.

In Fig. 8B, to meet a specification of the electronic device 80, the electronic device 80 can further include an optical anti-shake mechanism (not shown). Furthermore, the electronic device 80 can further include at least one focusing assisting module (its reference numeral is omitted) and at least one sensing element (not shown). The focusing assisting module can be a flash module 86 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the camera module of the electronic device 80 equipped with an auto-focusing mechanism and the optical anti-shake mechanism can be enhanced to achieve the superior image quality. Furthermore, the electronic device 80 according to the present disclosure can have a capturing function with multiple modes, such as taking optimized selfies, high dynamic range (HDR) under a low light condition, 4K resolution recording and so on. Furthermore, the users can visually see a captured image of the camera through the user interface 81 and manually operate the view finding range on the user interface 81 to achieve the autofocus function of what you see is what you get.

Moreover, the camera module, the image sensor, the optical anti-shake mechanism, the sensing element and the focusing assisting module can be disposed on a flexible printed circuit board (FPC) (not shown) and electrically connected to the associated components, such as the image signal processor 85, via a connector (not shown) to perform a capturing process. Since the current electronic devices, such as smart phones, have a tendency of being compact, the way of firstly disposing the camera module and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the camera module can also be controlled more flexibly via the touch screen of the electronic device. According to the 8th embodiment, the electronic device 80 can include a plurality of sensing elements and a plurality of focusing assisting modules. The sensing elements and the focusing assisting modules are disposed on the flexible printed circuit board and at least one other flexible printed circuit board (not shown) and electrically connected to the associated components, such as the image signal processor 85, via corresponding connectors to perform the capturing process. In other embodiments (not shown herein), the sensing elements and the focusing assisting modules can also be disposed on the main board of the electronic device or carrier boards of other types according to requirements of the mechanical design and the circuit layout.

Furthermore, the electronic device 80 can further include, but not be limited to, a display, a control unit, a storage unit, a random access memory (RAM), a read-only memory (ROM), or the combination thereof.

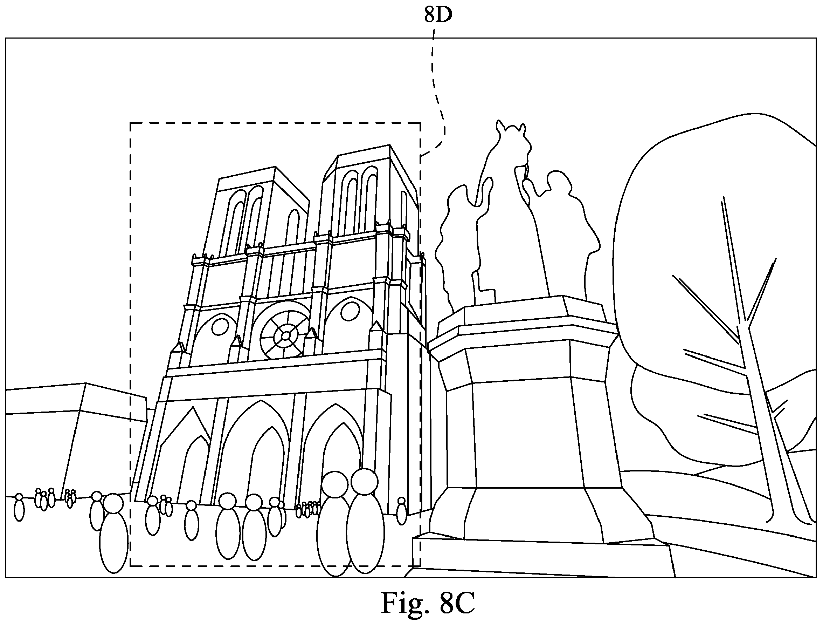

Fig. 8C is a schematic view of an image captured via the electronic device 80 according to the 8th embodiment in Fig. 8A. In Fig. 8C, the larger range of the image can be captured via the ultra-wide angle camera module 82, and the ultra-wide angle camera module 82 has the function of accommodating wider range of the scene.

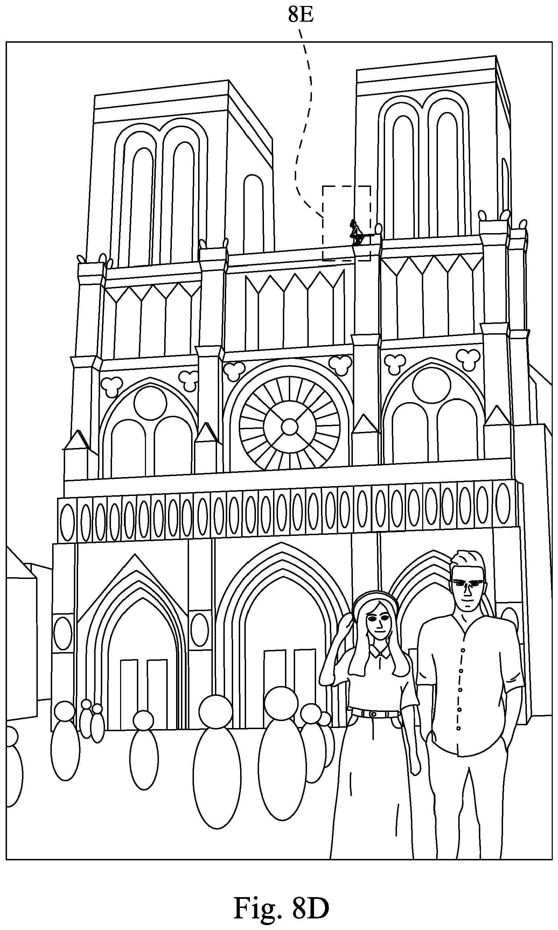

Fig. 8D is another schematic view of an image captured via the electronic device 80 according to the 8th embodiment in Fig. 8A. In Fig. 8D, the image of the certain range with the high resolution can be captured via the high resolution camera module 83, and the high resolution camera module 83 has the function of the high resolution and the low deformation.

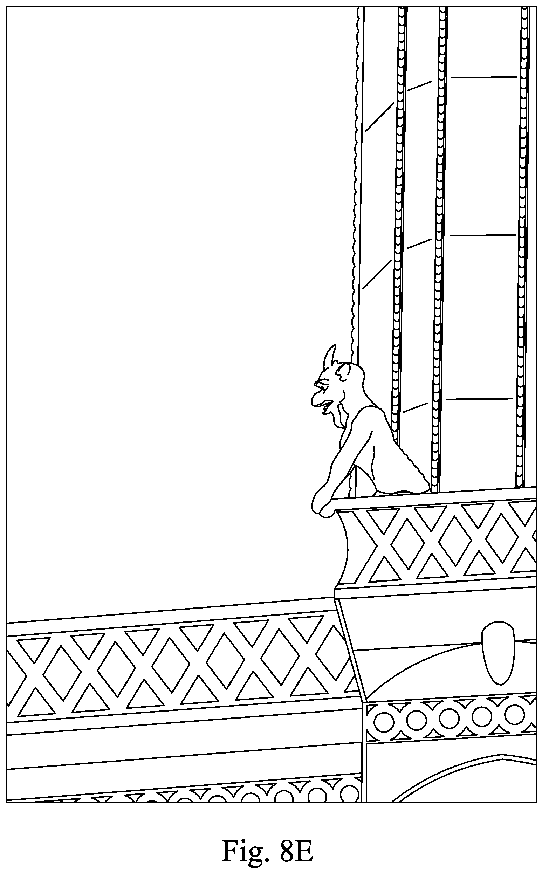

Fig. 8E is another schematic view of an image captured via the electronic device 80 according to the 8th embodiment in Fig. 8A. In Fig. 8E, the telephoto camera module 84 has the enlarging function of the high magnification, and the distant image can be captured and enlarged with high magnification via the telephoto camera module 84.

In Figs. 8C to 8E, the zooming function can be obtained via the electronic device 80, when the scene is captured via the camera module with different focal lengths cooperated with the function of image processing.

<9th embodiment>

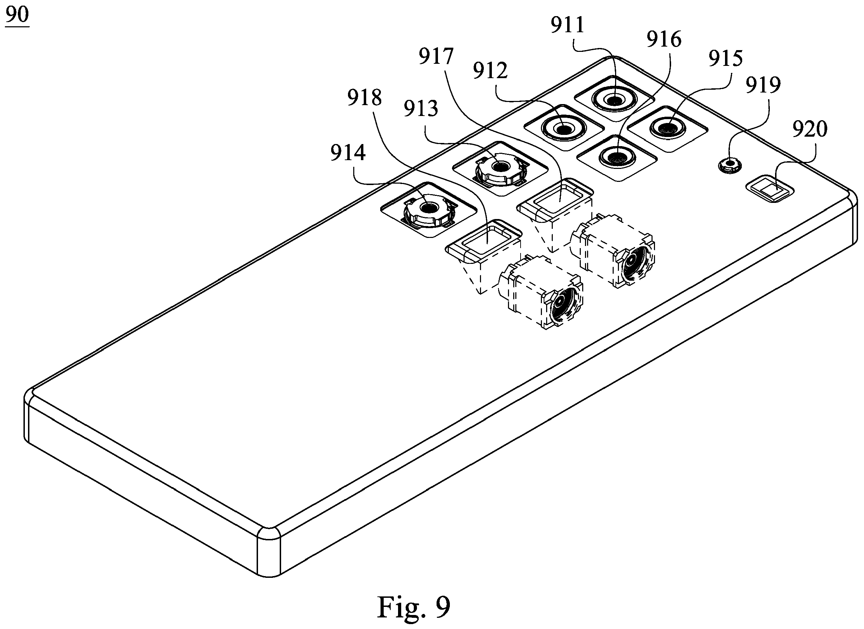

Fig. 9 is a schematic view of an electronic device 90 according to the 9th embodiment of the present disclosure. In Fig. 9, the electronic device 90 is a smart phone, which includes a camera module and an image sensor (not shown), wherein the camera module includes an imaging lens assembly (not shown), and the image sensor is disposed on an imaging surface (not shown) of the camera module. Moreover, the camera module can be ultra-wide angle camera modules 911, 912, wide angle camera modules 913, 914, telephoto camera modules 915, 916, 917, 918 and a Time-Of-Flight (TOF) module 919. The TOF module 919 can be another type of the camera module, and the disposition is not limited thereto. In particular, the imaging lens assembly can be the imaging lens assembly according to the aforementioned 1st embodiment to the 7th embodiment, but the present disclosure is not limited thereto.

Further, the telephoto camera modules 917, 918 are configured to fold the light, but the present disclosure is not limited thereto.

To meet a specification of the camera module of the electronic device 90, the electronic device 90 can further include an optical anti-shake mechanism (not shown). Furthermore, the electronic device 90 can further include at least one focusing assisting module (not shown) and at least one sensing element (not shown). The focusing assisting module can be a flash module 920 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the camera module of the electronic device 90 equipped with an auto-focusing mechanism and the optical anti-shake mechanism can be enhanced to achieve the superior image quality. Furthermore, the electronic device 90 according to the present disclosure can have a capturing function with multiple modes, such as taking optimized selfies, High Dynamic Range (HDR) under a low light condition, 4K Resolution recording and so on.

Further, all of other structures and dispositions according to the 9th embodiment are the same as the structures and the dispositions according to the 8th embodiment, and will not be described again herein.

**Claims**

1.  An imaging lens assembly (100), having an optical axis (X), and **characterized in** comprising:

    a lens barrel (110);
    a plurality of optical lens elements (121, 122), the optical axis (X) passing through the optical lens elements (121, 122), and the optical lens elements (121, 122) comprising:
    at least one optical lens element (122) disposed in the lens barrel (110);
    an annular retaining element (130) physically contacted with the at least one optical lens element (122), so that the at least one optical lens element (122) fixed in the lens barrel (110), and the annular retaining element (130) comprising:

    an object-side surface (131) facing an object side of the imaging lens assembly (100);
    an image-side surface (132) facing an image side of the imaging lens assembly (100), and the image-side surface (132) corresponding to the object-side surface (131);
    an outer diameter surface (133) connected to the object-side surface (131) and the image-side surface (132); and
    a light-through hole (134) formed by gradually tapering from the object-side surface (131) and the image-side surface (132) towards the optical axis (X), and the optical axis (X) passing through a center of the light-through hole (134);

    a nano-microstructure (140) disposed on at least one of the object-side surface (131) and the image-side surface (132), and the nano-microstructure (140) having a plurality of irregular ridged convexes; and
    an optical identification structure (150) disposed on at least one of the image-side surface (132) and the outer diameter surface (133), the nano-microstructure (140) closer to the optical axis (X) than the optical identification structure (150) to the optical axis (X), and the optical identification structure (150) comprising at least one first optical identification surface (151);
    wherein the lens barrel (110), the nano-microstructure (140), the at least one first optical identification surface (151) and the at least one optical lens element (122) are simultaneously observed from the image side towards the object side of the imaging lens assembly (100) and along a direction parallel to the optical axis (X);
    wherein the nano-microstructure (140) is located between a lens barrel area (AR1) defined via the lens barrel (110) and a lens element area (AR2) defined via the at least one optical lens element (122) on a direction vertical to the optical axis (X);

wherein a relative illuminance of the imaging lens assembly (100) is RI, and the following condition is satisfied:

$$2\% < RI < 35\%.$$

2. The imaging lens assembly (100) of claim 1, wherein an average height of the nano-microstructure (140) is between 90 nm and 350 nm.

3. The imaging lens assembly (100) of any of claims 1-2, wherein the average height of the nano-microstructure (140) is between 125 nm and 300 nm.

4. The imaging lens assembly (100) of any of claims 1-3, wherein the average height of the nano-microstructure (140) is between 195 nm and 255 nm.

5. The imaging lens assembly (100) of any of claims 1-4, wherein a projecting area of the at least one first optical identification surface (151) vertical to the optical axis (X) is A, and the following condition is satisfied:

$$0.001 \ mm^2 \le A \le 0.024 \ mm^2.$$

6. The imaging lens assembly (100) of any of claims 1-5, wherein a number of the at least one first optical identification surface (151) is at least two, an interval arc length between the at least two first optical identification surfaces (151) is D, and the following condition is satisfied:

$$0.05 \ mm \le D \le 0.8 \ mm.$$

7. The imaging lens assembly (100) of any of claims 1-6, wherein the projecting area of each of the first optical identification surfaces (151) vertical to the optical axis (X) is A, the interval arc length between the at least two first optical identification surfaces (151) is D, and the following condition is satisfied:

$$0.1 \le (\sqrt{A})/D \le 0.9.$$

8. The imaging lens assembly (100) of any of claims 1-7, further comprising:

a glue material (160) physically contacted with the annular retaining element (130), so that the annular retaining element (130) fixed in the lens barrel (110);
wherein the glue material (160) and the at least one first optical identification surface (151) are simultaneously observed from the image side towards the object side of the imaging lens assembly (100) and along the direction parallel to the optical axis (X).

9. The imaging lens assembly (100) of any of claims 1-8, wherein the annular retaining element (130) further comprises: a connecting structure layer (135) disposed between the nano-microstructure (140) and a surface of the annular retaining element (130).

10. The imaging lens assembly (100) of any of claims 1-9, wherein the optical identification structure (150) further comprises at least one second optical identification surface (152), a number of the at least one first optical identification surface (151) is at least two, the at least one second optical identification surface (152) is disposed between the at least two first optical identification surfaces (151), a difference in gloss between each of the first optical identification surfaces (151) and the at least one second optical identification surface (152) on a measuring direction (MD) is ΔG, an angle between the measuring direction (MD) and the optical identification structure (150) is θ, and the following conditions are satisfied:

$$50 \ degrees \le \theta \le 90 \ degrees;$$

and

$$15\ GU \le \Delta G \le 50\ GU.$$

11. The imaging lens assembly (100) of any of claims 1-10, wherein a difference in roughness (Ra) between each of the first optical identification surfaces (151) and the at least one second optical identification surface (152) is ΔR, and the following condition is satisfied:

$$0.01\ \mu m \le \Delta R \le 3.5\ \mu m.$$

12. The imaging lens assembly (100) of any of claims 1-11, wherein the nano-microstructure (140) is further simultaneously disposed on the object-side surface (131) and the image-side surface (132).

13. The imaging lens assembly (100) of any of claims 1-12, wherein the at least one optical lens element (122) has an optical effective portion (122a), a maximum diameter of the optical effective portion (122a) is Do, and the following condition is satisfied:

$$7\ mm < Do < 15\ mm.$$

14. A camera module, **characterized in** comprising:
    the imaging lens assembly (100) of any of claims 1-13.

15. An electronic device (80), **characterized in** comprising:

    the camera module of claim 14; and
    an image sensor disposed on an imaging surface of the camera module.

16. An imaging lens assembly (100), having an optical axis (X), and **characterized in** comprising:

    a lens barrel (110);
    a plurality of optical lens elements (121, 122), the optical axis (X) passing through the optical lens elements (121, 122), and the optical lens elements (121, 122) comprising:
    at least one optical lens element (122) disposed in the lens barrel (110);
    an annular retaining element (130) physically contacted with the at least one optical lens element (122), so that the at least one optical lens element (122) fixed in the lens barrel (110), and the annular retaining element (130) comprising:

    an object-side surface (131) facing an object side of the imaging lens assembly (100);
    an image-side surface (132) facing an image side of the imaging lens assembly (100), and the image-side surface (132) corresponding to the object-side surface (131);
    an outer diameter surface (133) connected to the object-side surface (131) and the image-side surface (132); and
    a light-through hole (134) formed by gradually tapering from the object-side surface (131) and the image-side surface (132) towards the optical axis (X), and the optical axis (X) passing through a center of the light-through hole (134); and

    a nano-microstructure (140) disposed on one of the object-side surface (131) and the image-side surface (132), and the nano-microstructure (140) having a plurality of irregular ridged convexes;
    wherein the lens barrel (110), the nano-microstructure (140) and the at least one optical lens element (122) are simultaneously observed from the imaging lens assembly (100) along a direction parallel to the optical axis (X);
    wherein the nano-microstructure (140) is located between a lens barrel area (AR1) defined via the lens barrel (110) and a lens element area (AR2) defined via the at least one optical lens element (122) on a direction vertical to the optical axis (X).

17. The imaging lens assembly (100) of claim 16, wherein an average height of the nano-microstructure (140) is between 90 nm and 350 nm.

18. The imaging lens assembly (100) of any of claims 16-17, wherein the average height of the nano-microstructure (140) is between 125 nm and 300 nm.

19. The imaging lens assembly (100) of any of claims 16-18, wherein the average height of the nano-microstructure (140) is between 195 nm and 255 nm.

20. The imaging lens assembly (100) of any of claims 16-19, wherein a relative illuminance of the imaging lens assembly (100) is RI, and the following condition is satisfied:

$$2\% < RI < 35\%.$$

21. The imaging lens assembly (100) of any of claims 16-20, wherein the annular retaining element (130) further comprising:
a connecting structure layer (135) disposed between the nano-microstructure (140) and a surface of the annular retaining element (130).

22. An imaging lens assembly (100), having an optical axis (X), and **characterized in** comprising:

at least one lens barrel (110);
a plurality of optical lens elements (121, 122), the optical axis (X) passing through the optical lens elements (121, 122), and the optical lens elements (121, 122) comprising:
at least one optical lens element (122) disposed in the at least one lens barrel (110); and
a nano-microstructure (140) having a plurality of irregular ridged convexes;
wherein the at least one lens barrel (110), the nano-microstructure (140) and the at least one optical lens element (122) are simultaneously observed from the imaging lens assembly (100) along a direction parallel to the optical axis (X);
wherein the nano-microstructure (140) is located between a lens barrel area (AR1) defined via the at least one lens barrel (110) and a lens element area (AR2) defined via the at least one optical lens element (122) on a direction vertical to the optical axis (X).

23. The imaging lens assembly (100) of claim 22, further comprising:

at least one annular retaining element (130) physically contacted with the at least one optical lens element (122), so that the at least one optical lens element (122) fixed in the at least one lens barrel (110), and comprising:

an object-side surface (131) facing an object side of the imaging lens assembly (100);
an image-side surface (132) facing an image side of the imaging lens assembly (100), and the image-side surface (132) corresponding to the object-side surface (131);
an outer diameter surface (133) connected to the object-side surface (131) and the image-side surface (132); and
a light-through hole (134) formed by gradually tapering from the object-side surface (131) and the image-side surface (132) towards the optical axis (X), and the optical axis (X) passing through a center of the light-through hole (134);

an optical identification structure (150) disposed on at least one of the image-side surface (132) and the outer diameter surface (133), the nano-microstructure (140) closer to the optical axis (X) than the optical identification structure (150) to the optical axis (X); and
a glue material (160) physically contacted with the at least one annular retaining element (130), so that the at least one annular retaining element (130) fixed in the at least one lens barrel (110).

24. The imaging lens assembly (100) of any of claims 22-23, wherein the nano-microstructure (140) is disposed on at least one of the object-side surface (131) and the image-side surface (132) of the at least one annular retaining element (130).

25. The imaging lens assembly (100) of any of claims 22-24, wherein the nano-microstructure (140) is further simultaneously disposed on the image-side surface (132) of the at least one annular retaining element (130) and the glue material (160).

26. The imaging lens assembly (100) of any of claims 22-25, wherein an average height of the nano-microstructure (140) is between 90 nm and 350 nm.

27. The imaging lens assembly (100) of any of claims 22-26, wherein the average height of the nano-microstructure (140) is between 125 nm and 300 nm.

28. The imaging lens assembly (100) of any of claims 22-27, wherein the average height of the nano-microstructure (140) is between 195 nm and 255 nm.

29. The imaging lens assembly (100) of any of claims 22-28, wherein the optical identification structure (150) comprises at least one first optical identification surface (151).

30. The imaging lens assembly (100) of any of claims 22-29, wherein a projecting area of the at least one first optical identification surface (151) vertical to the optical axis (X) is A, and the following condition is satisfied:

$$0.001 \text{ mm}^2 \leq A \leq 0.024 \text{ mm}^2.$$

31. The imaging lens assembly (100) of any of claims 22-30, wherein a number of the at least one first optical identification surface (151) is at least two, an interval arc length between the at least two first optical identification surfaces (151) is D, and the following condition is satisfied:

$$0.05 \text{ mm} \leq D \leq 0.8 \text{ mm}.$$

32. The imaging lens assembly (100) of any of claims 22-31, wherein the projecting area of each of the first optical identification surfaces (151) vertical to the optical axis (X) is A, the interval arc length between the at least two first optical identification surfaces (151) is D, and the following condition is satisfied:

$$0.1 \leq (\sqrt{A})/D \leq 0.9.$$

33. The imaging lens assembly (100) of any of claims 22-32, wherein the optical identification structure (150) further comprises at least one second optical identification surface (152), a number of the at least one first optical identification surface (151) is at least two, the at least one second optical identification surface (152) is disposed between the at least two first optical identification surfaces (151), a difference in gloss between each of the first optical identification surfaces (151) and the at least one second optical identification surface (152) on a measuring direction (MD) is ΔG, an angle between the measuring direction (MD) and the optical identification structure (150) is θ, and the following conditions are satisfied:

$$50 \text{ degrees} \leq \theta \leq 90 \text{ degrees};$$

and

$$15 \text{ GU} \leq \Delta G \leq 50 \text{ GU}.$$

34. The imaging lens assembly (100) of any of claims 22-33, wherein a difference in roughness (Ra) between each of the first optical identification surfaces (151) and the at least one second optical identification surface (152) is ΔR, and the following condition is satisfied:

$$0.01 \text{ μm} \leq \Delta R \leq 3.5 \text{ μm}.$$

35. The imaging lens assembly (100) of any of claims 22-34, wherein a number of the at least one lens barrel (110) is two.

36. The imaging lens assembly (700) of any of claims 22-35, wherein the at least one optical lens element (721, 722) is a glass lens element.

37. The imaging lens assembly (100) of any of claims 22-36, wherein a relative illuminance of the imaging lens assembly (100) is RI, and the following condition is satisfied:

$$2\% < RI < 35\%.$$

38. The imaging lens assembly (100) of any of claims 22-37, wherein the at least one annular retaining element (130) further comprises:
a connecting structure layer (135) disposed between the nano-microstructure (140) and a surface of the at least one annular retaining element (130).

EP 4 372 427 A1

100

151  152
150

Fig. 1A

Fig. 1B

EP 4 372 427 A1

Fig. 1C

Fig. 1D

EP 4 372 427 A1

Fig. 1E

140

130

X

Fig. 1F

130

X

Fig. 1G

EP 4 372 427 A1

Fig. 1H

EP 4 372 427 A1

130

140

**Fig. 1I**

140

132

130

**Fig. 1J**

Fig. 1K

140

Fig. 1M

140

Fig. 1L

Fig. 1N

Fig. 1O          Fig. 1P          Fig. 1Q

EP 4 372 427 A1

Fig. 1R

Fig. 1S

EP 4 372 427 A1

Fig. 1T

Fig. 2A

EP 4 372 427 A1

200

F

260

260

251  252

250

260

AR2

250

240

AR1

Fig. 2B

EP 4 372 427 A1

Fig. 2C

EP 4 372 427 A1

Fig. 2D

EP 4 372 427 A1

Fig. 2E

EP 4 372 427 A1

240

230

X

Fig. 2F

230

X

Fig. 2G

EP 4 372 427 A1

Fig. 2H

Fig. 2I

Fig. 2J

Fig. 2K

EP 4 372 427 A1

Fig. 2L

Fig. 2M

Fig. 2N

EP 4 372 427 A1

Fig. 2O

Fig. 2R

Fig. 2Q

Fig. 2P

Fig. 3A

EP 4 372 427 A1

Fig. 3B

Fig. 3C

EP 4 372 427 A1

Fig. 3D

EP 4 372 427 A1

Fig. 3E

EP 4 372 427 A1

340

330

X

Fig. 3F

330

X

Fig. 3G

EP 4 372 427 A1

Fig. 3H

EP 4 372 427 A1

340
330

Fig. 3J

340
330

Fig. 3I

EP 4 372 427 A1

400

450

422

440

460

460

451

410

Fig. 4A

Fig. 4B

EP 4 372 427 A1

400

4D →

440

460

AR1

AR2

4D →

Fig. 4C

EP 4 372 427 A1

Fig. 4D

400

410

422a

X — Do

421

422

430

460

430

410

460

EP 4 372 427 A1

Fig. 4E

Fig. 4G

Fig. 4F

Fig. 4H

Fig. 4I

Fig. 4J

EP 4 372 427 A1

Fig. 5A

Fig. 5B

EP 4 372 427 A1

Fig. 5C

EP 4 372 427 A1

540

530

X ----

Fig. 5D

530

X ----

Fig. 5E

Fig. 5F

Fig. 5G

Fig. 5H

EP 4 372 427 A1

Fig. 5I

Fig. 5J

Fig. 5K

Fig. 5L

Fig. 6A

600

610

622

6B

6B

600

Fig. 6B

EP 4 372 427 A1

Fig. 6C

EP 4 372 427 A1

Fig. 6D

600

X

610

Fig. 6E

EP 4 372 427 A1

Fig. 6G

630

X

Fig. 6F

640

630

X

Fig. 6H

EP 4 372 427 A1

Fig. 6J

Fig. 6I

87

Fig. 6K

Fig. 6N

Fig. 6M

Fig. 6L

EP 4 372 427 A1

Fig. 7A

Fig. 7B

EP 4 372 427 A1

700

740

G

AR1

760a

AR2

Fig. 7C

EP 4 372 427 A1

Fig. 7D

Fig. 7E

EP 4 372 427 A1

Fig. 7F

Fig. 7G

EP 4 372 427 A1

700

X

711

G

712

Fig. 7H

Fig. 7I

730b

X

Fig. 7K

760b
740
730b

X

Fig. 7J

Fig. 7L

Fig. 7M

Fig. 7N

Fig. 7O

Fig. 7P

EP 4 372 427 A1

740

730a

X

Fig. 7Q

730a

X

Fig. 7R

EP 4 372 427 A1

Fig. 7S

740

731a

730a

Fig. 7T

740

732a

Fig. 7U

EP 4 372 427 A1

Fig. 7V

Fig. 7W

Fig. 7X

Fig. 7Y

Fig. 8A

Fig. 8B

EP 4 372 427 A1

Fig. 8C

8E

Fig. 8D

Fig. 8E

90

Fig. 9

Europäisches Patentamt
European Patent Office
Office européen des brevets

**EUROPEAN SEARCH REPORT**

Application Number

**EP 23 21 0152**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/155549 A1 (LAI YU CHEN [TW] ET AL) 19 May 2022 (2022-05-19) | 1,5-16, 20-38 | INV. G02B1/113 G02B7/02 |
| Y | * paragraph [0054] - paragraph [0224]; figures 1-40 * | 2-4, 17-19 | |
| X | CN 217 085 377 U (LARGAN PRECISION CO LTD) 29 July 2022 (2022-07-29) | 22, 26-28, 35-38 | |
| Y | * the whole document * | 2-4, 17-19 | |
| | & US 2023/204828 A1 (CHANG CHIEN-PANG [TW] ET AL) 29 June 2023 (2023-06-29) | | |
| X | CN 217 484 665 U (LARGAN PRECISION CO LTD) 23 September 2022 (2022-09-23) | 22, 26-28, 35-38 | |
| | * the whole document * | | |

TECHNICAL FIELDS SEARCHED (IPC)

G02B

The present search report has been drawn up for all claims

| Place of search | Date of completion of the search | Examiner |
|---|---|---|
| Munich | 5 March 2024 | Rubio Sierra, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0152

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2024

| Patent document cited in search report | | Publication date | Patent family member(s) | | Publication date |
|---|---|---|---|---|---|
| US 2022155549 | A1 | 19-05-2022 | CN | 114563851 A | 31-05-2022 |
| | | | CN | 116931215 A | 24-10-2023 |
| | | | CN | 117031678 A | 10-11-2023 |
| | | | CN | 214174717 U | 10-09-2021 |
| | | | TW | 202219579 A | 16-05-2022 |
| | | | US | 2022155549 A1 | 19-05-2022 |
| CN 217085377 | U | 29-07-2022 | BR | 102022025222 A2 | 31-10-2023 |
| | | | CN | 116413880 A | 11-07-2023 |
| | | | CN | 217085377 U | 29-07-2022 |
| | | | EP | 4266090 A1 | 25-10-2023 |
| | | | TW | 202328749 A | 16-07-2023 |
| | | | US | 2023204828 A1 | 29-06-2023 |
| CN 217484665 | U | 23-09-2022 | BR | 102023000440 A2 | 26-09-2023 |
| | | | CN | 116560162 A | 08-08-2023 |
| | | | CN | 217484665 U | 23-09-2022 |
| | | | DE | 202023100023 U1 | 02-02-2023 |
| | | | EP | 4220247 A1 | 02-08-2023 |
| | | | TW | 202331393 A | 01-08-2023 |
| | | | US | 2023247273 A1 | 03-08-2023 |

EPO FORM P0459

For more details about this annex : see Official Journal of the European Patent Office, No. 12/82